(19) Europäisches Patentamt / European Patent Office / Office européen des brevets

(11) **EP 2 924 771 B1**

(12) # EUROPEAN PATENT SPECIFICATION

(45) Date of publication and mention
of the grant of the patent:
**29.08.2018 Bulletin 2018/35**

(21) Application number: **13856088.3**

(22) Date of filing: **19.11.2013**

(51) Int Cl.:
*H01M 4/134* (2010.01)  *H01M 4/36* (2006.01)
*H01M 4/38* (2006.01)  *H01M 4/62* (2006.01)
*H01M 10/052* (2010.01)  *H01M 4/66* (2006.01)
*H01M 4/42* (2006.01)

(86) International application number:
**PCT/JP2013/081129**

(87) International publication number:
**WO 2014/080891 (30.05.2014 Gazette 2014/22)**

(54) **NEGATIVE ELECTRODE FOR ELECTRICAL DEVICE AND ELECTRICAL DEVICE PROVIDED WITH SAME**

NEGATIVELEKTRODE FÜR EINE ELEKTRISCHE VORRICHTUNG UND ELEKTRISCHE VORRICHTUNG DAMIT

ÉLECTRODE NÉGATIVE POUR UN DISPOSITIF ÉLECTRIQUE ET DISPOSITIF ÉLECTRIQUE POURVU DE CETTE DERNIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2012 JP 2012256941**

(43) Date of publication of application:
**30.09.2015 Bulletin 2015/40**

(73) Proprietor: **NISSAN MOTOR CO., LTD.**
**Yokohama-shi, Kanagawa 220-8623 (JP)**

(72) Inventors:
• **WATANABE, Manabu**
**Atsugi-shi**
**Kanagawa 243-0123 (JP)**
• **MIKI, Fumihiro**
**Atsugi-shi**
**Kanagawa 243-0123 (JP)**
• **SANADA, Takashi**
**Atsugi-shi**
**Kanagawa 243-0123 (JP)**
• **CHIBA, Nobutaka**
**Atsugi-shi**
**Kanagawa 243-0123 (JP)**

(74) Representative: **Hoefer & Partner Patentanwälte mbB**
**Pilgersheimer Straße 20**
**81543 München (DE)**

(56) References cited:
**EP-A1- 2 717 357**  **EP-A1- 2 800 176**
**WO-A1-2004/004031**  **WO-A1-2004/086539**
**WO-A1-2010/150513**  **WO-A1-2011/065503**
**WO-A1-2012/161190**  **WO-A1-2013/099441**
**JP-A- 2004 228 059**  **JP-A- 2004 349 016**
**JP-A- 2007 149 604**  **JP-A- 2007 149 604**
**JP-A- 2007 305 424**  **JP-A- 2007 305 424**
**JP-A- 2009 224 239**  **JP-A- 2010 135 336**
**JP-A- 2010 205 609**  **JP-A- 2011 048 969**
**JP-A- 2012 109 122**  **US-A1- 2011 052 985**
**US-A1- 2012 153 220**

**Description**

TECHNICAL FIELD

The present invention relates to a negative electrode for a lithium secondary battery and to a lithium secondary battery using the same.

BACKGROUND ART

In recent years, in order to cope with the air pollution and the global warming, it is sincerely desired that the amount of carbon dioxide be reduced. In the automobile industry, expectations are centered on reduction of an emission amount of carbon dioxide by introduction of an electric vehicle (EV) and a hybrid electric vehicle (HEV), and development of an electrical device such as a secondary battery for driving a motor, the electrical device serving as a key for practical use of these vehicles, is assiduously pursued.

It is required that the secondary battery for driving a motor have extremely high output characteristics and high energy in comparison with a consumer-oriented lithium ion secondary battery for use in a cellular phone, a notebook computer and the like. Hence, a lithium ion secondary battery having the highest theoretical energy among all of the batteries has attracted attention, and development thereof is rapidly advanced at present.

In general, the lithium ion secondary battery has a configuration, in which a positive electrode and a negative electrode are connected to each other while interposing an electrolyte layer therebetween, and are housed in a battery case, the positive electrode having a positive electrode active material and the like coated on both surfaces of a positive electrode current collector by using a binder, and the negative electrode having a negative electrode active material and the like coated on both surfaces of a negative electrode current collector by using a binder.

Heretofore, for the negative electrode of the lithium ion secondary battery, a carbon/graphite-based material advantageous in terms of a lifetime of a charge/discharge cycle and cost has been used. However, in the carbon/graphite-based negative electrode material, charge/discharge is performed by occlusion/discharge of lithium ions into/from graphite crystals, and accordingly, there is a disadvantage that a charge/discharge capacity equal to or more than a theoretical capacity of 372 mAh/g, which is obtained from $LiC_6$ that is a maximum lithium-introduced compound, cannot be obtained. Therefore, it is difficult to obtain a capacity and an energy density, which satisfy a practical level of usage for a vehicle, by the carbon/graphite-based negative electrode material.

As opposed to this, in a battery using a material, which is alloyed with Li, for the negative electrode, an energy density thereof is enhanced in comparison with the conventional carbon/graphite-based negative electrode material, and accordingly, such a material is expected as a negative electrode material in the usage for the vehicle. For example, a Si material occludes/discharges 4.4 mol of lithium ions per 1 mol as in the following Reaction formula (1) in the charge/discharge, and in $Li_{22}Si_5 (= L1_{4.4}Si)$, a theoretical capacity thereof is 2100 mAh/g. Moreover, in a case of calculating such a theoretical capacity per weight of Si, the Si material has an initial capacity of no less than 3200 mAh/g (refer to Comparative reference example 34 of Reference example C).

[Chem. 1]

$$Si + 4.4Li^+ + e^- \leftrightarrow Li_{4.4}Si \ ... \qquad (A)$$

However, in the lithium ion secondary battery using the material, which is alloyed with Li, for the negative electrode, expansion/contraction in the negative electrode at a time of the charge/discharge is large. For example, volume expansion in the case of occluding the Li ions is approximately 1.2 times in the graphite material, and meanwhile, in an event where Si and Li are alloyed with each other, the Si material makes transition from an amorphous state to a crystal state and causes a large volume change (approximately four times), and accordingly, there has been a problem of lowering a cycle lifetime of the electrode. Moreover, in a case of a Si negative electrode active material, a capacity and cycle durability thereof are in a tradeoff relationship, and there has been a problem that it is difficult to enhance the high cycle durability while exhibiting a high capacity.

In order to solve such problems as described above, a negative electrode active material for a lithium ion secondary battery, which contains an amorphous alloy having a formula: $Si_xM_yAl_z$ is proposed (for example, refer to Patent Literature 1). Here, x, y and z in the formula represent atomic percent values, x+y+z = 100, x $\geq$ 55, y < 22, z > 0, and M is metal composed of at least one of Mn, Mo, Nb, W, Ta, Fe, Cu, Ti, V, Cr, Ni, Co, Zr and Y. In the invention described in Patent Literature 1, in the paragraph [0018], it is described that a content of the metal M is minimized, whereby a good cycle lifetime is exhibited as well as a high capacity.

CITATION LIST

PATENT LITERATURE

Patent Literature 1: Japanese Patent Unexamined Publication No. 2009-517850

EP 2717357 A1 discloses a negative electrode active material for an electric device includes an alloy containing Si in a range from greater than or equal to 17% by mass to less than 90% by mass, Ti in a range from 10% by mass to 83% by mass exclusive, Ge in a range from 0% by mass to 73% by mass exclusive, and inevitable impurities as a residue. The negative electrode active material can be obtained with a multi DC magnetron sputtering apparatus by use of, for example, Si, Ti and Ge as targets. An electric device employing the negative electrode active material can achieve long cycle life, and ensure a high capacity and improved cycle durability

JP 2007-305424 A teaches a negative electrode active material capable of providing high capacity and of relaxing stress due to expansion/contraction. This document further teaches a battery using the active material. In particular, this negative electrode active material contains Si as a constituent element, contains Ge as a second constituent element, and contains, as a third constituent element, at least one element within Ti, V, Cr, Mn, Fe, Co, Ni, Cu, Zn and Nb. The content of Ge is 5-25 atomic%, and the content of the third constituent element is 0.5-10 atomic%.

US 2011/052985 A1 teaches an electrode structure having a high power density and being superior in repetitive charge/discharge efficiency and an electric energy storage device using the electrode structure. The electrode structure includes an electrode material layer including an electrode material including active material particles containing at least one of silicon, tin and alloys containing at least one of them, and a binder binding the active material particles, the binder has the following characteristics: tensile modulus: 2000 MPa or more, breaking strength: 100 MPa or more, break elongation: 20% to 120% and the ratio of breaking strength/break elongation >1.4 (MPa/%), and an average particle size of the particles is $0.5\ \mu$m or less, the electrode structure has a maximum thermal history temperature less than 350 °C and lower than the glass transition temperature of the binder. The electric energy storage device uses, as its negative electrode, the electrode structure.

JP 2010-205609 A discloses a non-aqueous electrolyte secondary battery which retains a conductive network in an electrode even when the electrode is swollen or contracted due to charge and discharge, and which is superior in cycle characteristics. The electrode includes a current collector and an active material layer having an active material and a binder in which tensile elastic modulus of the binder is 2,000 MPa or more. A ratio (We/Wb) of the weight (We) of a conductive material contained in the active material layer and the weight (Wb) of the binder is 0.2 to 20.

EP 2800176 A1 teaches a negative electrode active material for an electric device includes an alloy containing, in terms of mass ratio, 35% Si 78%, 7% Sn 30%, 0%<Ti 37% and/or 35% Si 52%, 30% Sn 51%, 0%<Ti 35%, and inevitable impurities as a residue. The negative electrode active material can be obtained with a multi DC magnetron sputtering apparatus by use of, for example, silicon, tin and titanium as targets. An electric device employing the negative electrode active material can keep a high discharge capacity and ensure a high cycle property.

JP 2007-149604 A teaches a negative electrode for a lithium secondary battery which contains Sn as an active substance and exhibits a favorable charge/discharge characteristic; and to provide a secondary battery using the same. The negative electrode for a lithium secondary battery has a mix layer containing the active substance particles and a binder on a current collector. The active substance particles contain an alloy powder containing Sn (preferably, an alloy powder containing Sn and Si) as active substance particles. The binder is a resin having an elastic modulus of $\geq 3.0$ GPa, preferably a polyimide resin.

WO 2004/086539 A1 teaches an electrode material for a lithium secondary battery which includes particles of a solid state alloy having silicon as a main component, wherein the particles of the solid state alloy have a microcrystal or amorphous material including an element other than silicon, dispersed in microcrystalline silicon or amorphized silicon. The solid state alloy preferably contains a pure metal or a solid solution. The composition of the alloy preferably has an element composition in which the alloy is completely mixed in a melted liquid state, whereby the alloy has a single phase in a melted liquid state without pressure of two or more phases. The element composition can be determined by the kind of elements constituting the alloy and an atomic ratio of the elements.

US 2012/153220 A1 discloses a negative electrode active material for an electric device which exhibits a well-balanced property of maintaining a high cycle property and attaining a high initial capacity. The negative electrode active material for an electric device comprises an alloy having a composition formula SixTiyZnz (where each of x, y, and z represents a mass percent value, satisfying (1) x+y+z=100, (2) 38$\leq$x<100, (3) 0<y<62, and (4) 0<z<62).

SUMMARY OF INVENTION

TECHNICAL PROBLEM

However, in a case of a lithium ion secondary battery using a negative electrode containing the amorphous alloy having the formula: $Si_xM_yAl_z$, which is described in Patent Literature 1 described above, it cannot be said that an initial capacity thereof is sufficient though it is claimed that this lithium ion secondary battery can exhibit good cycle characteristics. Moreover, it cannot be said that cycle characteristics of this lithium ion secondary battery are sufficient, either.

In this connection, it is an object of the present invention to provide a negative electrode for an electrical device such as a Li ion secondary battery that has a high initial capacity and exhibits good balance characteristics while maintaining high cycle characteristics.

SOLUTION TO PROBLEM

The present invention is defined in the appended claims. The inventors of the present invention have found that the above-described problems can be solved by applying a specific ternary Si-Ti-M-based alloy as a negative electrode active material and by setting elongation of an electrode layer (negative electrode active material layer), a content of the electrically-conductive auxiliary agent mixed into the electrode layer and an amount of the binder contained in the electrode layer in predetermined ranges, and then have completed the present invention based on such knowledge.

BRIEF DESCRIPTION OF DRAWINGS

[Fig. 1] FIG. 1 is a schematic cross-sectional view schematically showing an outline of a laminated flat non-bipolar lithium ion secondary battery as a typical embodiment of an electrical device according to the present invention.

[Fig. 2] FIG. 2 is a perspective view schematically showing an exterior appearance of a laminated flat lithium ion secondary battery as a typical embodiment of the electrical device according to the present invention.

[Fig. 3] FIG. 3 is a ternary composition diagram showing plotted alloy components, which are deposited in Reference example A, together with a composition range of a Si-Ti-Ge-based alloy that composes a negative electrode active material contained in a negative electrode for an electrical device according to the present invention.

[Fig. 4] FIG. 4 is a ternary composition diagram showing a suitable composition range of the Si-Ti-Ge-based alloy that composes the negative electrode active material contained in the negative electrode for an electrical device according to the present invention.

[Fig. 5] FIG. 5 is a ternary composition diagram showing a more suitable composition range of the Si-Ti-Ge-based alloy that composes the negative electrode active material contained in the negative electrode for an electrical device according to the present invention.

[Fig. 6] FIG. 6 is a ternary composition diagram showing a still more suitable composition range of the Si-Ti-Ge-based alloy that composes the negative electrode active material contained in the negative electrode for an electrical device according to the present invention.

[Fig. 7] FIG. 7 is a ternary composition diagram showing a yet more suitable composition range of the Si-Ti-Ge-based alloy that composes the negative electrode active material contained in the negative electrode for an electrical device according to the present invention.

[Fig. 8] FIG. 8 is a ternary composition diagram showing plotted alloy components, which are deposited in Reference example B, together with a composition range of a Si-Ti-Sn-based alloy that composes the negative electrode active material contained in the negative electrode for an electrical device according to the present invention.

[Fig. 9] FIG. 9 is a ternary composition diagram showing a suitable composition range of the Si-Ti-Sn-based alloy that composes the negative electrode active material contained in the negative electrode for an electrical device according to the present invention.

[Fig. 10] FIG. 10 is a ternary composition diagram showing a more suitable composition range of the Si-Ti-Sn-based alloy that composes the negative electrode active material contained in the negative electrode for an electrical device according to the present invention.

[Fig. 11] FIG. 11 is a ternary composition diagram showing a still more suitable composition range of the Si-Ti-Sn-based alloy that composes the negative electrode active material contained in the negative electrode for an electrical device according to the present invention.

[Fig. 12] FIG. 12 is a diagram showing an influence of a negative electrode active material alloy composition, which is given to initial discharge capacities of batteries obtained in Reference examples 19 to 44 and Comparative reference examples 14 to 27, in Reference example B.

[Fig. 13] FIG. 13 is a diagram showing an influence of the negative electrode active material alloy composition, which is given to 50th-cycle discharge capacity retention rates of the batteries obtained in Reference examples 19 to 44 and Comparative reference examples 14 to 27, in Reference example B.

[Fig. 14] FIG. 14 is a diagram showing an influence of the negative electrode active material alloy composition, which is given to 100th-cycle discharge capacity retention rates of the batteries obtained in Reference examples 19 to 44 and Comparative reference examples 14 to 27, in Reference example B.

[Fig. 15] FIG. 15 is a composition diagram of ternary Si-Ti-Zn-based alloys, in which first-cycle discharge capacities (mAhg) of batteries using negative electrodes in Reference examples 45 to 56 and Reference comparative examples 28 to 40 are color-coded (shaded) and plotted by sizes of the capacities, in Comparative reference example C.

[Fig. 16] FIG. 16 is a composition diagram of the ternary Si-Ti-Zn-based alloys, in which 50th-cycle discharge capacity retention rates (%) of the batteries using the negative electrodes in Reference examples 45 to 56 and Reference comparative examples 28 to 40 are color-coded (shaded) and plotted by magnitudes of the discharge capacity retention rates, in Comparative reference example C.

[Fig. 17] FIG. 17 is a diagram in which, in the composition diagram of the ternary Si-Ti-Zn-based alloy in FIG. 15, a composition range of Si-Ti-Zn alloy samples in Comparative reference examples 45 to 56 and Comparative reference examples 28 to 40 is color-coded (shaded) and surrounded, in Comparative reference example C, where $0.38 \leq$ Si (wt%/100) < 1.00, 0 < Ti (wt%/100) < 0.62, and 0 < Zn (wt%/100) < 0.62.

[Fig. 18] FIG. 18 is a diagram in which, in the composition diagram of the ternary Si-Ti-Zn-based alloy in FIG. 15, a preferable composition range of the Si-Ti-Zn alloy samples in Comparative reference examples 45 to 56 and Comparative reference examples 28 to 40 is color -coded (shaded) and surrounded, in Comparative reference example C, where $0.38 \leq$ Si (wt%/100) < 1.00, 0 < Ti (wt%/100) $\leq$ 0.42, and 0 < Zn (wt%/100) $\leq$ 0.39.

[Fig. 19] FIG. 19 is a diagram in which, in the composition diagram of the ternary Si-Ti-Zn-based alloy in FIG. 16, a more preferable composition range of the Si-Ti-Zn alloy samples in Comparative reference examples 45 to 56 and Comparative reference examples 28 to 40 is color-coded (shaded) and surrounded, in Comparative reference example C, where $0.38 \leq$ Si (wt%/100) $\leq$ 0.72, $0.08 \leq$ Ti (wt%/100) $\leq$ 0.42, and $0.12 \leq$ Zn (wt%/100) $\leq$ 0.39.

[Fig. 20] FIG. 20 is a diagram in which, in the composition diagram of the ternary Si-Ti-Zn-based alloy in FIG. 16, a particularly preferable composition range of the Si-Ti-Zn alloy samples in Comparative reference examples 45 to 56 and Comparative reference examples 28 to 40 is color-coded (shaded) and surrounded, in Comparative reference example C, where $0.38 \leq$ Si (wt%/100) $\leq$ 0.61, $0.19 \leq$ Ti (wt%/100) $\leq$ 0.42, and $0.12 \leq$ Zn (wt%/100) $\leq$ 0.35.

[Fig. 21] FIG. 21 is a diagram in which, in the composition diagram of the ternary Si-Ti-Zn-based alloy in FIG. 16, a more particularly preferable composition range of the Si-Ti-Zn alloy samples in Comparative reference examples 45 to 56 and Comparative reference examples 28 to 40 is color-coded (shaded) and surrounded, in Comparative reference example C, where $0.47 \leq$ Si (wt%/100) $\leq$ 0.53, $0.19 \leq$ Ti (wt%/100) $\leq$ 0.21, and $0.26 \leq$ Zn (wt%/100) $\leq$ 0.35.

[Fig. 22] FIG. 22 is a graph showing dQ/dV curves in first-cycle (initial-cycle) discharge processes in the batteries using the respective samples of pure Si, binary Si-Ti-based alloys and the Si-Ti-Zn-based alloys, the discharge processes being performed in Comparative reference example C.

[Fig. 23] FIG. 23 is a graph showing relationships between elongations of electrode layers and improvement rates of discharge capacity in Examples.

[Fig. 24] FIG. 24 is a graph showing relationships between E-elastic moduli of binders contained in the electrode layers and the improvement rate of the discharge capacity of the batteries in Examples.

[Fig. 25] FIG. 25 shows plots indicating relationships between elastic elongations of negative electrode current collectors and the improvement rates of the discharge capacity of the batteries in Examples.

[Fig. 26] FIG. 26 is a graph showing relationships between contents of Si alloys and energy densities or the discharge capacity retention rates in Examples.

DESCRIPTION OF EMBODIMENTS

While referring to the drawings, a description is made below of embodiments of a negative electrode for an electrical device according to the present invention and of an electrical device using the same. However, the technical scope of the present invention should be determined based on the description of the scope of claims, and is not limited only to the following embodiments. Note that the same reference numerals are assigned to the same elements in the description of the drawings, and duplicate descriptions are omitted. Moreover, dimensional ratios of the drawings are exaggerated for convenience of explanation, and are sometimes different from actual ratios.

A negative electrode for a lithium secondary battery according to the present invention includes: a current collector; and an electrode layer containing a negative electrode active material, an electrically-conductive auxiliary agent and a binder and formed on a surface of the current collector, wherein the negative electrode active material contains an alloy represented by a following formula (1):

$$Si_x Ti_y M_z \qquad (1)$$

in the formula (1), M is Ge, and x, y and z represent mass percent values and satisfy x is 17 or more to 77 or less, y is 38 or more to less than 83, and z is 3 or more to 63 or less, and x+y+z = 100, and the electrode layer includes a chain-like or a fibrous electrically-conductive auxiliary agent, wherein an elongation ($\delta$) of the electrode layer (15) measured in accordance with a tensile test method of JIS K 7163 (1994) is 1.29 < $\delta$ < 1.70%, wherein elastic elongation of the current collector, measured in accordance with a tensile test method of JIS K 6251 (2010), is 1.30% or more, wherein a content of the electrically-conductive auxiliary agent mixed into the electrode layer is in a range of 1 to 10 mass% with respect to a total amount of the electrode layer, and wherein an amount of the binder contained in the electrode layer is 0.5 to 15 mass% with respect to the electrode layer.

An alternative electrode for a lithium secondary battery according to the present invention includes: a current collector; and an electrode layer containing a negative electrode active material, an electrically-conductive auxiliary agent and a binder and formed on a surface of the current collector, wherein the negative electrode active material contains an alloy represented by a following formula (1):

$$Si_x Ti_y M_z \qquad (1)$$

in the formula (1), M is Sn, and x, y and z represent mass percent values and x, y and z satisfy a following mathematical formula (1) or (2):

$$35 \le x \le 78 \text{ and } 7 \le y \le 37 \text{ and } 7 \le z \le 24 \qquad (1)$$

$$35 \le x \le 52 \text{ and } 7 \le y \le 35 \text{ and } 35 \le z \le 51 \qquad (2)$$

and x+y+z = 100, and the electrode layer includes a chain-like or a fibrous electrically-conductive auxiliary agent, wherein an elongation ($\delta$) of the electrode layer (15) measured in accordance with a tensile test method of JIS K 7163 (1994) is 1.29 < $\delta$ < 1.70%, wherein elastic elongation of the current collector (12), measured in accordance with a tensile test method of JIS K 6251 (2010), is 1.30% or more, wherein a content of the electrically-conductive auxiliary agent mixed into the electrode layer is in a range of I to 10 mass% with respect to a total amount of the electrode layer, and wherein an amount of the binder contained in the electrode layer is 0.5 to 15 mass% with respect to the electrode layer.

In accordance with the present invention, in an event where Si and Li are alloyed, the ternary Si-Ti-M-based alloy is applied, whereby a function that amorphous-crystalline phase transition is suppressed to enhance the cycle lifetime is obtained. Moreover, the elongation of the electrode layer is set within the predetermined range. Here, the elongation of the electrode layer is increased more than a lower limit of the predetermined range, whereby electrode constituents other than the negative electrode active material can follow the volume change by the expansion/contraction of the negative electrode active material, which are caused by the charge/discharge, and a volume change of a whole of the electrode can be suppressed. Moreover, the elongation of the electrode layer is reduced more than an upper limit of the predetermined range, whereby the elongation of the electrode layer can be suppressed from hindering the reaction (insertion/elimination of the lithium ions to the negative electrode active material, the reaction following the charge/discharge. As a result of such multiple functions as described above, the negative electrode according to the present invention can obtain a useful effect of having a high initial capacity and having high capacity/high cycle durability, and in particular, a high improvement rate of the discharge capacity.

A description is made below of a basic configuration of an electrical device, to which the negative electrode for a lithium secondary battery according to the present invention is applicable, with reference to the drawings. Note that the "electrode layer" in the present invention stands for a combination layer including the negative electrode active material, the electrically-conductive auxiliary agent, and the binder; however, in the description of this specification, the electrode layer is sometimes referred to as a "negative electrode active material layer". In a similar way, an electrode layer on the positive electrode side is sometimes referred to as a "positive electrode active material layer".

First, in a negative electrode for a lithium ion secondary battery of the present invention and in a lithium ion secondary battery using the same, a voltage of a cell (single cell layer) is large, and a high energy density and a high output density can be achieved. Therefore, the lithium ion secondary battery, which uses the negative electrode for a lithium ion secondary battery according to this embodiment, is excellent as those for a vehicle-driving power supply and a vehicle auxiliary power supply. As a result, the lithium ion secondary battery can be suitably used as a lithium ion secondary battery for the vehicle-driving power supply or the like. Besides, the lithium ion secondary battery according to this embodiment is sufficiently applicable also as a lithium ion secondary battery oriented for a portable instrument such as a cellular phone.

That is to say, the lithium ion secondary battery, which serves as a target of this embodiment, just needs to use the negative electrode for a lithium ion secondary battery according to this embodiment, which will be described below, and particular limitations should not be imposed on other constituents.

For example, in a case of distinguishing the above-described lithium ion secondary battery based on form/structure thereof, the lithium ion secondary battery is applicable to any form/structure heretofore known in public, which include those of a laminated-type (flat-type) battery, a wound-type (cylinder-type) battery and the like. The laminated-type (flat-type) battery structure is employed, whereby long-term reliability can be ensured by a sealing technology such as simple thermocompression, and this is advantageous in terms of cost and workability.

Moreover, in a case of viewing the lithium ion secondary battery in terms of an electric connection mode (electrode structure) therein, the negative electrode according to this embodiment is applicable to both of a non-bipolar (internal parallel connection-type) battery and a bipolar (internal serial connection-type) battery.

In a case of distinguishing the lithium ion secondary battery based on a type of an electrolyte layer therein, the negative electrode according to this embodiment is applicable to all types of electrolyte layers heretofore known in public, which are provided in a solution electrolyte battery in which a solution electrolyte such as a non-aqueous electrolytic solution is used for an electrolyte layer, a polymer battery in which a polymer electrolyte is used for an electrolyte layer, and the like. The polymer battery is further classified into a gel electrolyte battery using a polymer gel electrolyte (also simply referred to as a gel electrolyte) and a solid polymer (all polymer) battery using a solid polymer electrolyte (also simply referred to as a polymer electrolyte).

Hence, in the following description, by using the drawings, there is briefly described a non-bipolar (internal parallel connection-type) lithium ion secondary battery using the negative electrode for a lithium ion secondary battery according to this embodiment. However, the technical scope of the lithium ion secondary battery according to this embodiment should not be limited to these.

<Overall structure of battery>

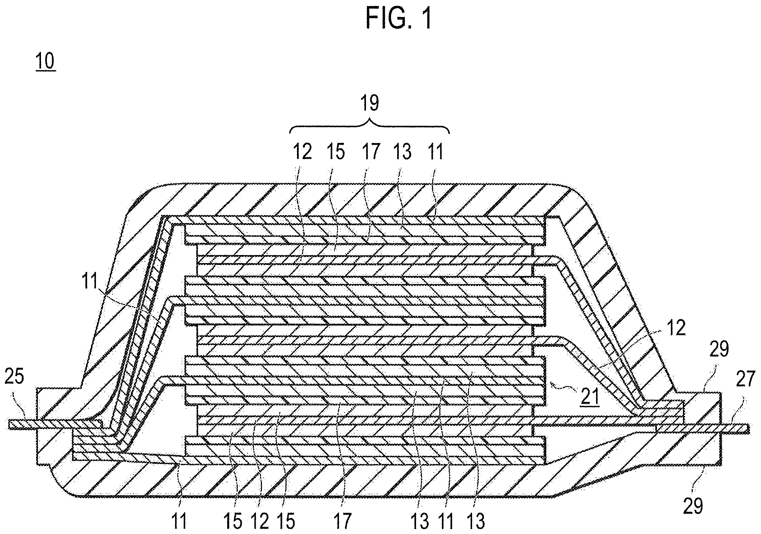

FIG. 1 is a schematic cross-sectional view schematically showing an overall structure of a flat (laminated) lithium ion secondary battery (hereinafter, also simply referred to as a "laminated battery") as a typical embodiment of an electrical device of the present invention.

As shown in FIG. 1, a laminated battery 10 of this embodiment has a structure, in which a substantially rectangular power generation element 21 in which a charge/discharge reaction actually progresses is sealed in an inside of laminated sheets 29 as package bodies. Here, the power generation element 21 has a configuration, in which positive electrodes each having positive electrode active material layers 13 arranged on both surfaces of a positive electrode current collector 11, electrolyte layers 17, and negative electrodes each having negative electrode active material layers 15 arranged on both surfaces of a negative electrode current collector 12 are laminated on one another. Specifically, the negative electrodes, the electrolyte layers and the positive electrodes are laminated on one another in this order so that one of the positive electrode active material layers 13 and the negative electrode active material layer 15 adjacent thereto can be opposed to each other while interposing the electrolyte layer 17 therebetween.

In such a way, the positive electrode, the electrolyte layer and the negative electrode, which are adjacent to one another, compose one single cell layer 19. Hence, it can also be said that the laminated battery 10 shown in FIG. 1 has a configuration composed in such a manner that a plurality of the single cell layers 19 are electrically connected in parallel to one another by being laminated on one another. Note that, with regard to each of the outermost positive electrode current collectors located on both outermost layers of the power generation element 21, the positive electrode active material layer 13 is arranged only on one surface thereof; however, such active material layers may be provided on both surfaces thereof. That is to say, each of the outermost current collectors is not formed as a current collector, which has the active material layer provided only on one surface thereof and is dedicated for the outermost layer, but such a current collector having the active material layers on both surfaces thereof may be directly used as each of the outermost current collectors. Moreover, such arrangement of the positive electrode and the negative electrode is inverted from that of FIG. 1, whereby the outermost negative electrode current collectors may be located on both outermost layers of the power generation element 21, and the negative electrode active material layer may be arranged on one surface or both surfaces of each of the outermost negative electrode current collector.

The positive electrode current collectors 11 and the negative electrode current collectors 12 have structures, in which a positive electrode current collector plate 25 and a negative electrode current collector plate 27, which are to be conducted to the respective electrodes (the positive electrodes and the negative electrodes), are attached thereto, respectively, and are drawn out to an outside of the laminated sheets 29 like being sandwiched by end portions of the laminated sheets 29. The positive electrode current collector plate 25 and the negative electrode current collector plate 27 may be attached to the positive electrode current collectors 11 and negative electrode current collectors 12 of the respective electrodes by ultrasonic welding, resistance welding or the like while interposing a positive electrode lead and a negative electrode lead (not shown) therebetween, respectively, according to needs.

The lithium ion secondary battery described above has a feature in the negative electrode, which contains a ternary Si-Ti-M-based alloy as a negative electrode active material, and further, in which elongation ($\delta$) of the negative electrode active material layer is in the range of $1.29 < \delta < 1.70\%$. A description is made below of main constituent members of the battery, which includes the negative electrode concerned.

<Active material layer>

The active material layers 13 or 15 contain an active material, and further contain other additives according to needs.

[Positive electrode active material layer]

The positive electrode active material layers 13 contain a positive electrode active material.

(Positive electrode active material)

As the positive electrode active material, for example, there are mentioned a lithium-transition metal composite oxide, a lithium-transition metal phosphate compound, a lithium-transition metal sulfate compound, a solid solution system, a ternary system, a NiMn system, a NiCo system, a spinel Mn system and the like.

As the lithium-transition metal composite oxide, for example, there are mentioned $LiMn_2O_4$, $LiCoO_2$, $LiNiO_2$, $Li(Ni, Mn, Co)O_2$, $Li(Li, Ni, Mn, Co)O_2$, $LiFePO_4$, those in which other elements are partially substituted for these transition metals, and the like.

As the solid solution system, for example, there are mentioned: $xLiMO_2 \cdot (1-x)Li_2NO_3$ ($0 < x < 1$, M is one or more of transition metals in which an average oxidation state is 3+; N is one or more of transition metals in which an average oxidation state is 4+), $LiRO_2\text{-}LiMn_2O_4$ (R = transition metal element such as Ni, Mn, Co and Fe); and the like.

As the ternary system, a nickel/cobalt/manganese-based (composite) positive electrode material and the like are mentioned.

As the NiMn system, $LiNi_{0.5}Mn_{1.5}O_4$ and the like are mentioned.

As the NiCo system, $Li(NiCo)O_2$ and the like are mentioned.

As the spinel Mn system, $LiMn_2O_4$ and the like are mentioned.

Depending on cases, two or more of the positive electrode active materials may be used in combination. From viewpoints of a capacity and output characteristics, the lithium-transition metal composite oxide is preferably used as the positive electrode active material. Note that, as a matter of course, positive electrode active materials other than those described above may be used. In a case where particle diameters optimum for developing the respective effects intrinsic to the active materials are different from one another, such active materials with the particle diameters optimum for developing the effects intrinsic thereto just need to be blended and used, and it is not necessarily necessary to uniform the particle diameters of all of the active materials.

A mean particle diameter of the positive electrode active material contained in the positive electrode active material layer 13 is not particularly limited; however, are preferably 1 to 30 $\mu$m, more preferably 5 to 20 $\mu$m from a viewpoint of enhancement of the output. Note that, in this specification, the "particle diameter" stands for a maximum distance among distances, each of which is between arbitrary two points on outlines of the active material particles (observed surfaces) observed by using observing means such as a scanning electron microscope (SEM) and a transmission electron microscope (TEM). Moreover, in this specification, as a value of the "mean particle diameter", a value is employed, which is calculated as a mean value of particle diameters of particles observed in several to several ten visual fields by using the observing means such as the scanning electron microscope (SEM) and the transmission electron microscope (TEM). Particle diameters and mean particle diameters of the other constituent components can also be defined in a similar way.

(Binder for positive electrode)

The positive electrode active material layer contains a binder. The binder for use in the positive electrode active material layer is not particularly limited; however, for example, as the binder, the following materials are mentioned, which are: a thermoplastic polymer such as polyethylene, polypropylene, polyethylene terephthalate (PET), polyether nitrile (PEN), polyacrylonitrile, polyimide, polyamide, polyamide imide, cellulose, carboxymethylcellulose (CMC), an ethylene-vinyl acetate copolymer, polyvinyl chloride, styrene-butadiene rubber (SBR), isoprene rubber, butadiene rubber, ethylene propylene rubber, an ethylene-propylene-diene copolymer, a styrene-butadiene-styrene block copolymer and a hydrogenated product thereof, and a styrene-isoprene-styrene block copolymer and a hydrogenated product thereof; fluorine resin such as polyvinylidene fluoride (PVdF), polytetrafluoroethylene (PTFE), a tetrafluoroethylene-hexafluoropropylene copolymer (FEP), a tetrafluoroethylene-perfluoroalkyl vinyl ether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF); polyvinylidene fluoride-based fluorine rubber such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TFE-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFP-TFE-based fluorine rubber), vinylidene fluoride-perfluoromethyl vinyl ether-tetrafluoroethylene-based fluorine rubber (VDF-PFMVE-TFE-based fluorine rubber), and vinylidene fluoride-chlorotrifluoroethylene-based fluorine rubber (VDF-CTFE-based fluorine rubber); and epoxy resin. Among them, polyvinylidene fluoride, polyimide, styrene-butadiene rubber, carboxymethyl cellulose, polypropylene, polytetrafluoroethylene, polyacrylonitrile, polyamide, and polyamide imide are more preferable. These suitable binders are excellent in heat resistance, further have extremely wide potential windows, are stable at both of the positive electrode potential and the negative electrode potential, and are usable for the positive electrode active material layer. These binders may be each used singly, or two or more thereof may be used in combination.

A content of the binder contained in the positive electrode active material layer is not particularly limited as long as the binder can bind the positive electrode active materials; however, is preferably 0.5 to 15 mass%, more preferably 1 to 10 mass% with respect to the positive electrode active material layers.

As other additives which can be contained in the positive electrode active material layers, for example, there are mentioned an electrically-conductive auxiliary agent, electrolyte salt (lithium salt), an ion conductive polymer, and the like.

(Electrically-conductive auxiliary agent for positive electrode)

The positive electrode active material layer contains an electrically-conductive auxiliary agent. The electrically-conductive auxiliary agent for the positive electrode, which is mentioned herein, refers to an additive to be compounded in order to enhance conductivity of the positive electrode active material layer. As this electrically-conductive auxiliary agent, there are mentioned: carbon powder such as carbon black including short chain-like carbon black (short chain-like acetylene black and the like), long chain-like carbon black (long chain-like acetylene black), Ketjen Black (furnace black), channel black and thermal black, and such as graphite including natural graphite and artificial graphite; carbon fiber such as vapor deposited carbon fiber or liquid deposited carbon fiber (carbon nanotube (CNT), graphite fiber and the like) and carbon nanofiber; and carbon materials such as Vulcan, Black Pearl, carbon nano-horn, carbon nano-balloon, hard carbon, fullerene, and expanded graphite; however, it is needless to say that the electrically-conductive auxiliary agent is not limited to these. Note that the above-described carbon fiber is CNT or carbon fiber (which is graphite-like and hard carbon-like (changed depending on a burning temperature at the time of synthesis thereof)), and is capable of being synthesized by either a liquid phase method or a vapor phase method. The positive electrode active material layer contains the electrically-conductive auxiliary agent, whereby a three-dimensional electronic (conductive) network in an inside of the positive electrode active material layer is formed effectively, and this can contribute to the enhancement of the output characteristics of the battery.

A content of the electrically-conductive auxiliary agent mixed into the positive electrode active material layer ranges to be 1 mass% or more, preferably 3 mass% or more, more preferably 5 mass% or more with respect to a total amount of the positive electrode active material layer. Moreover, the content of the electrically-conductive auxiliary agent mixed into the positive electrode active material layer ranges to be 15 mass% or less preferably 10 mass% or less, more preferably 7 mass% or less with respect to the total amount of the positive electrode active material layer. Electronic conductivity of the active material itself is low, and a compounding ratio (content) of the electrically-conductive auxiliary agent in the positive electrode active material layer in which electrode resistance can be reduced by the amount of the electrically-conductive auxiliary agent is regulated within the above-described range, whereby the following effects can be developed. That is to say, without inhibiting an electrode reaction, the electronic conductivity can be sufficiently ensured, the lowering of the energy density by the lowering of the electrode density can be suppressed, and eventually, the enhancement of the energy density by the enhancement of the electrode density can be achieved.

Moreover, a conductive binding agent, which has functions of the above-described electrically-conductive auxiliary agent and binder in combination, may be used in place of these electrically-conductive auxiliary agent and binder, or alternatively, may be used in combination of one or both of these electrically-conductive auxiliary agent and binder. As the conductive binding agent, for example, already commercially available TAB-2 (made by Hohsen Corporation) can be used.

(Manufacturing method of positive electrode active material layer)

The positive electrode (positive electrode active material layer) can be formed by any method of a kneading method, a sputtering method, an evaporation method, a CVD method, a PVD method, an ion plating method, and a thermal spraying method as well as a usual method of coating slurry.

[Negative electrode active material layer]

The negative electrode active material layer 15 is characterized in that a ternary Si-Ti-M-based alloy is contained as the negative electrode active material, and further, elongation ($\delta$) of the negative electrode active material layer is in the range of $1.29 < \delta < 1.70\%$. The negative electrode active material layer of this embodiment is applied, whereby a good negative electrode for a lithium ion secondary battery, which has a high capacity and high cycle durability, is obtained. Moreover, a negative electrode having the negative electrode active material layer of this embodiment is used, whereby a high capacity lithium ion secondary battery having good battery characteristics, which is excellent in cycle durability, and particularly, improvement rate of the discharge capacity, is obtained.

(Negative electrode active material)

In this embodiment, the ternary Si-Ti-M-based alloy for use as the negative electrode active material is represented by the following Chemical formula (1).
[Chem. 3]

$$Si_x Ti_y M_z \qquad (1)$$

In the above-described formula (1), M is Ge . Furthermore, x, y, z and a represent mass% values, and in this event, the following are conditioned, which are $17 \leq x \leq 77$, $38 \leq y < 83$, $3 \leq z \leq 63$, and x+y+z = 100.
In the above-described formula (1), M can also be Sn. Furthermore, x, y, z satisfy a following mathematical formula (1) or (2):

$$35 \leq x \leq 78 \text{ and } 7 \leq y \leq 37 \text{ and } 7 \leq z \leq 24 \quad (1)$$

$$35 \leq x \leq 52 \text{ and } 7 \leq y \leq 35 \text{ and } 35 \leq z \leq 51 \quad (2)$$

and x+y+z = 100.
In this embodiment, as the negative electrode active material, Ti as a first additional element and M (at least one metal selected from the group consisting of Ge and Sn) as a second additional element are selected, whereby, in an event of Lithium alloying, amorphous-crystalline phase transition is suppressed, and the cycle lifetime can be enhanced. Moreover, the negative electrode active material in this embodiment obtains a higher capacity than the conventional negative electrode active material, for example, a carbon-based negative electrode active material.

A reason why the amorphous-crystalline phase transition is suppressed in the event of the Li alloying is that, in an event where Si and Li are alloyed in the Si material, the Si material makes transition from an amorphous state to a crystal state and causes a large volume change (approximately four times), and accordingly, particles themselves thereof are broken, and a function of the active material is lost. Therefore, the amorphous-crystalline phase transition is suppressed, whereby the breakage of the particles themselves is suppressed, the function (high capacity) of the active material can be held, and the cycle lifetime can be enhanced. Such first and second additional elements are selected, whereby a Si-alloy negative electrode active material having a high capacity and high cycle durability can be provided.

As mentioned above, M is at least one metal selected from the group consisting of Ge and Sn. Hence, a description is individually made of Si alloys, which are $Si_xTi_yGe_z$ and $Si_xTi_ySn_z$. Further described but not part of the present invention are ternary alloys $Si_xTi_yZn_z$.

(Si alloy represented by $Si_xTi_yGe_zA_a$)

As mentioned above, Ti as the first additional element and Ge as the second additional element are selected, whereby the above-described $Si_xTi_yGe_zA_a$ can suppress the amorphous-crystalline phase transition and enhance the cycle lifetime in the event of the Li alloying. Moreover, in such a way, the negative electrode active material in this embodiment obtains the higher capacity than the conventional negative electrode active material, for example, the carbon-based negative electrode active material.

In a composition of the above-described alloy, the above-described x is 17 or more to 83 or less, and z is 3 to 63 or less. If the above-described x is 17 or more, then a high initial discharge capacity is obtained. Moreover, if the above-described y is more than 10, then a good cycle lifetime is exhibited.

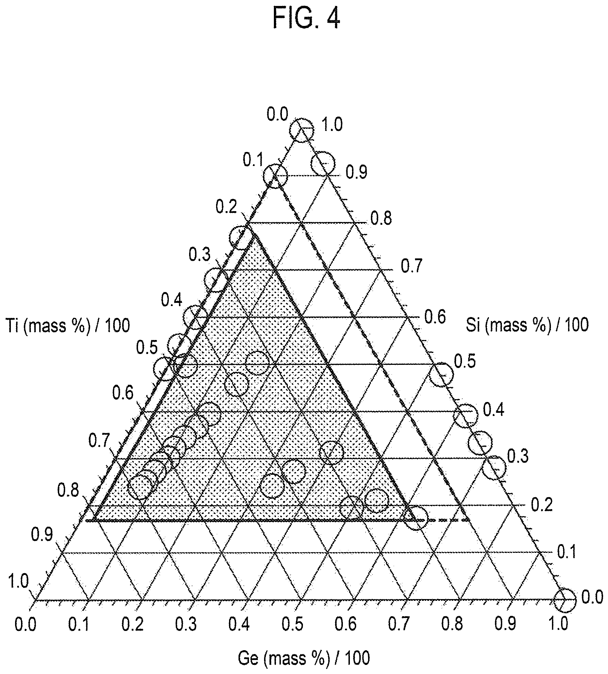

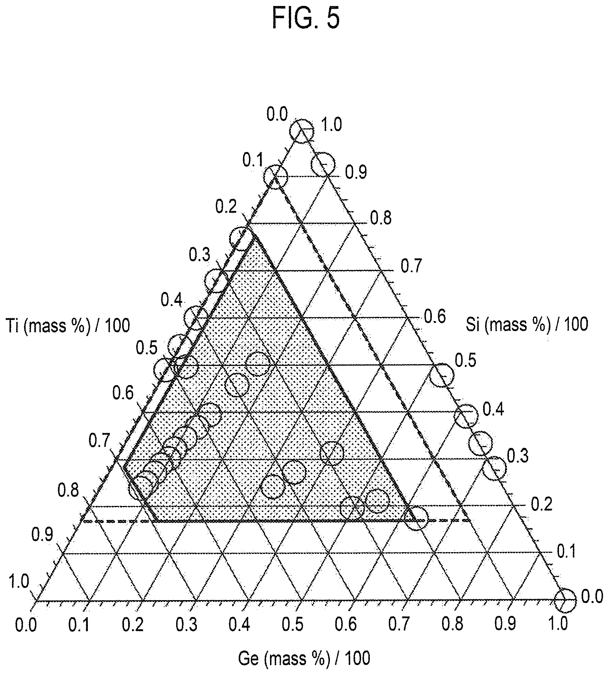

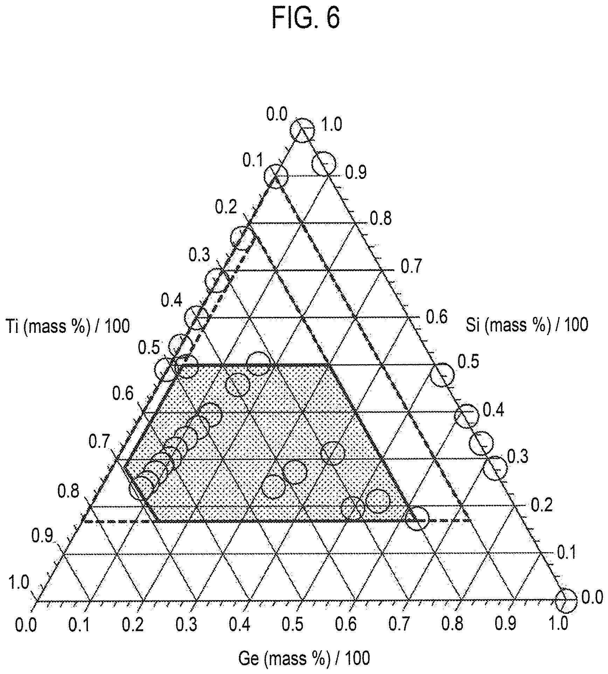

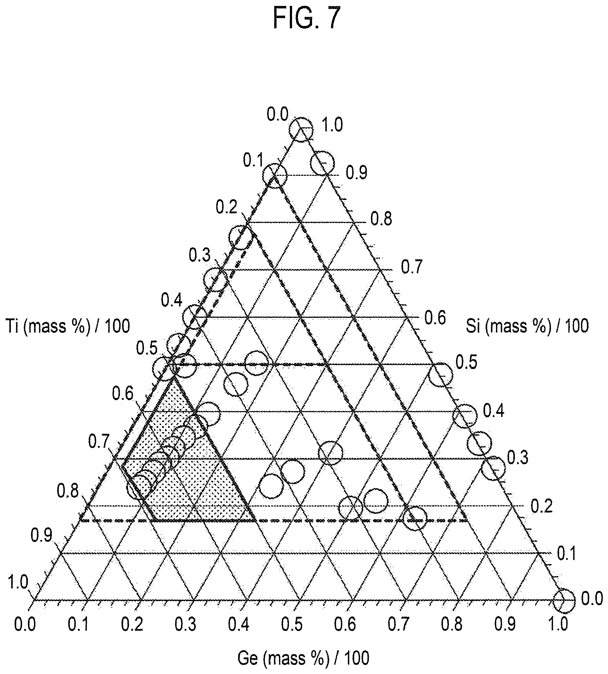

Note that, from a viewpoint of further enhancing the above-described characteristics of the negative electrode active material concerned, the above-described x is set within a range of 17 to 77, that the above-described y be set preferably within a range of 38 to 80, wherein the above-described z is set within a range of 3 to 63 as shown by a hatched portion of FIG. 4. Moreover, as shown by a hatched portion of FIG. 5, more preferably, y is further set within a range of 68 or less. Furthermore, still more preferably, the above-described x is set within a range of 50 or less as shown by a hatched portion of FIG. 6. Moreover, most preferably, the above-described y is further set within a range of 51% or more as shown by a hatched portion of FIG. 7.

(Si alloy represented by $Si_xTi_ySn_z$)

As mentioned above, Ti as the first additional element and Sn as the second additional element are selected, whereby the above-described $Si_xTi_ySn_z$ can suppress the amorphous-crystalline phase transition and enhance the cycle lifetime in the event of the Li alloying. Moreover, in such a way, the negative electrode active material in this embodiment obtains the higher capacity than the conventional negative electrode active material, for example, the carbon-based negative electrode active material.

In a composition of the above-described alloy, preferably, the above-described x, y and z satisfy the following mathematical formula (1) or (2):
[Mathematical 1]

$$35 \leq x \leq 78, 7 \leq y \leq 37, 7 \leq z \leq 24 \quad (1)$$

$$35 \leq x \leq 52, 7 \leq y \leq 35, 35 \leq z \leq 51 \quad (2)$$

If the contents of the respective components are within the above-described ranges, then an initial discharge capacity exceeding 1000 mAh/g can be obtained, and the cycle lifetime also exceeds 90% (50 cycles).

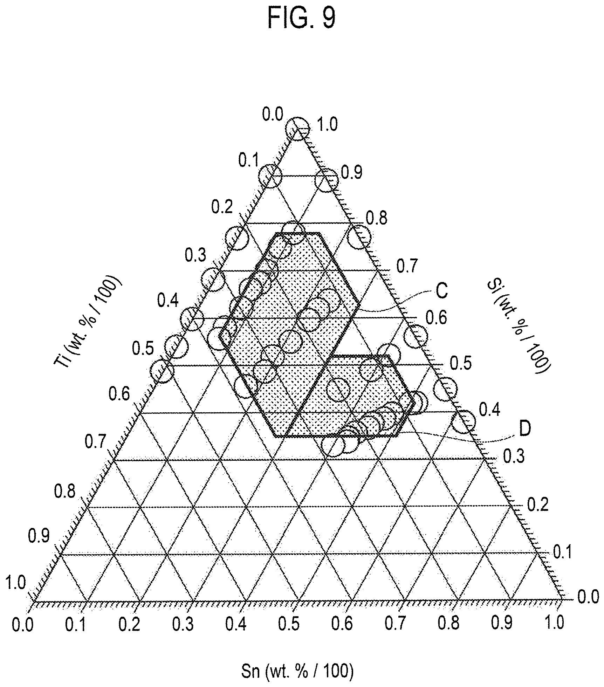

Note that, from the viewpoint of further enhancing the above-described characteristics of the negative electrode active material concerned, desirably, the content of titanium is set in a range of 7 mass% or more. That is to say, as shown by reference symbol C of FIG. 9, preferably, a first region is a region containing: 35 mass% or more to 78 mass% or less of silicon (Si); 7 mass% or more to 24 mass% or less of tin (Sn); and 7 mass% or more to 37 mass% or less of titanium (Ti). Moreover, as shown by reference symbol D of FIG. 9, preferably, a second region is a region containing: 35 mass% or more to 52 mass% or less of Si; 35 mass% or more to 51 mass% or less of Sn; and 7 mass% or more to 35 mass% or less of Ti.

In such a way, as described in Reference examples to be described later, it becomes possible to set a discharge capacity retention rate after 50 cycles to 45% or more.

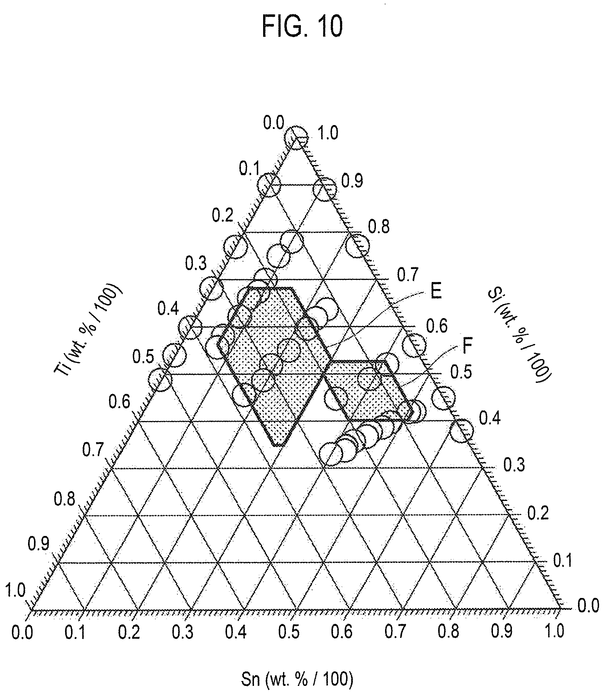

Then, from a viewpoint of ensuring better cycle characteristics, as shown by reference symbol E of FIG. 10, preferably, the first region is a region containing: 35 mass% or more to 68 mass% or less of Si; 7 mass% or more to 24 mass% or less of Sn; and 18 mass% or more to 37 mass% or less of Ti. Moreover, as shown by reference symbol F of FIG. 10, preferably, a second region is a region containing: 39 mass% or more to 52 mass% or less of Si; 35 mass% or more to 51 mass% or less of Sn; and 7 mass% or more to 20 mass% or less of Ti. That is to say, the above-described x, y and z satisfy the following mathematical formula (5) or (6):

[Mathematical 3]

$$35 \leq x \leq 68, 18 \leq y \leq 37, 7 \leq z \leq 24 \quad (5)$$

$$39 \leq x \leq 52, 7 \leq y \leq 20, 35 \leq z \leq 51 \quad (6)$$

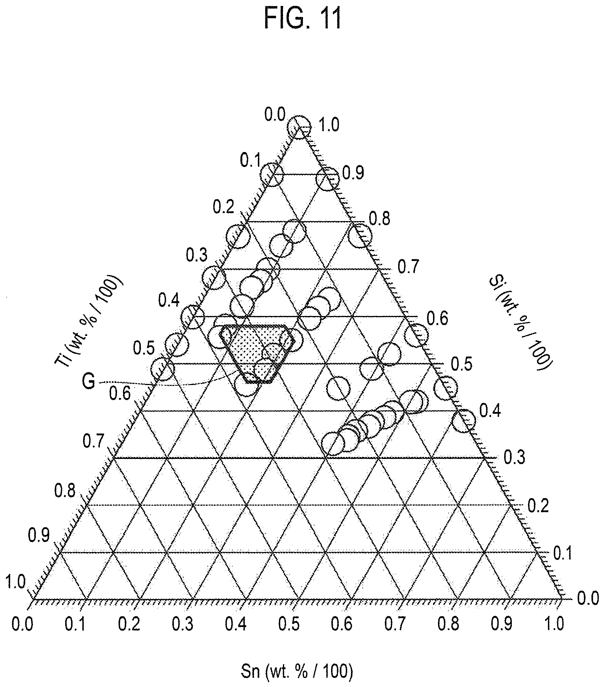

Then, from viewpoints of the initial discharge capacity and the cycle characteristics, particularly preferably, the negative electrode active material of this embodiment includes an alloy containing components of a region shown by reference symbol G of FIG. 11, in which residues are inevitable impurities. Note that the region shown by reference symbol G is a region containing: 46 mass% or more to 58 mass% or less of Si; 7 mass% or more to 21 mass% or less of Sn; and 24 mass% or more to 37 mass% or less of Ti. That is to say, the above-described x, y and z satisfy the following mathematical formula (7):

[Mathematical 4]

$$46 \leq x \leq 58, 24 \leq y \leq 37, 7 \leq z \leq 21 \quad (7)$$

Note that the above-described a is $0 \leq a < 0.5$, preferably $0 \leq a < 0.1$.

(Si alloy represented by $Si_xTi_yZn_zA_a$) (not belonging to the present invention)

As mentioned above, Ti as the first additional element and Zn as the second additional element are selected, whereby the above-described $Si_xTi_yZn_zA_a$ can suppress the amorphous-crystalline phase transition and enhance the cycle lifetime in the event of the Li alloying. Moreover, in such a way, the negative electrode active material obtains the higher capacity than the conventional negative electrode active material, for example, the carbon-based negative electrode active material.

Preferably, the above-described x, y and z satisfy the following mathematical formula (8):

[Mathematical 5]

$$38 \leq x < 100, 0 < y < 62, 0 < z < 62 \quad (8)$$

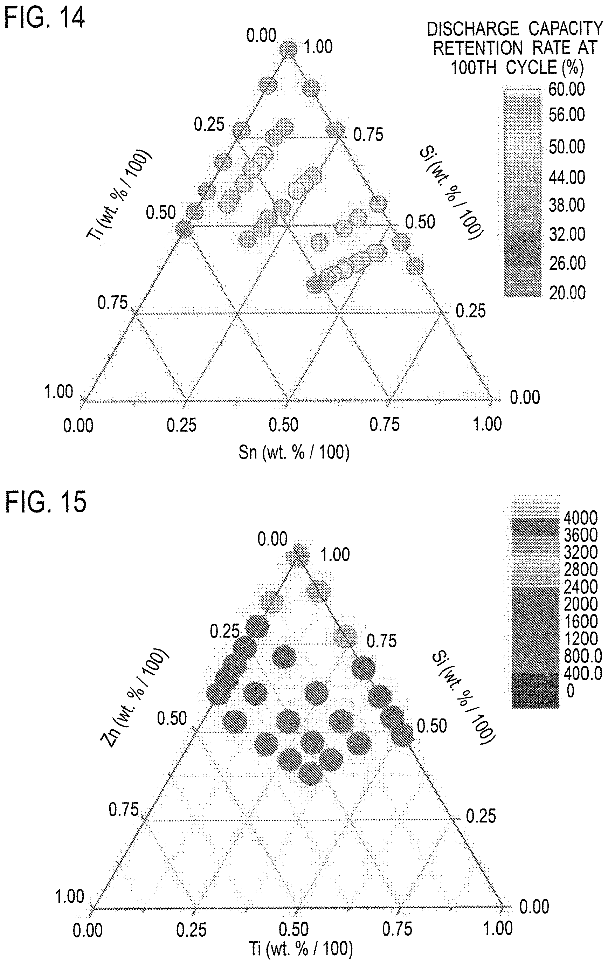

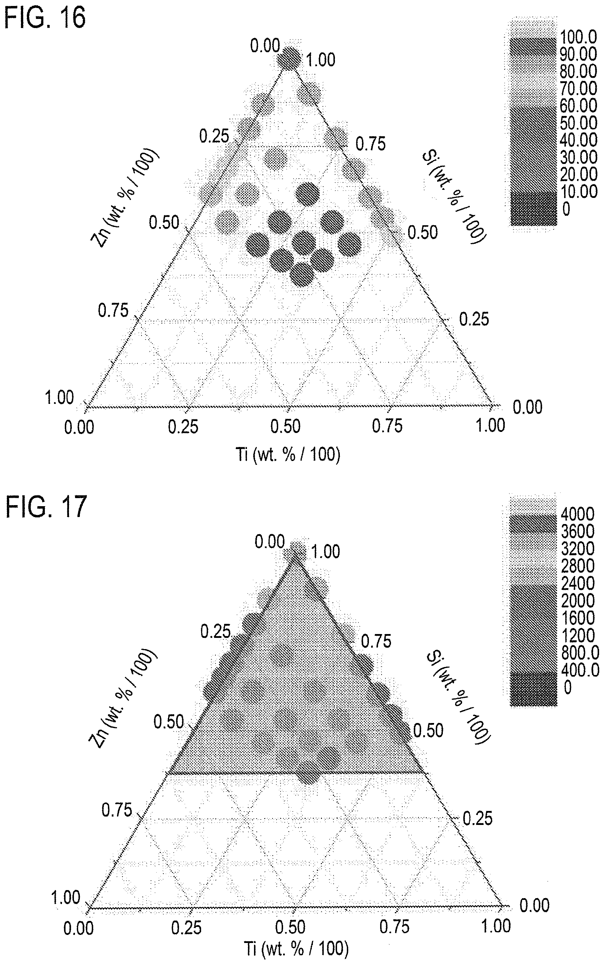

(refer to FIG. 17). Specifically, if a composition ratio of the Si-Ti-Zn alloy is within a range (inside of a triangle) surrounded by a bold solid line of FIG. 17, then a remarkably high capacity increase, which is unrealizable by the existing carbon-based negative electrode active material, can be realized. In a similar way, a high capacity (initial capacity of 690 mAh/g or more) similar to or more than the existing Sn-based alloy negative electrode active material can be realized. Moreover, also with regard to the cycle durability in a tradeoff relationship with the capacity increase, remarkably superior cycle durability (in particular, high discharge capacity retention rate of 87% or more in the 50th cycle) can be realized in a case of being compared with the Sn-based negative electrode active material inferior in cycle durability though the capacity thereof is high and with the multinary alloy negative electrode active material described in Patent Literature 1 (refer to Table 3 and FIGS. 15, 16 and 17).

More preferably, the above-described x, y and z satisfy the following mathematical formula (9):

[Mathematical 6]

$$38 \leq x < 100, 0 < y \leq 42, 0 < z \leq 39 \quad (9)$$

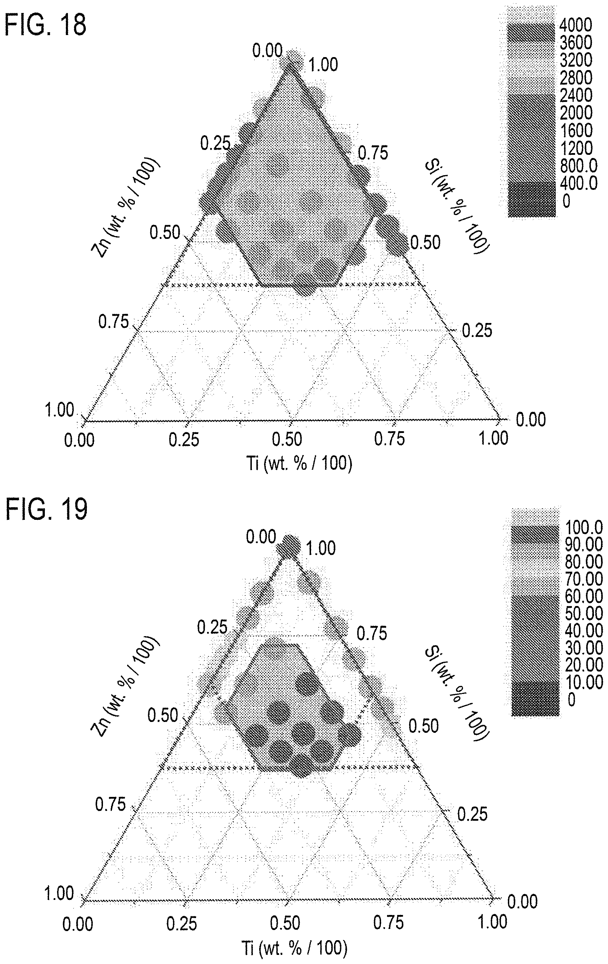

In a case where the composition ratio of Ti as the first additional element, Zn as the second additional element, and further the high capacity element Si is in the appropriate range regulated above, the Si alloy negative electrode active material having good characteristics can be provided. Specifically, also in a case where the composition ratio of the Si-Ti-Zn alloy is within a range (inside of a pentagon of FIG. 18, that is, inside of a shape in which corners on two vertices of a bottom portion of the triangle of FIG. 17 are cut away) surrounded by a bold solid line of FIG. 18, then the remarkably high capacity increase, which is unrealizable by the existing carbon-based negative electrode active material, can be realized. In a similar way, a high capacity (initial capacity of 690 mAh/g or more) similar to or more than the existing Sn-based alloy negative electrode active material can be realized. In particular, in this case, a composition range, in which the capacity increase was able to be specifically realized in Comparative reference examples 45 to 56 of Comparative reference example C, was selected (formed into the pentagon surrounded by the bold solid line of FIG. 18). Moreover, also with regard to the cycle durability in the tradeoff relationship with the capacity increase, the remarkably superior cycle durability can be realized in a case of being compared with the Sn-based negative electrode active material inferior in cycle durability though the capacity thereof is high and with the multinary alloy negative electrode active material described in Patent Literature 1. Specifically, a high discharge capacity retention rate of 87% or more in the 50th cycle can be realized. In such a way, an excellent Si alloy negative electrode active material can be provided (refer to Table 3 and FIGS. 15, 16 and 18).

Still more preferably, the above-described x, y and z satisfy the following mathematical formula (10):
[Mathematical 7]

$$38 \le x \le 72,\ 8 \le y \le 42,\ 12 \le z \le 39 \quad (10)$$

In a case where the composition ratio of Ti as the first additional element, Zn as the second additional element, and further the high capacity element Si is in the appropriate range regulated above, the Si alloy negative electrode active material having better characteristics can be provided. Specifically, also in a case where the composition ratio of the Si-Ti-Zn alloy is within a range (inside of a hexagon) surrounded by a bold solid line of FIG. 19, then the remarkably high capacity increase, which is unrealizable by the existing carbon-based negative electrode active material, can be realized. Moreover, also with regard to the cycle durability in the tradeoff relationship with the capacity increase, the remarkably superior cycle durability can be realized in a case of being compared with the Sn-based negative electrode active material inferior in cycle durability though the capacity thereof is high and with the multinary alloy negative electrode active material described in Patent Literature 1. Specifically, a high discharge capacity retention rate of 87% or more in the 50th cycle can be realized. In particular, in this case, only a composition range, in which the capacity increase and the high cycle durability were able to be specifically realized with a good balance in Comparative reference examples 45 to 56 of Comparative reference example C, was selected (formed into the hexagon surrounded by the bold solid line of FIG. 19). In such a way, more excellent Si alloy negative electrode active material can be provided (refer to Table 3 and FIGS. 15, 16 and 19).

Particularly preferably, the above-described x, y and z satisfy the following mathematical formula (11):
[Mathematical 8]

$$38 \le x \le 61,\ 19 \le y \le 42,\ 12 \le z \le 35 \,(11)$$

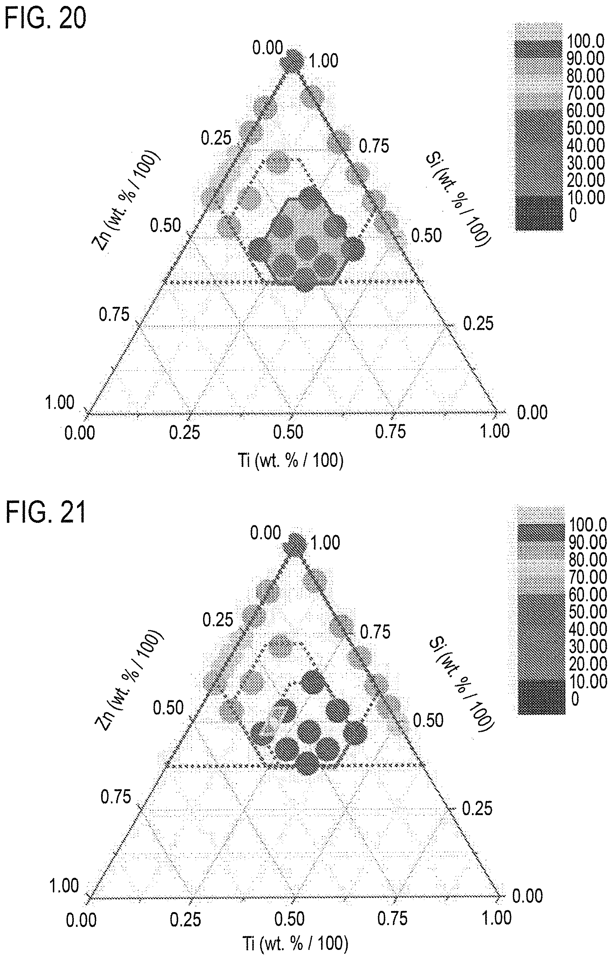

In a case where the composition ratio of Ti as the first additional element, Zn as the second additional element, and further the high capacity element Si is in the appropriate range regulated above, the Si alloy negative electrode active material having particularly good characteristics can be provided. Specifically, also in a case where the composition ratio of the Si-Ti-Zn alloy is within a range (inside of a small hexagon) surrounded by a bold solid line of FIG. 20, then the remarkably high capacity increase, which is unrealizable by the existing carbon-based negative electrode active material, can be realized. In a similar way, a high capacity (initial capacity of 690 mAh/g or more) similar to or more than the existing Sn-based alloy negative electrode active material can be realized. Moreover, also with regard to the cycle durability in the tradeoff relationship with the capacity increase, the remarkably superior cycle durability can be realized in a case of being compared with the Sn-based negative electrode active material inferior in cycle durability though the capacity thereof is high and with the multinary alloy negative electrode active material described in Patent Literature 1. Specifically, a higher discharge capacity retention rate of 90% or more in the 50th cycle can be realized. That is to say, in this case, a composition range, in which the capacity increase and the much higher cycle durability were able to be realized with an extremely good balance in Comparative reference examples 45 to 56 of Comparative reference example C, was selected (formed into the small hexagon surrounded by the bold solid line of FIG. 20). In such a way, a high-performance Si alloy negative electrode active material can be provided (refer to Table 3 and FIGS. 15, 16 and 20).

Most preferably, the above-described x, y and z satisfy the following mathematical formula (12):
[Mathematical 9]

$$47 \le x \le 53, \ 19 \le y \le 21, \ 26 \le z \le 35 \ (12)$$

In a case where the composition ratio of Ti as the first additional element, Zn as the second additional element, and further the high capacity element Si is in the appropriate range regulated above, the Si alloy negative electrode active material having best characteristics can be provided. Specifically, in a case where the composition ratio of the Si-Ti-Zn alloy is within a range (inside of a small quadrangle) surrounded by a bold solid line of FIG. 21, then the remarkably high capacity increase, which is unrealizable by the existing carbon-based negative electrode active material, can be realized. In a similar way, a higher capacity (initial capacity of 1129 mAh/g or more) in comparison with the existing Sn-based alloy negative electrode active material can be realized. Moreover, also with regard to the cycle durability in the tradeoff relationship with the capacity increase, the remarkably superior cycle durability can be realized in a case of being compared with the Sn-based negative electrode active material inferior in cycle durability though the capacity thereof is high and with the multinary alloy negative electrode active material described in Patent Literature 1. Specifically, a much higher discharge capacity retention rate of 96% or more in the 50th cycle can be realized. That is to say, in this case, a composition range, in which a much higher capacity increase and the much higher cycle durability were able to be realized with a best balance in Comparative reference examples 45 to 56 of Comparative reference example C, was selected (formed into the small quadrangle surrounded by the bold solid line of FIG. 21). In such a way, an extremely high-performance Si alloy negative electrode active material can be provided (refer to Table 3 and FIGS. 15, 16 and 21).

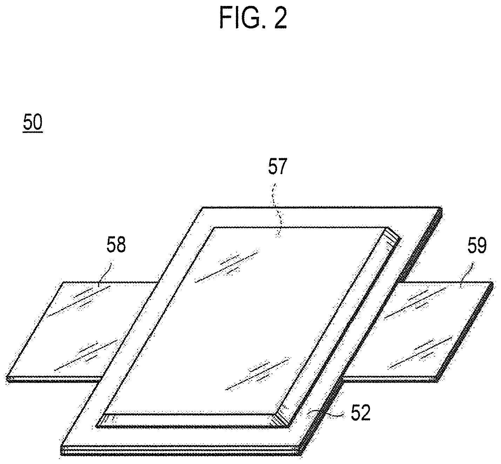

Specifically, in a prepared state (uncharged state), the negative electrode active material is a ternary amorphous alloy represented by $Si_xTi_yZn_z(A_a)$ having the above-described appropriate composition ratio. A is "inevitable impurities" and stand for those which are present in raw materials in the Si alloy or inevitably mixed in a manufacturing process of the Si alloy. The inevitable impurities concerned are originally unnecessary; however, an amount thereof is trace, and characteristics of the Si alloy are not affected thereby, and accordingly, the inevitable impurities are permitted. Then, the lithium ion secondary battery using the negative electrode active material has prominent characteristics of being capable of suppressing, also in the event where Si and Li are alloyed with each other, such a Si-Li alloy from making transition from the amorphous state to the crystal state and causing a large volume change by the charge/discharge. In a case of using a binary alloy (Si-Zn alloy with y = 0 or Si-Ti-based alloy with z = 0), which does not contain either of the additional metal elements to Si in the ternary alloy represented by $Si_xTi_yZn_z$, it is difficult to maintain the high cycle characteristics, and in particular, the high discharge capacity retention rate in the 50th cycle. Therefore, there occurs a large problem that the cycle characteristics are rapidly lowered (deteriorated) (refer to Comparative reference examples 45 to 56 and Comparative reference examples 28 to 40 in Comparative reference example C in comparison). Moreover, in a case of using the other ternary alloys represented by $Si_xM_yAl_z$ in Patent Literature 1 and using the quaternary alloys therein, it is also difficult to maintain the high cycle characteristics, and in particular, the high discharge capacity retention rate in the 50th cycle, and accordingly, such a large problem that the cycle characteristics are rapidly lowered (deteriorated) occurs. That is to say, in each of the ternary and quaternary alloys in Patent Literature 1, an initial capacity (first-cycle discharge capacity) is remarkably high in comparison with the existing carbon-based negative electrode active material (theoretical capacity of 372 mAh/g), and is also high in comparison with the Sn-based negative electrode active material (theoretical capacity of approximately 600 to 700 mAh/g). However, in a case of being compared with the 50th-cycle discharge capacity retention rate (approximately 60%) of the Sn-based negative electrode active material capable of increasing the capacity to approximately 600 to 700 mAh/g, cycle characteristics of the ternary and quaternary alloys are extremely poor, and cannot be said to be sufficient. That is to say, the balance between the capacity increase and the cycle durability, which are in the tradeoff relationship, are poor, and it is impossible to put the ternary and quaternary alloys into practical use. Specifically, in the illustration of FIG. 2, the quaternary alloy of $Si_{62}Al_{18}Fe_{16}Zr_4$ in Example 1 of Patent Literature 1 has an initial capacity as high as approximately 1150 mAh/g; however, only has approximately 1090 mAh/g as a circulation capacity after only 5 to 6 cycles. That is to say, in Example 1 of Patent Literature 1, it is illustrated that the discharge capacity retention rate in the 5th or 6th cycle is largely lowered to approximately 95%, and that the discharge capacity retention rate is lowered by substantially 1% per cycle. In view of this fact, it is assumed that the discharge capacity retention rate is lowered by approximately 50% in the 50th cycle (that is, the discharge capacity retention rate is lowered to approximately 50%). In a similar way, though the ternary alloy $Si_{55}Al_{29.3}Fe_{15.7}$ of Example 2 has the high capacity of approximately 1430 mAh/g as the initial capacity as indicated by FIG. 4, it is illustrated by FIG. 4 that the circulation capacity after only 5 to 6 cycles is largely lowered to approximately 1300 mAh/g. That is to say, in Example 2 of Patent Literature 1, it is illustrated that the discharge capacity retention rate in the 5th or 6th cycle is rapidly lowered to approximately 90%, and that the discharge capacity retention rate is lowered by substantially 2% per cycle. In view of this fact, it is assumed that the discharge capacity retention rate is lowered by approximately 100% in the 50th cycle (that is, the discharge capacity retention rate is lowered to substantially 0%). Though there is no description of the initial capacity in each of the quaternary alloy $Si_{60}Al_{20}Fe_{12}Ti_8$ of Example 3 and the quaternary alloy $Si_{62}Al_{16}Fe_{14}Ti_8$ of Example 4, it is indicated by Table 2 that the circulation capacity after only 5 to 6 cycles is lowered to as low as 700 to 1200 mAh/g. The discharge capacity retention rate in the 5th or 6th cycle of Example 3 of Patent Literature 1 is equal to or less than those of Examples 1 and 2, and it is assumed that the discharge capacity retention rate in the 50th cycle is substantially lowered by 50% to 100% (that is, the discharge capacity retention rate is lowered to about 50% to 0%). Note that the alloy compositions of Patent Literature 1 are described by using atomic ratio, and it can be said that the alloy composition in which Fe is the first additional element is disclosed since approximately 20 mass% of Fe is contained in Examples when the atomic ratio is converted into the mass ratio.

Therefore, the batteries using the binary alloy and the ternary and quaternary alloys described in Patent Literature 1, which are described above, have such problems in reliability and safety that cycle characteristics which satisfy a practical use level cannot be sufficiently obtained in a field where the cycle durability is strongly required as in the use in vehicles, and it is difficult to put these batteries in practical use. Meanwhile, the negative electrode active material using the ternary alloy represented by $Si_xTi_yZn_z(A_a)$ has the high discharge capacity retention rate in the 50th cycle as the high cycle characteristics (refer to FIG. 16). Moreover, the initial capacity (discharge capacity in the 1st cycle) is also remarkably higher than those of the existing carbon-based negative electrode active materials and is also higher as compared to the existing Sn-based negative electrode active materials (refer to FIG. 15), and it is possible to provide the negative electrode active material exhibiting such well-balanced characteristics. That is to say, the negative electrode active martial using the alloy capable of achieving the high-level and well-balanced high capacity and cycle durability, which have not been realizable by the existing carbon-based and Sn-based negative electrode active materials and the ternary and quaternary alloys of Patent Literature 1 due to the trade-off relationship, is found. Specifically, it is found that it is possible to achieve the desired object by selecting two types which are Ti and Zn from the group consisting of one or more additional elements having extremely various combinations. As a result, the negative electrode active material is excellent in the point of being capable of providing a lithium ion secondary battery having high capacity and good cycle durability.

A description is made below more in detail of the negative electrode active material $Si_xTi_yZn_zA_a$.

(1) Regarding total mass% value of alloy

The total mass% value of the alloy is the above-described composition formula $Si_xTi_yZn_zA_a$ is x+y+z+a = 100 as indicated as (1) of the formula (where each of x, y, z and a represents a mass% value). That is to say, the negative electrode active material needs to contain the ternary Si-Ti-Zn alloy. In other words, it can be said that the binary alloy, such a ternary alloy having the other composition, and such a quaternary alloy added with other metal are not contained. However, the above-mentioned inevitable impurities A may be contained. Note that, in the negative electrode active material layer 15, at least one type of alloy having the composition formula $Si_xTi_yZn_zA_a$ just needs to be contained, or two types or more of the alloys having different compositions may be used.

(2) Regarding mass% value of Si in alloy

The range of x of (2) in the above-described composition formula $Si_xTi_yZn_zA_a$, which is the mass % value of Si in the alloy having the formula, is preferably $38 \leq x < 100$, more preferably $38 \leq x \leq 72$, still more preferably $38 \leq x \leq 61$, particularly preferably $47 \leq x \leq 53$ (refer to Table 3 and FIGS. 17 to 21). This is because the capacity can be increased as the numeric value of the mass% value (value of x) of the high capacity element Si in the alloy is higher, and if the range is $38 \leq x < 100$, it is possible to realize the remarkably high capacity (690 mAh/g or more) unrealizable by the existing carbon-based negative electrode active materials. Reasons for the above continue below. In a similar way, an alloy with a high capacity equal to or more than that of the existing Sn-based negative electrode active material can be obtained (refer FIG. 17 and FIG. 18). Moreover, if the range is $38 \leq x < 100$, then the alloy is excellent also in the 50th-cycle discharge capacity retention rate (cycle durability) (refer to Table 3 and FIGS. 16 to 18). Meanwhile, in comparison with the ternary alloy represented by the composition formula $Si_xTi_yZn_z$, the binary alloy (Si-Zn alloy with y = 0 or Si-Ti-based alloy with z = 0), which does not contain either of the additional metal elements (Ti, Zn) to the high capacity element Si, cannot maintain the high cycle characteristics. In particular, the binary alloy cannot sufficiently maintain the high discharge capacity retention rate in the 50th cycle (refer to Comparative reference examples 28 to 36 of Table 3 and FIG. 16), and there occurs a large problem that the cycle characteristics are rapidly lowered (deteriorated). Moreover, in the case of x = 100 (in the case of pure Si that does not contain the additional metal elements Ti and Zn to Si), the capacity increase and the cycle durability are in the tradeoff relationship, and it is understood that the cycle durability cannot be enhanced while exhibiting the high capacity. That is to say, Si as the high capacity element is only used, and accordingly, though the highest capacity is achieved, the deterioration as the negative electrode active material is significant due to the expansion/contraction phenomenon of Si, which follows the charge/discharge, and it is understood that only the worst and remarkably low discharge capacity retention rate (only 47%) is obtained (refer to Comparative reference example 34 of Table 3 and FIG. 16).

As the mass% value (value of x) of the high capacity element Si in the alloy, from a viewpoint of providing the negative electrode active material that exhibits the well-balanced characteristics having the high initial capacity while maintaining the high cycle characteristics (particularly, high discharge capacity retention rate in the 50th cycle), preferably, a range of $38 \leq x \leq 72$ is desirable. In addition, in a case where the composition ratio of Ti as the first additional element to be described later and Zn as the second additional element to be described later is appropriate, then the Si alloy negative electrode active material having good characteristics (characteristics excellent in the capacity increase and the cycle durability, which have been in the tradeoff relationship in the existing alloy-based negative electrode active material) can be provided (refer to Comparative reference examples 45 to 56 of Comparative reference example C in Table 3 and FIG. 19). That is to say, while the cycle durability tends to be lowered though the capacity can be increased as the numeric value of the mass% value (value of x) of the high capacity element Si in the alloy is higher, if the value of x is within the range of $38 \leq x \leq 72$, then this is preferable since the capacity can be increased (690 mAh/g or more), and in addition, the high discharge capacity retention rate (87% or more) can be maintained (refer to Comparative reference examples 45 to 56 of Comparative reference example C in Table 3 and to FIG. 19).

As the mass% value (value of x) of the high capacity element Si in the alloy, from a viewpoint of providing the negative electrode active material that exhibits the well-balanced characteristics having the high initial capacity while maintaining the higher cycle characteristics (higher discharge capacity retention rate), more preferably, a range of $38 \leq x \leq 61$ can be said to be more desirable. In addition, in the case where the ratio of Ti as the first additional element to be described later and Zn as the second additional element to be described later is appropriate, then the Si alloy negative electrode active material having better characteristics can be provided (refer to Table 3 and the inside surrounded by the bold solid line of FIG. 20). That is to say, if the value of x is within the more preferable range of $38 \leq x \leq 61$, then this is excellent since the higher discharge capacity retention rate (90% or more) in the 50th cycle can be maintained as well as the capacity increase (690 mAh/g or more) can be achieved (refer to Table 3 and the inside surrounded by the bold solid line of FIG. 20).

As the mass% value (value of x) of the high capacity element Si in the alloy, from a viewpoint of providing the negative electrode active material that exhibits the well-balanced characteristics having the high initial capacity while maintaining the particularly high cycle characteristics (particularly high discharge capacity retention rate), particularly preferably, a range of $47 \leq x \leq 53$ can be said to be particularly desirable. In addition, in the case where the ratio of Ti as the first additional element to be described later and Zn as the second additional element to be described later is appropriate, then the high-performance Si alloy negative electrode active material having best characteristics can be provided (refer to Table 3 and the inside surrounded by the bold solid line of FIG. 21). That is to say, if the value of x is within the particularly preferable range of $47 \leq x \leq 53$, then this is particularly excellent since the particularly high discharge capacity retention rate (95% or more) in the 50th cycle can be maintained as well as the capacity increase (1129 mAh/g or more) can be achieved (refer to Table 3 and the inside surrounded by the bold solid line of FIG. 21).

Here, in the case of $x \geq 38$, and particularly, $x \geq 47$, it is possible to achieve a range within which a content ratio (balance) among the Si material (value of x) having an initial capacity of no less than 3200 mAh/g, the first additional element Ti (value of y), and the second additional element Zn (value of z) is optimum (refer to the range surrounded by the bold solid line in each of FIGS. 17 to 21). Therefore, the negative electrode active material is excellent in the points of being capable of developing best characteristics, and of maintaining such a capacity increase with a level of usage for the vehicle stably and safely for a long period. Meanwhile, in the case of $x \leq 72$, particularly $x \leq 61$, and especially $x \leq 53$, the content ratio (balance) among the high capacity Si material having an initial capacity of no less than 3200 mAh/g, Ti as the first additional element and Zn as the second additional element can take the optimum range (refer to the range surrounded by the bold solid line in each of FIGS. 17 to 21). Therefore, in an event of alloying Si ad Li, the amorphous-crystal phase transition can be remarkably suppressed, and the cycle lifetime can be enhanced largely. That is to say, as the discharge capacity retention rate in the 50th cycle, 87% or more, particularly 90% or more, and especially 96% or more can be realized. However, even if x goes out of the above-described optimum range ($38 \leq x \leq 72$, particularly $38 \leq x \leq 61$, and especially $47 \leq x \leq 53$), if x stays within a range within which the above-described functions and effects can be developed effectively, then, needless to say, this range of x is incorporated.

Moreover, in Examples of Patent Literature 1 described above, it is disclosed that a deterioration phenomenon of the cycle characteristics, which is caused by considerable lowering of the capacity, is already observed in only approximately 5 to 6 cycles. That is to say, in Examples of Patent Literature 1, the discharge capacity retention rate in the 5th or 6th cycle is already lowered to 90 to 95%, and the discharge capacity retention rate in the 50th cycle will be lowered to approximately 50 to 0%. Meanwhile, such a combination of the first additional element Ti and the second additional element Zn, which are to be added to the high capacity Si material and have a mutually complementary relationship, is able to be selected through so-called many trials and errors, and in addition, through excessive experiments using combinations of a variety of additional (metal and nonmetal) elements. Then, in the combinations, the content of the high capacity Si material is further set within the optimum range described above, whereby the negative electrode active material is also excellent in the point of being capable of largely reducing the decrease of the discharge capacity retention rate in the 50th cycle as well as achieving the capacity increase. That is to say, in the event of alloying Si and Li, the transition from the amorphous state to the crystal state can be suppressed due to a remarkably significant synergism (effect) by the optimum ranges of the first additional element Ti and the second additional element Zn in the mutually complementary relationship with Ti, and the large volume change can be prevented. Furthermore, the negative electrode active material is also excellent in the point of being capable of enhancing the high cycle durability of the electrode while exhibiting a high capacity (refer to Table 3 and FIGS. 17 to 21).

(3) Regarding mass% value of Ti in alloy

The range of y of (3) in the above-described composition formula $Si_xTi_yZn_zA_a$, which is the mass % value of Ti in the alloy having the formula, is preferably $0 < y < 62$, more preferably $0 < y \leq 42$, still more preferably $8 \leq y \leq 42$, particularly preferably $19 \leq y \leq 42$, especially preferably $19 \leq y \leq 21$. If the numeric value of the mass% value (value of y) of the first additional element Ti in the alloy is within a range of $0 < y < 62$, then the amorphous-crystal phase transition of the high capacity Si material can be suppressed effectively by the characteristics (further, by the synergic characteristics with Zn) inherent in Ti. As a result, an excellent effect can be developed on the cycle lifetime (cycle durability), particularly, on the high discharge capacity retention rate (87% or more) in the 50th cycle (refer to Table 3 and FIG. 17). Moreover, the numeric value of the content x of the high capacity Si material can be maintained at a certain level or more ($38 \leq x < 100$), and the remarkably high capacity increase, which is unrealizable by the existing carbon-based negative electrode active material, can be realized. In a similar way, an alloy with the high capacity (initial capacity of 690 mAh/g or more) similar to or more than the existing Sn-based alloy negative electrode active material can be obtained (refer to Table 3 and FIG. 17). Meanwhile, in comparison with the ternary alloy represented by the composition formula $Si_xTi_yZn_z(A_a)$ the binary alloy (particularly Si-Zn alloy with y = 0), which does not contain either of the additional metal elements (Ti, Zn) to the high capacity element Si, cannot maintain the high cycle characteristics. In particular, the binary alloy cannot sufficiently maintain the high discharge capacity retention rate in the 50th cycle (refer to Comparative reference examples 28 to 40 of Table 3 and FIG. 16), and there occurs a large problem that the cycle characteristics are rapidly lowered (deteriorated). Moreover, in the case of y < 62, then the characteristics as the negative electrode active material can be developed sufficiently, and accordingly, this range of the value of y can contribute to the development of the high capacity and the high cycle durability.

As the mass% value (value of y) of the first additional element Ti in the alloy, from the viewpoint of providing the negative electrode active material that exhibits the well-balanced characteristics having the high initial capacity while maintaining the high cycle characteristics (particularly, high discharge capacity retention rate in the 50th cycle), preferably, a range of $0 < y \leq 42$ is desirable. In the event of the Li alloying, in the case where the content ratio of the first additional element Ti having the function and effect of suppressing the amorphous-crystal phase transition and enhancing the cycle lifetime is appropriate, then the Si alloy negative electrode active material having the good characteristics can be provided (refer to Table 3 and a composition range surrounded by a bold solid line of FIG. 18). That is to say, if the numeric value of the mass% value (value of y) of the first additional element Ti in the alloy is within the range of $0 < y \leq 42$, then in the event of the alloying, the function and effect of suppressing the amorphous-crystal phase transition and enhancing the cycle lifetime can be developed effectively, the high discharge capacity retention rate (87% or more) in the 50th cycle can be maintained, and this is preferable (refer to Table 3 and FIG. 18). In this case, a composition range (particularly, Ti content of $0 < y \leq 42$), which was actually able to realize the capacity increase in Comparative reference examples 45 to 56 of Comparative reference example C, is selected (pentagon surrounded by a bold solid line in FIG. 18). The above-described composition range, particularly, the Ti content of $0 < y \leq 42$ is selected, whereby a Si alloy negative electrode active material can be provided, which realizes remarkably excellent cycle durability (discharge capacity retention rate of 87% or more) in comparison with the Sn-based negative electrode active material and the multinary alloy negative electrode active material described in Patent Literature 1 (refer to Table 3 and FIG. 18).

As the mass% value (value of y) of the first additional element Ti in the alloy, from the viewpoint of providing the negative electrode active material that exhibits the well-balanced characteristics having the high initial capacity while maintaining the high cycle characteristics (high discharge capacity retention rate in the 50th cycle), more preferably, a range of $8 \leq y \leq 42$ can be said to be desirable. In the event of the Li alloying, in the case where the content ratio of the first additional element Ti having the function and effect of suppressing the amorphous-crystal phase transition and enhancing the cycle lifetime is appropriate, then the Si alloy negative electrode active material having the good characteristics can be provided (refer to Table 3 and FIG. 19). That is to say, if the numeric value of the mass% value (value of y) of the first additional element Ti in the alloy is within the more preferable range of $8 \leq y \leq 42$, then in the event of the alloying, the effect of suppressing the amorphous-crystal phase transition and enhancing the cycle lifetime can be developed effectively, and the high discharge capacity retention rate of 87% or more in the 50th cycle can be maintained (refer to Table 3 and FIG. 19). Particularly in this case, a composition range (particularly, Ti content of $8 \leq y \leq 42$), which

was able to realize the capacity increase and the high discharge capacity retention rate of 87% or more in the 50th cycle in Comparative reference examples 45 to 56 of Comparative reference example C, is selected (hexagon surrounded by a bold solid line in FIG. 19). The above-described composition range, particularly, the Ti content of $8 \leq y \leq 42$ is selected, whereby a Si alloy negative electrode active material can be provided, which realizes remarkably excellent cycle durability (high discharge capacity retention rate) in comparison with the Sn-based negative electrode active material and the multinary alloy negative electrode active material described in Patent Literature 1 as well as the capacity increase.

As the mass% value (value of y) of the first additional element Ti in the alloy, from the viewpoint of providing the negative electrode active material that exhibits the extremely well-balanced characteristics having the high initial capacity while maintaining the higher cycle characteristics (high discharge capacity retention rate in the 50th cycle), particularly preferably, a range of $19 \leq y \leq 42$ is desirable. In the event of the Li alloying, in the case where the content ratio of the first additional element Ti having the function and effect of suppressing the amorphous-crystal phase transition and enhancing the cycle lifetime is more appropriate, then the Si alloy negative electrode active material having the better characteristics can be provided (refer to Table 3 and FIG. 20). That is to say, if the numeric value of the mass% value (value of y) of the first additional element Ti in the alloy is within the particularly preferable range of $19 \leq y \leq 42$, then in the event of the alloying, the effect of suppressing the amorphous-crystal phase transition and enhancing the cycle lifetime can be developed more effectively, and the high discharge capacity retention rate of 90% or more in the 50th cycle can be maintained (refer to Table 3 and FIG. 20). Particularly in this case, a composition range (particularly, Ti content of $19 \leq y \leq 42$), which was able to realize the capacity increase and the high discharge capacity retention rate of 90% or more in the 50th cycle in Comparative reference examples 45 to 56 of Comparative reference example C, is selected (small hexagon surrounded by a bold solid line in FIG. 20). The above-described composition range, particularly, the Ti content of $19 \leq y \leq 42$ is selected, whereby a Si alloy negative electrode active material can be provided, which realizes remarkably excellent cycle durability (higher discharge capacity retention rate) in comparison with the Sn-based negative electrode active material and the multinary alloy negative electrode active material described in Patent Literature 1 as well as the capacity increase.

As the mass% value (value of y) of the first additional element Ti in the alloy, from the viewpoint of providing the negative electrode active material that exhibits best-balanced characteristics having the higher initial capacity while maintaining the higher cycle characteristics (high discharge capacity retention rate in the 50th cycle), especially preferably, a range of $19 \leq y \leq 21$ is desirable. In the event of the Li alloying, in the case where the content ratio of the first additional element Ti having the function and effect of suppressing the amorphous-crystal phase transition and enhancing the cycle lifetime is most appropriate, then the Si alloy negative electrode active material having the best characteristics can be provided (refer to Table 3 and FIG. 21). That is to say, if the numeric value of the mass% value (value of y) of the first additional element Ti in the alloy is within the particularly preferable range of $19 \leq y \leq 21$, then in the event of the alloying, the effect of suppressing the amorphous-crystal phase transition and enhancing the cycle lifetime can be developed more effectively, and the high discharge capacity retention rate of 96% or more in the 50th cycle can be maintained (refer to Table 3 and FIG. 21). Particularly in this case, a composition range (particularly, Ti content of $19 \leq y \leq 21$), which was able to realize a much more capacity increase and the high discharge capacity retention rate of 96% or more in the 50th cycle in Comparative reference examples 45 to 56 of Comparative reference example C, is selected (small quadrangle surrounded by a bold solid line in FIG. 21). The above-described composition range, particularly, the Ti content of $19 \leq y \leq 21$ is selected, whereby the Si alloy negative electrode active material can be provided, which realizes the remarkably excellent cycle durability (higher discharge capacity retention rate) in comparison with the Sn-based negative electrode active material and the multinary alloy negative electrode active material described in Patent Literature 1 as well as the capacity increase.

Here, in the case of $y \geq 8$, and particularly, $y \geq 19$, it is possible to achieve a range within which a content ratio (balance) between the high capacity Si material having an initial capacity of no less than 3200 mAh/g and the first additional element Ti (further, the residual second additional element Zn) is optimum (refer to the range surrounded by the bold solid line in each of FIGS. 19 to 21). Therefore, it is possible to achieve the characteristics (further, the synergistic characteristics with Zn) inherent in Ti, which effectively suppress the amorphous-crystal phase transition of the Si material, and remarkably enhance the cycle lifetime (particularly, the discharge capacity retention rate). That is to say, as the discharge capacity retention rate in the 50th cycle, 87% or more, particularly 90% or more, and especially 96% or more can be realized. As a result, the negative electrode active material (negative electrode) is excellent in the points of being capable of developing the best characteristics, and of maintaining the capacity increase with the level of usage for the vehicle stably and safely for a long period. Meanwhile, in the case of $y \leq 42$, and particularly $y \leq 21$, the content ratio (balance) between the high capacity Si material having an initial capacity of no less than approximately 3200 mAh/g and Ti as the first additional element (and further, Zn as the second additional element) can take the optimum range (refer to the range surrounded by the bold solid line in each of FIGS. 18 to 21). Therefore, in the event of alloying Si and Li, the amorphous-crystal phase transition can be remarkably suppressed, and the cycle lifetime can be enhanced largely. That is to say, as the discharge capacity retention rate in the 50th cycle, 87% or more, particularly 90% or more, and especially 96% or more can be realized. However, even if y goes out of the above-described optimum range ($8 \leq$

$y \leq 42$, particularly $19 \leq y \leq 42$, and especially $19 \leq y \leq 21$), if y stays within a range within which the above-described functions and effects can be developed effectively, then, needless to say, this range of y is incorporated.

Moreover, in Examples of Patent Literature 1 described above, it is disclosed that a deterioration phenomenon of the cycle characteristics, which is caused by considerable lowering of the capacity, is already observed in only approximately 5 to 6 cycles. That is to say, in Examples of Patent Literature 1, the discharge capacity retention rate in the 5th or 6th cycle is already lowered to 90 to 95%, and the discharge capacity retention rate in the 50th cycle will be lowered to approximately 50 to 0%. Meanwhile, with regard to Ti as the first additional element to the high capacity Si material (further, such a combination thereof with Zn as the second additional element in a mutually complementary relationship), only one type of Ti concerned or only one type of the combination is able to be selected through so-called many trials and errors, and in addition, through excessive experiments using combinations of a variety of additional (metal and nonmetal) elements. Then, in the combination, the content of Ti is further set within the optimum range described above, whereby the negative electrode active material is also excellent in the point of being capable of largely reducing the decrease of the discharge capacity retention rate in the 50th cycle. That is to say, in the event of alloying Si and Li, the transition from the amorphous state to the crystal state can be suppressed due to a remarkably significant synergism (effect) by the optimum range of the first additional element Ti (further, the second additional element Zn in the mutually complementary relationship with Ti), and the large volume change can be prevented. Furthermore, the negative electrode active material is also excellent in the point of being capable of enhancing the high cycle durability of the electrode while exhibiting a high capacity (refer to Table 3 and FIGS. 17 to 21).

(4) Regarding mass% value of Zn in alloy

The range of z of (4) in the above-described composition formula $Si_xTi_yZn_zA_a$, which is the mass % value of Zn in the alloy having the formula, is preferably $0 < z < 62$, more preferably $0 < z \leq 39$, still more preferably $12 \leq z \leq 39$, particularly preferably $12 \leq z \leq 35$, especially preferably $26 \leq z \leq 35$. If the numeric value of the mass% value (value of z) of the second additional element Zn, in which a capacity of the electrode is not decreased even if a concentration of the first additional element is increased, in the alloy is within a range of $0 < z < 62$, then the amorphous-crystal phase transition of the high capacity Si material can be suppressed effectively by the characteristics (by the synergic characteristics with Zn) inherent in Ti. As a result, an excellent effect can be developed on the cycle lifetime (cycle durability), particularly, on the high discharge capacity retention rate (87% or more) in the 50th cycle (refer to Table 3 and FIG. 17). Moreover, the numeric value of the content x of the high capacity Si material can be maintained at a certain level or more ($38 \leq x < 100$), the remarkably high capacity increase can be achieved in comparison with the existing carbon-based negative electrode active material, and an alloy with such a high capacity similar to or more than the Sn-based alloy negative electrode active material can be obtained (refer to FIG. 17). Meanwhile, in comparison, the binary alloy (particularly Si-Ti alloy with z = 0), which does not contain either of the additional metal elements (Ti, Zn) to Si in the ternary alloy represented by the composition formula $Si_xTi_yZn_z(A_a)$, cannot maintain the high cycle characteristics. In particular, the binary alloy cannot sufficiently maintain the high discharge capacity retention rate in the 50th cycle (refer to Comparative reference examples 28 to 40 of Table 3 and FIG. 16), and there occurs a large problem that the cycle characteristics are rapidly lowered (deteriorated). Moreover, in the case of z < 62, then the characteristics as the negative electrode active material can be developed sufficiently, and accordingly, this range of the value of z can contribute to the development of the high capacity and the high cycle durability.

As the mass% value (value of z) of the second additional element Zn in the alloy, from the viewpoint of providing the negative electrode active material that exhibits the well-balanced characteristics having the high initial capacity while maintaining the high cycle characteristics (particularly, high discharge capacity retention rate in the 50th cycle), preferably, a range of $0 < z \leq 39$ is desirable. It is extremely important and useful to select, in the event of the Li alloying, the first additional element Ti that suppresses the amorphous-crystal phase transition and enhances the cycle lifetime and the second additional element Zn in which the capacity of the negative electrode active material (negative electrode) is not decreased even if the concentration of the first additional element is increased. It was found out that, by the first and second additional elements, a significant difference in the function and effect is observed from those of the ternary alloy and the quaternary or more alloys, which have been heretofore known in public, for example, as described in Patent Literature 1 and the like, and further, from those of the binary alloy such as the Si-Ti-based alloy and the Si-Zn-based alloy. In the case where the content ratio of such a second additional element Zn (further, the first additional element Ti in the mutually complementary relationship with Zn) is appropriate, then the Si alloy negative electrode active material having the good characteristics can be provided (refer to Table 3 and a composition range surrounded by the bold solid line of FIG. 18). That is to say, if the numeric value of the mass% value (value of z) of the second additional element Zn in the alloy is within the preferable range of $0 < y \leq 39$, then in the event of the alloying, the function and effect of suppressing the amorphous-crystal phase transition and enhancing the cycle lifetime can be developed by a synergistic effect (mutually complementary characteristics) with the first additional element Ti. As a result, the high discharge capacity retention rate (87% or more) in the 50th cycle can be maintained (refer to Table 3 and FIG. 18). In this case, a composition range (particularly, Zn content of $0 < y \leq 39$), which was actually able to realize the capacity increase in Comparative reference examples 45 to 56 of Comparative Reference example C, is selected (pentagon surrounded by the bold solid line in FIG. 18). The above-described composition range, particularly, the Zn content of $0 < y \leq 39$ is selected, whereby the remarkably excellent cycle durability can be achieved in comparison with the Sn-based negative electrode active material and the multinary alloy negativerelectrode active material described in Patent Literature 1 by the synergistic effect (mutually complementary characteristics) with the first additional element Ti. As a result, such a Si alloy negative electrode active material, which realizes the discharge capacity retention rate of 87% or more in the 50th cycle, can be provided (refer to Table 3 and the composition range surrounded by the bold solid line of FIG. 18).

As the mass% value (value of z) of the second additional element Zn in the alloy, from the viewpoint of providing the negative electrode active material that exhibits the well-balanced characteristics having the high initial capacity while maintaining the higher cycle characteristics by the synergistic effect (mutually complementary characteristics) with the first additional element Ti, more preferably, a range of $12 \leq z \leq 39$ is desirable. This is because, in the event of the Li alloying, in the case where the content ratio of the second additional element Zn, which can exert the effect of suppressing the amorphous-crystal phase transition and enhancing the cycle lifetime by the synergistic effect (mutually complementary characteristics) with Ti, is appropriate, then the Si alloy negative electrode active material having the good characteristics can be provided. That is to say, if the numeric value of the mass% value (value of z) of the second additional element Zn in the alloy is within the more preferable range of $12 \leq z \leq 39$, then in the event of the alloying, the effect of suppressing the amorphous-crystal phase transition and enhancing the cycle lifetime can be developed effectively by the synergistic effect (mutually complementary characteristics) with the first additional element. As a result, the high discharge capacity retention rate of 87% or more in the 50th cycle can be maintained (refer to Table 3 and FIG. 19). Particularly in this case, a composition range (particularly, Zn content of $12 \leq y \leq 39$), which was able to realize the capacity increase and the high discharge capacity retention rate of 87% or more in the 50th cycle in Comparative reference examples 45 to 56 of Comparative reference example C, is selected (hexagon surrounded by the bold solid line in FIG. 19). The above-described composition range, particularly, the Zn content of $12 \leq z \leq 39$ is selected, whereby a Si alloy negative electrode active material can be provided, which realizes remarkably excellent cycle durability by the synergistic characteristics with Ti in comparison with the Sn-based negative electrode active material and the multinary alloy negative electrode active material described in Patent Literature 1 as well as the capacity increase.

As the mass% value (value of z) of the second additional element Zn in the alloy, from the viewpoint of providing the negative electrode active material that exhibits the extremely well-balanced characteristics having the high initial capacity while maintaining the higher cycle characteristics (higher discharge capacity retention rate in the 50th cycle), particularly preferably, a range of $12 \leq z \leq 35$ is desirable. This is because, in the event of the Li alloying, in the case where the content ratio of the second additional element Zn, which can exert the effect of suppressing the amorphous-crystal phase transition and enhancing the cycle lifetime by the synergistic effect (mutually complementary characteristics) with Ti, is more appropriate, then the Si alloy negative electrode active material having the better characteristics can be provided. That is to say, if the numeric value of the mass% value (value of z) of the second additional element Zn in the alloy is within the particularly preferable range of $12 \leq z \leq 35$, then in the event of the alloying, the effect of suppressing the amorphous-crystal phase transition and enhancing the cycle lifetime can be developed effectively by the synergistic effect (mutually complementary characteristics) with Ti. As a result, the higher discharge capacity retention rate of 90% or more in the 50th cycle can be maintained (refer to Table 3 and FIG. 20). Particularly in this case, a composition range (particularly, Zn content of $12 \leq z \leq 35$), which was able to realize the capacity increase and the high discharge capacity retention rate of 90% or more in the 50th cycle in Comparative reference examples 45 to 56 of Comparative reference example C, is selected (small hexagon surrounded by the bold solid line in FIG. 20). The above-described composition range, particularly, the Zn content of $12 \leq y \leq 35$ is selected, whereby a Si alloy negative electrode active material can be provided, which realizes remarkably excellent cycle durability by the synergistic characteristics with Ti in comparison with the Sn-based negative electrode active material and the multinary alloy negative electrode active material described in Patent Literature 1 as well as the capacity increase.

As the mass% value (value of z) of the second additional element Zn in the alloy, from the viewpoint of providing the negative electrode active material that exhibits the best-balanced characteristics having the high initial capacity while maintaining the higher cycle characteristics (higher discharge capacity retention rate in the 50th cycle), especially preferably, a range of $26 \leq z \leq 35$ is desirable. This is because, in the event of the Li alloying, in the case where the content ratio of the second additional element Zn, which can exert the effect of suppressing the amorphous-crystal phase transition and enhancing the cycle lifetime by the synergistic effect (mutually complementary characteristics) with Ti, is most appropriate, then the Si alloy negative electrode active material having the best characteristics can be provided. That is to say, if the numeric value of the mass% value (value of z) of the second additional element Zn in the alloy is within the especially preferable range of $26 \leq z \leq 35$, then in the event of the alloying, the effect of suppressing the amorphous-crystal phase transition and enhancing the cycle lifetime can be developed more effectively by the synergistic effect (mutually complementary characteristics) with Ti. As a result, the much higher discharge capacity retention rate of 96% or more in the 50th cycle can be maintained (refer to Table 3 and FIG. 21). Particularly in this case, a composition range (particularly, Zn content of $26 \leq z \leq 35$), which was able to realize the much more capacity increase and the high discharge capacity retention rate of 96% or more in the 50th cycle in Comparative reference examples 45 to 56 of Comparative reference example C, is selected (quadrangle surrounded by the bold solid line in FIG. 21). The above-described composition range, particularly, the Zn content of $26 \leq z \leq 35$ is selected, whereby a Si alloy negative electrode active material can be provided, which realizes remarkably excellent cycle durability by the synergistic characteristics with Ti in comparison with the Sn-based negative electrode active material and the multinary alloy negative electrode active material described in Patent Literature 1 as well as the capacity increase.

Here, in the case of $z \geq 12$, and particularly, $z \geq 26$, it is possible to achieve a range within which a content ratio (balance) among the high capacity Si material having an initial capacity of no less than 3200 mAh/g, the first additional element Ti and the further second additional element Zn is optimum (refer to the range surrounded by the bold solid line in each of FIGS. 19 to 21). Therefore, it is possible to achieve the characteristics (synergistic effect with Ti; mutually complementary characteristics) inherent in Zn, which effectively suppress the decrease of the capacity as the negative electrode active material (negative electrode) even if the concentration of Ti capable of suppressing the amorphous-crystal phase transition is increased, and remarkably enhance the cycle lifetime (particularly, the discharge capacity retention rate). That is to say, as the discharge capacity retention rate in the 50th cycle, 87% or more, particularly 90% or more, and especially 96% or more can be realized. As a result, the negative electrode active material (negative electrode) is excellent in the points of being capable of developing the best characteristics, and of maintaining the capacity increase with the level of usage for the vehicle stably and safely for a long period. Meanwhile, in the case of $z \leq 39$, and particularly $z \leq 35$, the content ratio (balance) among the high capacity Si material having an initial capacity of no less than approximately 3200 mAh/g, the first additional element Ti and the second additional element Zn can take the optimum range (refer to the range surrounded by the bold solid line in each of FIGS. 18 to 21). Therefore, in the event of alloying Si ad Li, the amorphous-crystal phase transition can be remarkably suppressed, and further, the cycle lifetime (particularly, the discharge capacity retention rate in the 50th cycle) can be enhanced largely. That is to say, as the discharge capacity retention rate in the 50th cycle, 87% or more, particularly 90% or more, and especially 96% or more can be realized. However, even if z goes out of the above-described optimum range ($12 \leq z \leq 39$, particularly $12 \leq z \leq 35$, and especially $26 \leq z \leq 35$), if z stays within a range within which the above-described functions and effects can be developed effectively, then, needless to say, this range of z is incorporated.

Moreover, in Examples of Patent Literature 1 described above, it is disclosed that a deterioration phenomenon of the cycle characteristics, which is caused by considerable lowering of the capacity, is already observed in only approximately 5 to 6 cycles. That is to say, in Examples of Patent Literature 1, the discharge capacity retention rate in the 5th or 6th cycle is already lowered to 90 to 95%, and the discharge capacity retention rate in the 50th cycle will be lowered to approximately 50 to 0%. Meanwhile, with regard to such combinations of the first additional element Ti and the second additional element Zn to the high capacity Si material, which are in the mutually complementary relationship, only one type of the combination is able to be selected through so-called many trials and errors, and in addition, through excessive experiments using combinations of various types of additional (metal and nonmetal) elements. Then, in the combination, the content of Zn is further set within the optimum range described above, whereby the negative electrode active material is also excellent in the point of being capable of largely reducing the decrease of the discharge capacity retention rate in the 50th cycle. That is to say, in the event of alloying Si and Li, the transition from the amorphous state to the crystal state can be suppressed due to a remarkably significant synergism (effect) by the optimum range of the second additional element Zn (further, the first additional element Ti in the mutually complementary relationship with Zn), and the large volume change can be prevented. Furthermore, the negative electrode active material is also excellent in the point of being capable of enhancing the high cycle durability of the electrode while exhibiting a high capacity.

(5) Regarding mass% value of A in alloy

The range of a of (5) in the above-described composition formula $Si_xTi_yZn_zA_a$, which is the mass % value of A in the alloy having the formula, is $0 \leq a < 0.5$, preferably $0 < x < 0.1$. As mentioned above, A is one that is present in the raw materials in the Si alloy or is inevitably mixed in the manufacturing process of the Si alloy, and is originally unnecessary; however, the amount thereof is trace, and the characteristics of the Si alloy are not affected thereby, and accordingly, the inevitable impurities are permitted to be contained in the alloy.

(Mean particle diameter of Si alloy)

A mean particle diameter of the above-described Si alloy just needs to be substantially the same as a mean particle diameter of the negative electrode active material contained in the existing negative electrode active material layer 15, and is not particularly limited. The mean particle diameter just needs to preferably range from 1 to 20 $\mu m$ from the viewpoint of the output enhancement. However, the mean particle diameter is never limited to the range as described above, and may go out of this range as long as the functions and effects of this embodiment can be developed effectively.

Note that a shape of the Si alloy is not particularly limited, and can be spherical, ellipsoidal, columnar, polygonal columnar, scale-like, and so on.

(Manufacturing method of alloy)

A manufacturing method of the alloy according to this embodiment, which has the compositional formula $Si_x$-$Ti_yM_z$, is not particularly limited, and can be produced by using a variety of manufacturing heretofore known in public. That is to say, there is hardly a difference in alloy state/characteristics, which may be caused depending on the manufacturing method, and accordingly, every manufacturing method can be applied.

Specifically, for example, as a manufacturing method of a particle form of the alloy having the compositional formula $Si_xTi_yM_z$, for example, a mechanical alloy method, an arc plasma fusion method and the like can be used.

In the method of manufacturing the Si alloy into the above-described form of the particles, a binder, an electrically-conductive auxiliary agent and a viscosity control solvent are added to the particles, and slurry is adjusted, whereby a slurry electrode can be formed by using the slurry concerned. Therefore, it is easy to realize mass production of the Si alloy, and the Si alloy is excellent in that it is easy to put into practical use as an actual electrode for the battery.

The description has been made above of the predetermined Si alloy essentially contained in the negative electrode active material layer; however, the negative electrode active material layer may contain other negative electrode active materials. As the other negative electrode active materials of the above-described predetermined alloy, there are mentioned: a carbon-based material including carbon such as natural graphite, artificial graphite, carbon black, activated carbon, carbon fiber, coke, soft carbon and hard carbon; pure metal such as Si and Sn; an alloy-based active material that goes out of the above-described predetermined composition ratio; or a metal oxide such as TiO, $Ti_2O_3$ and $TiO_2$ and $SiO_2$, SiO and $SnO_2$; a lithium-transition metal composite oxide such as $Li_{4/3}Ti_{5/3}O_4$ and $Li_7MnN$; a Li-Pb-based alloy; a Li-Al-based alloy; Li; and the like. However, from a viewpoint of sufficiently exerting the functions and the effects, which are expressed by using the above-described predetermined Si alloy as the negative electrode active material, a content of the above-described predetermined Si alloy, which occupies a total 100 mass% of the negative electrode active material, is preferably 50 to 100 mass%, more preferably 80 to 100 mass%, still more preferably 90 to 100 mass%, particularly preferably 95 to 100 mass%, most preferably 100 mass%.

A carbon-based material, which is suitable in a combination with the above-described Si alloy, is described as an aspect of this embodiment.

(Carbon-based material)

In an aspect of this embodiment, as the negative electrode active material, a carbon-based material is further contained in addition to the above-described ternary Si-Ti-M-based Si alloy.

The carbon-based material for use in this embodiment is not particularly limited not particularly limited; however, there are mentioned carbon materials such as: graphite that is high crystalline carbon such as natural graphite and artificial graphite; low crystalline carbon such as soft carbon and hard carbon; carbon black such as Ketjen Black, acetylene black, channel black, lamp black, oil furnace black and thermal black; fullerene; carbon nanotube; carbon nanofiber; carbon nano-horn; and carbon fibril. Among them, graphite is preferably used.

In this embodiment, the negative electrode active material layer is formed in such a manner that the negative electrode active material is mixed with the carbon-based material together with the above-described Si alloy, and can thereby exhibit good-balance characteristics with a high initial capacity while maintaining higher cycle characteristics.

The above-described Si alloy is mixed with the carbon-based material, whereby it becomes possible to arrange the Si alloy in the negative electrode active material layer more uniformly. As a result, all pieces of the Si alloy in the negative electrode active material layer exhibit equivalent reactivity, and further enhancement of the cycle characteristics can be achieved.

Note that, as a result of mixture of the carbon-based material, the content of the Si alloy in the negative electrode active material layer is lowered, whereby the initial capacity may be lowered. However, the carbon-based material itself has reactivity with Li ions, and accordingly, a degree of the lowering of the initial capacity becomes relatively small. That is to say, in a case of using the Si alloy and the carbon-based material in combination, such an enhancement effect of the cycle characteristics is large in comparison with a lowering function of the initial capacity.

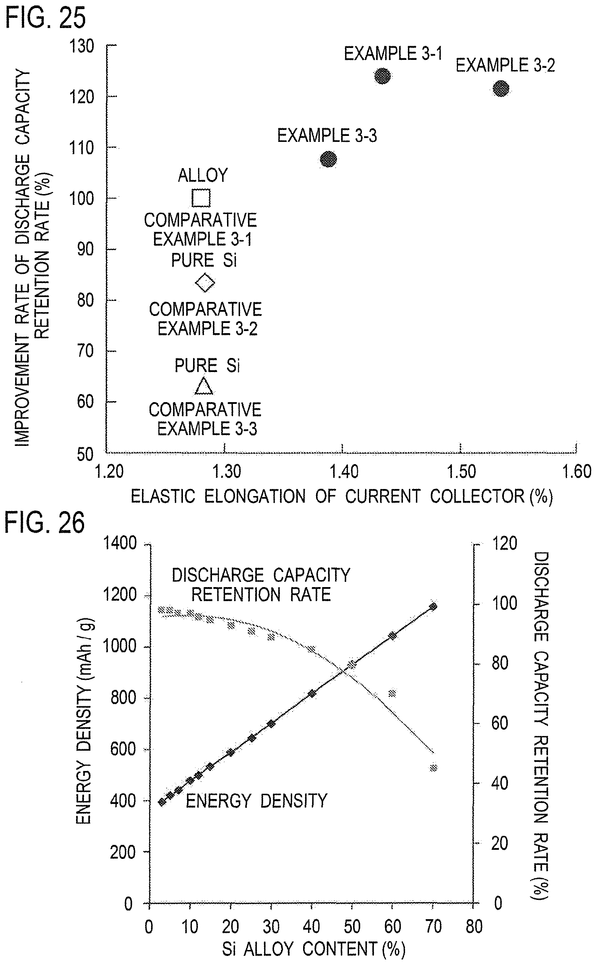

Moreover, in comparison with the Si alloy, the carbon-based material is less likely to cause the volume change in the event of reacting with the Li ions. Therefore, in the case of using the above-described Si alloy and the carbon-based material in combination, even in a case where the volume change of the Si alloy is large, an influence of the volume change of the negative electrode active material, which follows the Li reaction, can be made relatively slight when the whole of the negative electrode active material is viewed. Note that such an effect in the case of using the Si alloy and the carbon-based material in combination can also be understood from a result of an example where the cycle characteristics are increased as the content of the carbon-based material is larger (as the content of the Si alloy is smaller) (refer to Table 7 and FIG. 26).

Moreover, an electric power consumption (Wh) can be reduced by using the above-described Si alloy and the carbon-based material in combination. More specifically, a potential of the carbon-based material is relatively low in comparison with that of the Si alloy. As a result, in the case of using the above-described Si alloy and the carbon-based material in combination, such a relatively high potential which the Si alloy has can be reduced. Then, a potential of the whole of the negative electrode is lowered, and accordingly, the electric power consumption (Wh) can be reduced. Such functions and effects in the case of using the above-described Si alloy and the carbon-based material in combination are particularly advantageous in an event of using an electrical device, which is for use in a vehicle, among the electrical devices.

A shape of the carbon-based material is not particularly limited, and can be spherical, ellipsoidal, columnar, polygonal columnar, scale-like, and so on.

(Mean particle diameter of carbon-based material)

Moreover, a mean particle diameter of the carbon-based material is not particularly limited; however, is preferably 5 to 25 $\mu$m, more preferably 5 to 10 $\mu$m. In this event, with regard to comparison with the mean particle diameter of the above-mentioned Si alloy, the mean particle diameter of the carbon-based material may be the same as or different from the mean particle diameter of the Si alloy, however, preferably, is different therefrom. In particular, preferably, the mean particle diameter of the above-described alloy is smaller than the mean particle diameter of the above-described carbon-based material. If the mean particle diameter of the carbon-based material is relatively larger than the mean particle diameter of the alloy, then a configuration is provided, in which the particles of the carbon-based material are arranged uniformly, and the Si alloy is arranged between the particles of the carbon-based material. Accordingly, the Si alloy can be arranged uniformly in the negative electrode active material layer.

In the case of using the Si alloy and the carbon-based material in combination, a particle diameter ratio of the mean particle diameter of the carbon-based material and the mean particle diameter of the Si alloy (mean particle diameter of Si alloy / mean particle diameter of carbon-based material) is preferably 1/250 to less than 1, more preferably 1/100 to 1/4.

A mixture ratio of the Si alloy and the carbon-based material in the case of using the Si alloy and the carbon-based material in the negative electrode active material in combination is not particularly limited, and can be appropriately selected in response to a desired purpose and the like. In particular, preferably, the content of the Si alloy in the above-described negative electrode active material in the case of using the Si alloy and the carbon-based material in combination is 3 to 70 mass%. In an embodiment, more preferably, the content of the Si alloy in the above-described negative electrode active material in the case of using the Si alloy and the carbon-based material in combination is 30 to 50 mass%. Moreover, in another embodiment, more preferably, the content of the Si alloy in the above-described negative electrode active material in the case of using the Si alloy and the carbon-based material in combination is 50 to 70 mass%.

If the content of the above-described Si alloy in the above-described negative electrode active material in the case of using the Si alloy and the carbon-based material in combination is 3 mass% or more, then this is preferable since a high initial capacity can be obtained. Meanwhile, if the content of the above-described Si alloy is 70 mass% or less, then this is preferable since high cycle characteristics can be obtained.

(Manufacturing method of negative electrode active material)

The negative electrode active material is not particularly limited, and can be manufactured by a method known in public. In usual, the manufacturing method of the above-described Si alloy can be used for the negative electrode active material layer. Specifically, the Si alloy in the particle form is manufactured by using a mechanical alloy method, an arc plasma fusion method and the like, and thereafter, the carbon-based material (in the case of using the Si alloy and the carbon-based material in combination), the binder, the electrically-conductive auxiliary agent, and the viscosity control agent are added thereto to thereby prepare slurry, whereby a slurry electrode can be formed by using the slurry. In this event, in the case of using the Si alloy and the carbon-based material in combination, the amount of the Si alloy in the particle form and the amount of the carbon-based material are changed as appropriate, whereby such a negative electrode active material, in which the content of the Si alloy becomes a desired value, can be manufactured.

(Elongation of negative electrode active material layer)

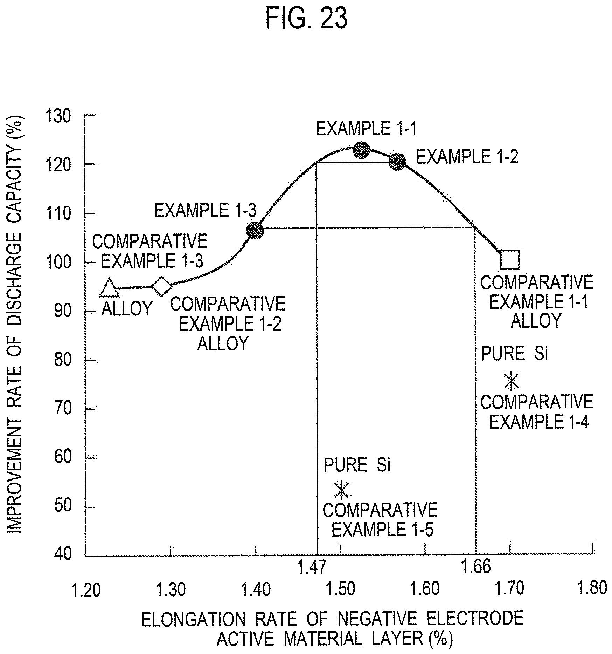

This embodiment is characterized in that the above-described ternary Si-Ti-M-based alloy is contained as the negative electrode active material, and the elongation ($\delta$) of the negative electrode active material layer is in the range of $1.29 < \delta < 1.70\%$. After the above-described ternary Si-Ti-M-based alloy is applied, the elongation ($\delta$) of the negative electrode active material layer is allowed to exceed 1.29%, whereby constituent elements of the electrode (negative electrode active material layer) other than the active material can follow the volume change caused by the expansion/contraction of the negative electrode active material, which is caused by the charge/discharge. As a result, the volume change of the whole of the electrode (negative electrode active material layer) can be suppressed, and the improvement rate of the discharge capacity can be enhanced to a large extent. Moreover, after the above-described ternary Si-Ti-M-based alloy is applied, the elongation ($\delta$) of the negative electrode active material layer is set at less than 1.70%, whereby the elongation of the negative electrode active material layer can be suppressed from inhibiting the reaction (insertion/elimination) of the lithium ions to the negative electrode active material, the reaction following the charge/discharge. As a result, a good negative electrode for a lithium ion secondary battery, which has high capacity/high cycle durability, is obtained. Moreover, by using the negative electrode for a lithium ion secondary battery, which is composed by using the negative electrode active material layer of this embodiment, a lithium ion secondary battery, which has high capacity/high cycle durability, and particularly, is excellent in improvement rate of the discharge capacity, is obtained. That is to say, in cases where, after the above-described ternary Si-Ti-M-based alloy is applied, the elongation ($\delta$) of the negative electrode active material layer is 1.29 or less and 1.70% or more, then as shown in FIG. 23, the improvement rate of the discharge capacity becomes insufficient. Moreover, in a case where pure Si with a high capacity (3200 mAh/g) is applied in place of the ternary Si-Ti-M-based alloy, even if the elongation ($\delta$) of the negative electrode active material layer is adjusted within the above-described range, the improvement rate of the discharge capacity is significantly lowered due to a large volume change (approximately four times) intrinsic to the pure Si (refer to Comparative examples 1-4 and 1-5 of FIG. 23).

After the above-described ternary Si-Ti-M-based alloy is applied, the elongation ($\delta$) of the negative electrode active material layer is preferably $1.40 \leq \delta < 1.70\%$, more preferably $1.40 \leq \delta < 1.66\%$, still more preferably $1.40 \leq \delta < 1.57\%$, particularly preferably $1.47 \leq \delta < 1.57\%$, more particularly preferably $1.53 \leq \delta < 1.57\%$. As the elongation ($\delta$) of the negative electrode active material layer is adjusted in the more suitable ranges described above more and more, a higher improvement rate of the discharge capacity can be achieved, and in this point, the negative electrode active material layer of this embodiment is excellent (refer to FIG. 23).

The elongation ($\delta$) of the negative electrode active material layer can be measured by a value measured in accordance with the tensile test method of JIS K 7163 (1994).

Means for adjusting the elongation ($\delta$) of the negative electrode active material layer within the above-described range is not particularly limited; however, just needs to be capable of appropriately adjusting types and contents of the electrically-conductive auxiliary agent, the binder and the like, and this can contribute to the elongation ($\delta$) of the negative electrode active material layer, among the components in the negative electrode active material layer. In particular, the compounding ratio of each of the components in the negative electrode active material layer has a range that is defined to be substantially optimum, and if the compounding ratio (contents) of the electrically-conductive auxiliary agent, the binder or the like is changed (varied) by daring to change this optimum range, then this may cause an apprehension that battery performance may be damaged. Therefore, desirably, in a state where the optimum range of the compounding ratio of each component in the negative electrode active material layer is held without being changed, the elongation ($\delta$) of the negative electrode active material layer is adjusted by changing the types (combination of the electrically-conductive auxiliary agent and the binder) of the electrically-conductive auxiliary agent, the binder and the like. Note that, with regard to the binder or the like, binding force or the like thereof is changed by changing the type thereof, and accordingly, more preferably, an optimum binder is used, and thereafter, a material (type) of the electrically-conductive auxiliary agent, which is capable of adjusting the elongation ($\delta$) of the negative electrode active material layer without affecting conductive performance, is desirably adjusted as appropriate. Specifically, as such a carbon material for use as the electrically-conductive auxiliary agent, desirably, such a short chain-like or fibrous one, which has a predetermined bulk density (volume) or a predetermined length, is used. By using such a short chain-like or fibrous electrically-conductive auxiliary agent, in an event where the ternary Si-Ti-M-based alloy active material causes a volume change (expansion/contraction) within a predetermined range by the charge/discharge, the short chain-like or fibrous electrically-conductive auxiliary agent can follow such a predetermined-range volume change of the alloy active material and ensure the conductivity. Specifically, in the state where the alloy active material contracts in volume, the short chain-like or fibrous electrically-conductive auxiliary agent, which is described above, is in contact with a plurality of the alloy active material particles in an entangled state, and in comparison with a state of being linearly extended, the electrically-conductive auxiliary agent forms a three-dimensional electronic (conductive) network in a state where there is a sufficient margin for the elongation. Meanwhile, in a state where the alloy active material expands in volume within the predetermined range, the short chain-like or fibrous electrically-conductive auxiliary agent, which is described above, can maintain a state of being elongated linearly to some extent while holding the state of being entangled into the plurality of alloy active material particles which have expanded in volume (can follow the volume change). Therefore, it can be said that the three-dimensional electronic (conductive) network can be sufficiently held even in a case where the alloy active material has expanded in volume. It can be said that this is the function and effect (mechanism), which are realizable in the case of using the above-described high capacity ternary Si-Ti-M-based alloy active material having the volume change within the predetermined range. On the contrary, in an electrically-conductive auxiliary agent with a balloon shape (Ketjen Black, fullerene or the like) or a scale shape (graphite or the like), which does not have the predetermined bulk density (volume) or the predetermined length, elongation ($\delta$) of the negative electrode active material layer becomes smaller than the above-described range (refer to Comparative examples 1-2 and 1-3). In such a case, in an event where the ternary Si-Ti-M-based alloy active material causes the predetermined-range volume change (expansion/contraction) by the charge/discharge, it becomes difficult for the balloon-like or scale-like electrically-conductive auxiliary agent to follow the predetermined-range volume change of the alloy active material, and it becomes difficult to ensure the conductivity. More specifically, in a state where the alloy active material has contracted, the balloon-like or scale-like electrically-conductive auxiliary agent, which is described above, is in contact with the plurality of alloy active material particles so as to cover surfaces thereof. However, in such a state where the alloy active material has expanded in volume, a surface area of the alloy active material particles is increased, gaps are generated between electrically-conductive auxiliary agent particles on surfaces of the alloy active material particles, and the electrically-conductive auxiliary agent particles are carried on the surfaces of the alloy active material particles, which have expanded in volume, in a dispersed state. As a result, it can be said that a three-dimensional electronic (conductive) network by the balloon-like or scale-like electrically-conductive auxiliary agent cannot be held, resulting in remarkable lowering improvement rate of the discharge capacity(refer to Comparative examples 1-2 and 1-3 of FIG. 23). Meanwhile, in the long chain-like electrically-conductive auxiliary agent (long chain-like acetylene black and the like), which does not have the predetermined bulk density or the predetermined length, the elongation ($\delta$) of the negative electrode active material layer becomes larger than the above-described range (refer to Comparative example 1-1). In such a case, in the state where the alloy active material has contracted, the above-described long chain-like electrically-conductive auxiliary agent is in a state of being entangled into the plurality of alloy active material particles which have expanded in volume. Therefore, the alloy active material particles are inhibited from expanding in volume by the electrically-conductive auxiliary agent (further, the binding force of the binder, and the like) entangled into the alloy active material particles at the time of the charge. As a result, it can be said that the reaction (insertion/elimination) of the lithium ions to the negative electrode active material, the reaction following the charge/discharge, is inhibited, resulting in the remarkable lowering of the improvement rate of the discharge capacity (refer to Comparative example 1-1 of FIG. 23). Moreover, a part of the long chain-like electrically-conductive auxiliary agent cannot follow the volume expansion of the alloy active material particles, and cannot hold the state where the above-described electrically-conductive auxiliary agent is entangled into the plurality of alloy active material particles which have expanded in volume. Therefore, it can be said that such a three-dimensional electronic (conductive) network, which is formed between the alloy active material particles in contact with a part of the long chain-like electrically-conductive auxiliary agent, is broken at a variety of places, resulting in the remarkable lowering of the improvement rate of the discharge capacity (refer to Comparative example 1-1 of FIG. 23). Moreover, in the pure Si, which is accompanied with an extremely large volume change (four times), opposite to high capacity, the above-described short chain-like or fibrous electrically-conductive auxiliary agent is in a state of being entangled into a plurality of pure Si active material particles, which have expanded in volume, in the negative electrode active material layer. The same applies to a case of using the long chain-like electrically-conductive auxiliary agent. Therefore, the pure Si is inhibited from expanding in volume by the electrically-conductive auxiliary agent (further, the binding force of the binder, and the like) entangled into the pure Si active material particles at the time of the charge. As a result, it can be said that the reaction (insertion/elimination) of the lithium ions to the negative electrode active material, the reaction following the charge/discharge, is inhibited, resulting in the remarkable lowering of the improvement rate of the discharge capacity (refer to Comparative examples 1-4 and 1-5 of FIG. 23). Moreover, a part of the short chain-like or fibrous electrically-conductive auxiliary agent cannot follow the volume expansion of the pure Si active material particles, and cannot hold the state where the above-described electrically-conductive auxiliary agent is entangled into the plurality of pure Si active material particles which have expanded in volume. Therefore, it can be said that such a three-dimensional electronic (conductive) network, which is formed between the pure Si active material particles in contact with a part of the short chain-like or fibrous electrically-conductive auxiliary agent, is broken at a variety of places, resulting in the remarkable lowering of the improvement rate of the discharge capacity (refer to Comparative example 1-4 and 1-5 of FIG. 23).

In terms of the action mechanism that the above-described electrically-conductive auxiliary agent can follow the volume change of the alloy active material and ensure the conductivity, it can be said that, also as the binder, it is desirable to use one that can follow the predetermined-range volume change of the alloy active material and ensure the conductivity. That is to say, as a suitable binder, one can be said to be desirable, which has an elastic modulus (elasticity) that enables the binder to follow the predetermined-range volume change of the alloy active material and to hold binding force thereof. From the viewpoints described above, a description is made of the electrically-conductive auxiliary agent and the binder, which are usable in this embodiment.

(Electrically-conductive auxiliary agent for negative electrode)

The negative electrode active material layer containing the above-described ternary Si-Ti-M-based alloy active material contains an electrically-conductive auxiliary agent. Here, the electrically-conductive auxiliary agent refers to an additive to be compounded in order to enhance the conductivity of the negative electrode active material layer. In a case of using the existing carbon (carbon material), which is capable of inserting/eliminating Li, as the negative electrode active material, the electrically-conductive auxiliary agent is not particularly required, and meanwhile, in a case where the negative electrode active material does not have sufficient conductivity like the ternary Si-Ti-M-based alloy active material, the electrically-conductive auxiliary agent is required. As such an electrically-conductive auxiliary agent, there are mentioned: carbon powder such as carbon black including short chain-like carbon black (short chain-like acetylene black and the like), long chain-like carbon black (long chain-like acetylene black), Ketjen Black (furnace black), channel black and thermal black, and such as graphite including natural graphite and artificial graphite; carbon fiber such as vapor deposited carbon fiber or liquid deposited carbon fiber (carbon nanotube (CNT), graphite fiber and the like) and carbon nanofiber; and carbon materials such as Vulcan, Black Pearl, carbon nano-horn, carbon nano-balloon, hard carbon, fullerene, and expanded graphite; however, it is needless to say that the electrically-conductive auxiliary agent is not limited to these. Note that the above-described carbon fiber is CNT or carbon fiber (which is graphite-like and hard carbon-like (changed depending on the burning temperature at the time of synthesis thereof)), and is capable of being synthesized by either a liquid phase method or a vapor phase method.

The negative electrode active material layer containing the above-described ternary Si-Ti-M-based alloy active material contains the electrically-conductive auxiliary agent, whereby a three-dimensional electronic (conductive) network in an inside of the negative electrode active material layer is formed effectively, and this can contribute to the enhancement of the output characteristics of the battery.

In particular, in a case of using the electrically-conductive auxiliary agent for adjusting the elongation ($\delta$) of the negative electrode active material layer within the above-described range, it is particularly desirable to use a slim or fibrous electrically-conductive auxiliary agent that can follow the predetermined-range volume change of the ternary Si-Ti-M-based alloy active material and ensure the conductivity. From such a viewpoint, the above-described short chain-like or fibrous electrically-conductive auxiliary agent is desirable as the electrically-conductive auxiliary agent usable for adjusting the elongation ($\delta$) of the negative electrode active material layer within the above-described range. For example, there are mentioned short chain-like carbon black (short chain-like acetylene black and the like); carbon fiber such as vapor deposited carbon fiber or liquid deposited carbon fiber (carbon nanotube (CNT), graphite fiber and the like) and carbon nanofiber; and the like; however, the electrically-conductive auxiliary agent is never limited to these. Note that the above-described carbon fiber is also CNT or carbon fiber (which is graphite-like and hard carbon-like (changed depending on the burning temperature at the time of synthesis thereof)), and is capable of being synthesized by either the liquid phase method or the vapor phase method. By using such an electrically-conductive auxiliary agent, the elongation ($\delta$) of the negative electrode active material layer can be adjusted within the above-described range, and the electrically-conductive auxiliary agent can follow the predetermined-range volume change of the ternary Si-Ti-M-based alloy active material and ensure the conductivity. Note that, in this embodiment, in order to adjust the elongation ($\delta$) of the negative electrode active material layer within the above-described range, a binder may be combined as well as the above-described electrically-conductive auxiliary agent. In such a case, even those other than the electrically-conductive auxiliary agents exemplified above are usable as long as being capable of adjusting the elongation ($\delta$) of the negative electrode active material layer within the above-described range. With regard to such a combination of the electrically-conductive auxiliary agent and the binder, for example, it can be said to be desirable to combine the above-described short chain-like or fibrous electrically-conductive auxiliary agent and a binder to be described below, which has a predetermined elastic modulus (more than 1 GPa to less than 7.4 GPa), with each other.

In the case of using the ternary Si-Ti-M-based alloy active material, desirably, a content of the electrically-conductive auxiliary agent mixed into the negative electrode active material layer is made substantially equal to the content of the electrically-conductive auxiliary agent mixed into the positive electrode active material layer. That is to say, the content of the electrically-conductive auxiliary agent mixed into the negative electrode active material layer is also set in the range of 1 to 10 mass%, preferably 2 to 8 mass%, particularly preferably 3 to 7 mass% with respect to a total amount of electrode component materials on the negative electrode side. This is because the above-described ternary Si-Ti-M-based alloy active material is used for the negative electrode active material, and electronic conductivity of the negative electrode active material is low in a similar way to the positive electrode active material, and accordingly, electrode resistance can be reduced by compounding the electrically-conductive auxiliary agent thereinto. Note that, in a case where the negative electrode active material itself uses the carbon-based material such as graphite, soft carbon and hard carbon, which has excellent electronic conductivity, the content of the electrically-conductive auxiliary agent in the negative electrode active material layer just needs to be within the above-described range; however, those which can achieve an object of adding the electrically-conductive auxiliary agent even if a content of each thereof goes out of the above-described range is defined to be incorporated in the scope of this embodiment.

Moreover, a conductive binding agent, which has the functions of the above-described electrically-conductive auxiliary agent and binder in combination, may be used in place of these electrically-conductive auxiliary agent and binder, or may be used in combination with one or both of these electrically-conductive auxiliary agent and binder. As the conductive binder, for example, already commercially available TAB-2 (made by Hohsen Corporation) can be used.

(Binder for negative electrode)

The negative electrode active material layer 15 contains a binder. The binder for the negative electrode is added for the purpose of maintaining an electrode structure by binding the active materials to each other or the active material and the current collector to each other. The binder for use in the negative electrode active material layer is not particularly limited; however, for example, as the binder, the following materials are mentioned, which are: a thermoplastic polymer such as polyethylene, polypropylene, polyethylene terephthalate (PET), polyether nitrile (PEN), polyacrylonitrile, polyimide, polyamide, polyamide imide, cellulose, carboxymethylcellulose (CMC), an ethylene-vinyl acetate copolymer, polyvinyl chloride, styrene-butadiene rubber (SBR), isoprene rubber, butadiene rubber, ethylene propylene rubber, an ethylene-propylene-diene copolymer, a styrene-butadiene-styrene block copolymer and a hydrogenated product thereof, and a styrene-isoprene-styrene block copolymer and a hydrogenated product thereof; fluorine resin such as polyvinylidene fluoride (PVdF), polytetrafluoroethylene (PTFE), a tetrafluoroethylene-hexafluoropropylene copolymer (FEP), a tetrafluoroethylene-perfluoroalkyl vinyl ether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF); polyvinylidene fluoride-based fluorine rubber such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TFE-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFP-TFE-based fluorine rubber), vinylidene fluoride-perfluoromethyl vinyl ether-tetrafluoroethylene-based fluorine rubber (VDF-PFMVE-TFE-based fluorine rubber), and vinylidene fluoride-chlorotrifluoroethylene-based fluorine rubber (VDF-CTFE-based fluorine rubber); and epoxy resin. Among them, polyvinylidene fluoride, polyimide, styrene-butadiene rubber, carboxymethyl cellulose, polypropylene, polytetrafluoroethylene, polyacrylonitrile, polyamide, and polyamide imide are more preferable. These suitable binders are excellent in heat resistance, further have extremely wide potential windows, are stable at both of the positive electrode potential and the negative electrode potential, and are usable for the negative electrode active material layer. Moreover, the binder such as polyamide, which has relative strong binding force, can suitably hold the Si alloy on the carbon-based material. Furthermore, as the binder for use in the negative electrode active material layer, it is particularly desirable to use one, which has an elastic modulus (elasticity) that enables the binder itself to follow the predetermined-range volume change of the ternary Si-Ti-M-based alloy active material as described above, and to ensure binding force thereof. Li enters Si at the time of the charge, whereby the alloy active material expands. In that case, a binder, which is present while being sandwiched between the expanded active material particles, is compressed, and it is necessary for the binder to have an elastic modulus that can resist compression force thereof. On the contrary, a binder, which is present at positions of binding the expanded active material particles to one another, is elongated, and also in this case, it is necessary to hold the elasticity. In a case where the binder is elongated too much to function as an elastic body, then the binder, which is elongated at the time of the contraction, does not return to an original state thereof, and does not function as the binder. Hence, if the elastic modulus of the binder is more than 1 GPa as a lower side regulated below, then the binder can develop a high improvement rate of the discharge capacity without being damaged by being compressed upon receiving the expansion of the alloy active material or without damaging the elasticity thereof. Moreover, if the E elastic modulus of the binder is less than 7.4 GPa as an upper side regulated below, then the binder is not too hard, and Li can be easily inserted into Si at the time of the charge. That is to say, unless the elastic modulus of the binder is too high, the negative electrode active material can be changed in volume (expand/contract) to the optimum range without inhibiting the insertion/elimination of Li thereinto/therefrom, the insertion/elimination following the charge/discharge. As a result, the reaction of the Li ions with the negative electrode active material (Si) can be suppressed from being inhibited, and the high improvement rate of the discharge capacity can be developed. From such a viewpoint, it is preferable to use polyamide, polyimide and polyamide imide, which have the above-described elastic modulus. These binders may be each used singly, or two or more thereof may be used in combination. In particular, the E elastic modulus (elasticity) of the binder, which can follow the predetermined-range volume change of the ternary Si-Ti-M-based alloy active material as described above, is described in preferred aspects to be described below.

As another aspect of this embodiment, desirably, the above-described binder for a negative electrode contains resin with an E elastic modulus from more than 1.00 GPa to less than 7.40 GPa. This is because it is apprehended that, in both cases where the E elastic modulus of the binder is 1.00 GPa or less and 7.40 or more, the binder cannot follow the volume change of the Si alloy, and the sufficient discharge capacity cannot be achieved. That is to say, though the binder has a function to adhere the Si alloy, the binder cannot endure a pressure, which is applied thereto at the time when the Si alloy expands, since the binder is soft if the E elastic modulus of the binder is 1.00 GPa or less, and then sufficient Li ions cannot be introduced into the Si alloy. Meanwhile, the expansion of the Si alloy at the time when the Li ions are inserted/eliminated is suppressed since the binder is hard if the E elastic modulus of the binder is 7.40 GPa or more. Here, preferably, the resin having the E elastic modulus within the above-described predetermined range is one or two or more selected from the group consisting of polyimide, polyamide imide and polyamide, and particular preferably, the resin is polyimide. Note that, as the value of the E elastic modulus, a value measured in accordance with the tensile test method of JIS K 7163 (1994) is employed. Moreover, in a case where a plurality of the binders is used, at least one resin having the above-described predetermined E elastic modulus just needs to be contained.

Here, the value of the E elastic modulus of the binder depends on a material of the binder, a concentration (solid-liquid ratio) of slurry, a degree of crosslink, and a thermal history such as a drying temperature, a drying speed and a drying time. In this embodiment, these are adjusted, whereby the E elastic modulus of the binder can be adjusted within the above-mentioned desired range.

Here, from a viewpoint of sufficiently exerting the functions and the effects, which are expressed by using, as the binder, the resin having the above-described predetermined E elastic modulus, a content of the resin having the above-described predetermined E elastic modulus, which occupies a total 100 mass% of the binder, is preferably 50 to 100 mass%, more preferably 80 to 100 mass%, still more preferably 90 to 100 mass%, particularly preferably 95 to 100 mass%, most preferably 100 mass%.

Note that an amount of the binder contained in the negative electrode active material layer is 0.5 to 15 mass%, preferably 1 to 10 mass% with respect to the active material layer since this amount allows the binding of the negative electrode active material containing the ternary Si-Ti-M-based alloy with a large volume change.

(Requirements common to positive electrode and negative electrode active material layers 13 and 15)

A description is made below of requirements common to the positive electrode and negative electrode active material layers 13 and 15.

As other additives which can be contained in the positive electrode active material layer 13 and the negative electrode active material layer 15, for example, there are mentioned electrolyte salt (lithium salt), an ion conductive polymer, and the like.

(Electrolyte salt)

As the electrolyte salt (lithium salt), there are mentioned $Li(C_2F_5SO_2)_2N$, $LiPF_6$, $LiBF_4$, $LiClO_4$, $LiAsF_6$, $LiCF_3SO_3$ and the like.

(Ion conductive polymer)

As the ion conductive polymer, for example, there are mentioned a polyethylene oxide (PEO)-based polymer and a polypropylene oxide (PPO)-based polymer.

(Compounding ratio of each component contained in each active material layer)

The compounding ratio of each component contained in each of the positive electrode active material layer and the negative electrode active material layer is not particularly limited. The compounding ratio can be adjusted by appropriately referring to the knowledge known in public about a non-aqueous solvent-based secondary battery.

(Thickness of each of active material layers)

A thickness of each of the active material layers (active material layer on one of the surfaces of the current collector) is not particularly limited, either, and knowledge heretofore known in public about the battery can be referred to as appropriate. An example of the thickness is mentioned. In usual, the thickness of each active material layer approximately ranges from 1 to 500 $\mu$m, preferably 2 to 100 $\mu$m in consideration of the usage purpose of the battery (output is regarded important, energy is regarded important, and so on), and of ion conductivity.

[Current collector]

(Positive electrode current collector)

The positive electrode current collector 11 is composed of a conductive material. A size of the current collector is determined in response to a usage purpose of the battery. For example, if the current collector is used for a large battery for which a high energy density is required, then a current collector with a large area is used. A thickness of the current collector is not particularly limited, either. In usual, the thickness of the current collector approximately ranges from 1 to 100 $\mu$m. A shape of the current collector is not particularly limited, either. In the laminated battery 10 shown in FIG. 1, besides current collector foil, those with a mesh pattern (expand grid and the like) and the like can be used.

Note that, in the case where a thin film alloy as an example of the negative electrode active material is directly formed on the negative electrode current collector 12 by the sputtering method and the like, it is desirable to use the current collector foil.

A material that composes the current collector is not particularly limited. For example, metal can be employed, and resin can be employed, in which conductive filler is added to a conductive polymer material or a non-conductive polymer material. Specifically, as metal, there are mentioned aluminum, nickel, iron, stainless steel, titanium, copper and the like. Besides these, there can be preferably used a clad material of nickel and aluminum, a clad material of copper and aluminum, a plated material in which these metals are combined with one another, or the like. Moreover, the metal may be foil in which aluminum is coated on a surface of metal. Among them, aluminum, stainless steel, copper and nickel are preferable from viewpoints of the electron conductivity, a battery operation potential, adherence of the negative electrode active material onto the current collector by the sputtering, and the like.

Moreover, as the conductive polymer material, for example, there are mentioned polyaniline, polypyrrole, polythiophene, polyacetylene, polyparaphenylene, polyphenylene vinylene, polyacrylonitrile, polyoxadiazole and the like. Such conductive polymer materials have sufficient conductivity even if the conductive filler is not added thereto, and accordingly, are advantageous in a point of facilitation of the manufacturing process or of weight reduction of the current collector.

As the non-conductive polymer material, for example, there is mentioned polyethylene (PE: high-density polyethylene (HDPE), low-density polyethylene (LDPE) and the like), polypropylene (PP), polyethylene terephthalate (PET), polyether nitrile (PEN), polyimide (PI), polyamide imide (PAI), polyamide (PA), polytetrafluoroethylene (PTFE), styrene-butadiene rubber (SBR), polyacrylonitrile (PAN), polymethyl acrylate (PMA), polymethyl methacrylate (PMMA), polyvinylidene chloride (PVC), polyvinylidene fluoride (PVdF), polystyrene (PS), or the like. Such non-conductive polymer materials can have excellent potential resistance or solvent resistance.

According to needs, the conductive filler can be added to the conductive polymer material or the non-conductive polymer material, which is described above. In particular, in the case where resin that serves as a base material of the current collector is composed of only the non-conductive polymer, the conductive filler becomes necessarily essential in order to impart the conductivity to the resin. As long as being a material having the conductivity, the conductive filler can be used without receiving limitations in particular. For example, as a material excellent in conductivity, potential resistance or lithium ion barrier properties, there are mentioned metal, conductive carbon and the like. Such metal is not particularly limited; however, preferably, includes at least one metal selected from the group consisting of Ni, Ti, Al, Cu, Pt, Fe, Cr, Sn, Zn, In, Sb and K, or an alloy or a metal oxide, which contains the metal. Moreover, the conductive carbon is not particularly limited. Preferably, the conductive carbon includes at least one selected from the group consisting of acetylene black, Vulcan, Black Pearl, carbon nanofiber, Ketjen Black, carbon nanotube, carbon nano-horn, carbon nano-balloon and fullerene. A loading amount of the conductive filler is not particularly limited as long as being an amount by which sufficient conductivity can be imparted to the current collector, and in general, approximately ranges from 5 to 35 mass%.

(Negative electrode current collector)

The negative electrode current collector 12 is composed of a conductive material. A size of the current collector is determined in response to the usage purpose of the battery. For example, if the current collector is used for a large battery for which a high energy density is required, then a current collector with a large area is used.

A shape of the current collector is not particularly limited, either. In the laminated battery 10 shown in FIG. 1, besides current collector foil, those with a mesh pattern (expand grid and the like) and the like can be used; however, it is desirable to use the current collector foil.

A material that composes the current collector is not particularly limited. For example, metal can be employed, and resin can be employed, in which conductive filler is added to a conductive polymer material or a non-conductive polymer material.

Specifically, as metal, there are mentioned aluminum, nickel, iron, stainless steel, titanium and the like, and alloys of these. Besides these, a clad material of nickel and aluminum, a clad material of copper and aluminum, a plated material in which these metals are combined with one another or the like can be used. Moreover, the metal may be foil in which aluminum is coated on a surface of metal. As will be described later, preferably, copper is used from viewpoints of the electron conductivity, the battery operation potential, the adherence of the negative electrode active material onto the current collector by the sputtering, and the like.

Moreover, as the conductive polymer material, for example, there are mentioned polyaniline, polypyrrole, polythiophene, polyacetylene, polyparaphenylene, polyphenylene vinylene, polyacrylonitrile, polyoxadiazole and the like. Such conductive polymer materials have sufficient conductivity even if the conductive filler is not added thereto, and accordingly, are advantageous in a point of facilitation of the manufacturing process or of weight reduction of the current collector.

As the non-conductive polymer material, for example, there is mentioned polyethylene (PE: high-density polyethylene (HDPE), low-density polyethylene (LDPE) and the like), polypropylene (PP), polyethylene terephthalate (PET), polyether nitrile (PEN), polyimide (PI), polyamide imide (PAI), polyamide (PA), polytetrafluoroethylene (PTFE), styrenebutadiene rubber (SBR), polyacrylonitrile (PAN), polymethyl acrylate (PMA), polymethyl methacrylate (PMMA), polyvinylidene chloride (PVC), polyvinylidene fluoride (PVdF), polystyrene (PS), or the like. Such non-conductive polymer materials can have excellent potential resistance or solvent resistance.

According to needs, the conductive filler can be added to the conductive polymer material or the non-conductive polymer material, which is described above. In particular, in the case where resin that serves as a base material of the current collector is composed of only the non-conductive polymer, the conductive filler becomes necessarily essential in order to impart the conductivity to the resin.

As long as being a material having the conductivity, the conductive filler can be used without receiving limitations in particular. For example, as a material excellent in conductivity, potential resistance or lithium ion barrier properties, there are mentioned metal, conductive carbon and the like. Such metal is not particularly limited; however, preferably, includes at least one metal selected from the group consisting of Ni, Ti, Al, Cu, Pt, Fe, Cr, Sn, Zn, In, Sb and K, or an alloy or a metal oxide, which contains the metal. Moreover, the conductive carbon is not particularly limited. Preferably, the conductive carbon includes at least one selected from the group consisting of acetylene black, Vulcan, Black Pearl, carbon nanofiber, Ketjen Black, carbon nanotube, carbon nano-horn, carbon nano-balloon and fullerene.

A loading amount of the conductive filler is not particularly limited as long as being an amount by which sufficient conductivity can be imparted to the current collector, and in general, approximately ranges from 5 to 35 mass%.

The negative electrode of this embodiment is characterized in that elastic elongation of the current collector in a planar direction is 1.30% or more. Here, the elastic elongation (%) of the current collector is a ratio (%) of a magnitude of elastic elongation to a proportional limit in a tensile direction with respect to an original size of the current collector.

The negative electrode of this embodiment applies such a specific ternary Si alloy as the negative electrode active material, and can thereby obtain a function that a high initial discharge capacity similar to that of the Si negative electrode can be obtained, and simultaneously therewith, the amorphous-crystalline phase transition in the event of alloying Si and Li is suppressed to enhance the cycle lifetime.

However, in a case of fabricating a battery by using the negative electrode in which the negative electrode active material layer having the above-described specific ternary Si alloy together with the binder and the electrically-conductive auxiliary agent is coated on the negative electrode current collector, the expansion/contraction of thee negative electrode active material can occur following the charge/discharge of the battery. Following this, the negative electrode active material layer is changed in volume, and a stress is applied to the current collector in intimate contact with the negative electrode active material layer. At this time, if the current collector cannot follow the volume change of the negative electrode active material layer, then the current collector is plastically deformed, and a wrinkle occurs on the current collector. When the wrinkle occurs on the current collector, the negative electrode active material layer is warped, and an inter-electrode distance thereof with the positive electrode becomes nonuniform, and accordingly, the lowering of the Li reactivity and electrode concentration can occur. Moreover, the plastic deformation of the current collector may result in occurrence of crack and fracture of the current collector, and in direct breakage of the negative electrode active material layer. As a result, the lowering of the discharge capacity of the battery may occur.

The negative electrode of this embodiment solves the problems as described above. By using the negative electrode with elastic elongation of 1.30% or more, the current collector can elastically follow the volume change of the negative electrode active material layer, which is caused by the expansion/contraction of the negative electrode active material by the charge/discharge. Therefore, there can be suppressed the wrinkle generated in such a manner that a stress is applied to the current collector in intimate contact with the negative electrode active material layer, and accordingly, there can be prevented the wrinkle of the negative electrode active material layer and the fracture of the negative electrode active material layer or the current collector. As a result, the inter-electrode distance of the negative electrode with the positive electrode can be kept uniform. Moreover, a side reaction also becomes less likely to occur. Therefore, a high discharge capacity can be obtained. Furthermore, the plastic deformation of the current collector becomes less likely to occur even if the charge/discharge is repeated, and accordingly, the cycle durability can also be enhanced.

Moreover, if the current collector has elastic elongation of 1.30% or more, then even in a case where the elasticity of the negative electrode active material layer is lost by the expansion/contraction of the negative electrode active material, which follows the charge/discharge, the current collector is brought into intimate contact with the negative electrode active material layer and is elastically deformed, and accordingly, the lowering of the capacity and the cycle durability can be suppressed to the minimum.

Preferably, the elastic elongation of the current collector for use in the negative electrode of this embodiment is 1.40% or more. If the elastic elongation of the current collector is 1.40% or more, then it is easier for the current collector to follow the volume change of the negative electrode active material for use in this embodiment, the volume change following the charge/discharge, when a consideration is given to a degree thereof. Therefore, the improvement rate of the discharge capacity is high, and the cycle characteristics can be further improved. Moreover, if the elastic elongation of the current collector is 1.50% or more, then a higher effect can be obtained in the case of using the negative electrode active material of this embodiment.

As the elastic elongation of the current collector is larger, the current collector can follow the volume change of the negative electrode active material layer more elastically, and accordingly, an upper limit value of the elastic elongation is not particularly limited.

In the negative electrode active material for use in this embodiment, the volume change following the charge/discharge, is large in comparison with that of the carbon material such as graphite; however, by using the current collector as described above, the plastic deformation of the current collector can be suppressed, and the warp of the negative electrode active material layer, and the lowering of the discharge capacity, which results therefrom, can be suppressed. However, in the case of using the pure Si as the negative electrode active material, the volume change following the charge/discharge is larger, and accordingly, in some case, the current collector cannot follow the volume change of the negative electrode active material layer sufficiently by using the current collector as described above, and it is difficult to prevent the lowering of the discharge capacity. In the case of the active material of the ternary Si alloy for use in this embodiment, the elastic elongation of the current collector just needs to be 1.30% or more, and a battery excellent in discharge capacity and cycle characteristics is obtained (refer to FIG. 25).

Note that, in this specification, as the elastic elongation (%) of the current collector, a value measured in accordance with a tensile test method of JIS K 6251 (2010) is used. Moreover, the elastic elongation (%) of the current collector is a value measured at 25°C.

In the current collector in this embodiment, preferably, tensile strength thereof is 150 N/mm$^2$ or more. If the tensile strength is 150 N/mm$^2$ or more, then an effect of preventing the fracture of the current collector is high.

Note that, in this specification, as the tensile strength (N/mm$^2$) of the current collector, a value measured in accordance with the tensile test method of JIS K 6251 (2010) is used. Moreover, the tensile strength (N/mm$^2$) of the current collector is a value measured at 25°C.

As long as the elastic elongation of the current collector in this embodiment is 1.30% or more, the material that composes the current collector is not particularly limited as mentioned above, and preferably, metal such as copper, aluminum, nickel, iron, stainless steel, titanium and cobalt or an alloy of these metals can be used.

Among the metals described above, metal foil using copper, nickel, stainless steel or an alloy composed by adding other metal to each of these is preferable from viewpoints of mechanical strength, adherence onto the active material layer, chemical stability, electrochemical stability at a potential where the battery reaction progresses, conductivity, cost and the like. In particular, copper or a copper alloy is particularly preferable because of a standard oxidation reduction potential thereof.

As such copper foil, rolled copper foil (copper foil obtained by a rolling method) or electrolytic copper foil (copper foil obtained by an electrolytic method) can be used. Also as such copper alloy foil, both of electrolytic copper alloy foil or rolled copper alloy foil can be used. In the negative electrode of this embodiment, it is preferable to use the rolled copper foil or the rolled copper alloy foil since the rolled copper foil or the rolled copper alloy foil has large tensile strength and is excellent in flexibility.

As the alloy of the copper, an alloy can be preferably used, which is obtained by adding copper with an element, for example, such as Zr, Cr, Zn and Sn. In comparison with pure copper, such an alloy has a high elastic modulus, is easy to follow the volume change of the negative electrode active material layer, and is less likely to cause the plastic deformation. Therefore, the wrinkle and fracture of the current collector are less likely to occur. Moreover, in comparison with pure copper, in the alloy obtained by adding copper with the element such as Zr, Cr, Zn and Sn, heat resistance thereof can be enhanced. In particular, if the alloy is an alloy in which a softening point is higher than a heat treatment temperature (approximately 300°C) in an event of coating the slurry, which contains the negative electrode active material, on the current collector and drying the slurry in a manufacturing process of the negative electrode, then this is preferable since the elasticity can be maintained even after the heat treatment. Among them, alloys added with Cr, Zn and Sn are preferable since the elasticity can be maintained after the heat treatment can be maintained. These alloy elements may be contained singly, or two or more thereof may be contained. A total content of such an alloy element is, for example, 0.01 to 0.9 mass%, preferably 0.03 to 0.9 mass%, more preferably 0.3 to 0.9 mass%. If the content of the alloy element is 0.03 mass% or more, then this is preferable since the elasticity after the heat treatment can be maintained.

A method of obtaining the current collector with elastic elongation of 1.30% or more is not particularly limited. In a case where the current collector of this embodiment is made of the metal foil, then mechanical characteristics thereof can be changed by heating, cooling, pressurization, and addition of an impurity element. Note that commercially available metal foil having the above-described elongation may be used.

A thickness of the current collector of the negative electrode is not particularly limited, either; however, in the negative electrode of this embodiment, is preferably 5 to 15 $\mu$m, more preferably 5 to 10 $\mu$m. If the thickness of the current collector of the negative electrode is 5 $\mu$m or more, then this is preferable since sufficient mechanical strength is obtained. Moreover, if the thickness of the current collector of the negative electrode is 15 $\mu$m or less, then this is preferable in a point of thinning the battery.

Note that, also as a current collector for a bipolar electrode, a similar one to the negative electrode current collector just needs to be used. In particular, it is preferable to use one having durability against the positive electrode potential and the negative electrode potential.

[Electrolyte layer]

As an electrolyte that composes the electrolyte layer 17, a liquid electrolyte and a polymer electrolyte are usable.
The liquid electrolyte has a form in which lithium salt as supporting salt is dissolved into an organic solvent as a plasticizer. As the organic solvent usable as the plasticizer, for example, there are exemplified carbonates such as ethylene carbonate (EC), propylene carbonates (PC), diethyl carbonate (DEC) and dimethyl carbonate (DMC). Moreover, a compound such as LiBETI is employable in a similar way, and the compound is addible to the active material layer of the electrode as the supporting salt (lithium salt).
Meanwhile, the polymer electrolyte is classified into gel electrolyte that contains an electrolytic solution and intrinsic polymer electrolyte that does not contain the electrolytic solution.
The gel electrolyte has a configuration formed by injecting the above-described liquid electrolyte (electrolytic solution) into a matrix polymer made of an ion-conductive polymer. As the ion-conductive polymer for use as the matrix polymer, for example, polyethylene oxide (PEO), polypropylene oxide (PPO), a copolymer of these, and the like are mentioned. Electrolyte salt such as lithium salt can be dissolved well into such a polyalkylene oxide polymer.
A ratio of the above-described liquid electrolyte (electrolytic solution) in the gel electrolyte should not be particularly limited; however, desirably, is set at approximately several mass% to 98 mass% from viewpoints of the ion conductivity and the like. This embodiment is particularly effective for a gel electrolyte, in which a ratio of the electrolytic solution is as large as 70 mass% or more.
Note that, in a case where the electrolyte layer is composed of the liquid electrolyte, the gel electrolyte or the intrinsic polymer electrolyte, a separator may be used as the electrolyte layer. As a specific form of the separator (including nonwoven fabric), for example, there are mentioned a microporous membrane, a porous flat plate, and further, nonwoven fabric, which are made of polyolefin such as polyethylene and polypropylene.
The intrinsic polymer electrolyte has a configuration formed by dissolving the supporting salt (lithium salt) into the above-described matrix polymer, and the intrinsic polymer electrolyte does not contain the organic solvent as the plasticizer. Hence, in a case where the electrolyte layer is composed of the intrinsic polymer electrolyte, there is no apprehension about liquid leakage from the battery, and reliability of the battery can be enhanced.
The matrix polymer of the gel electrolyte or the intrinsic polymer electrolyte can develop excellent mechanical strength by forming a crosslinked structure. In order to form the crosslinked structure, a polymerizable polymer (for example, PEO and PPO) for forming the polymer electrolyte just needs to be subjected to polymerization treatment such as thermal polymerization, ultraviolet polymerization, radiation polymerization and electron beam polymerization by using an appropriate polymerization initiator.

[Current collector plate and lead]

The current collector plates may be used for the purpose of taking out a current to the outside of the battery. Each of the current collector plates is electrically connected to the current collectors and the leads, and is taken out to the outside of the laminated sheets as the battery exterior member.
A material that composes the current collector plate is not particularly limited, and a publicly known highly conductive material heretofore used as the current collector plate for the lithium ion secondary battery can be used. As a constituent material of the current collector plate, for example, a metal material such as aluminum, copper, titanium, nickel, stainless steel (SUS) and alloys of these is preferable, and aluminum, copper and the like are more preferable from viewpoints of light weight, corrosion resistance and high conductivity. Note that, for the positive electrode current collector plate and the negative electrode current collector plate, the same material may be used, or different materials may be used.
A positive electrode terminal lead and a negative electrode terminal lead are also used according to needs. As a material of the positive electrode terminal lead and the negative electrode terminal lead, a terminal lead to be used in the publicly known lithium ion secondary battery can be used. Note that, preferably, portions taken out from such battery exterior members 29 are covered with heat-resistant insulating heat shrinkage tubes and the like so as not to affect the product (for example, an automotive component, and in particular, an electronic instrument or the like) by causing electric leakage as a result of contact with a peripheral instrument, a wire or the like.

[Battery exterior member]

As such a battery exterior member 29, a metal can case publicly known can be used, and moreover, a bag-like case using a laminated film containing aluminum, the case being capable of covering the power generation element, can be used. As the laminated film concerned, for example, a laminated film with a three-layer structure composed by laminating PP, aluminum and Nylon on one another in this order, and the like can be used; however, the laminated film is never limited to these. The laminated film is desirable from viewpoints that the laminated film is excellent in enhancement of the output and in cooling performance, and can be suitably used for a battery for a large instrument such as an EV and an HEV.

Note that the above-described lithium ion secondary battery can be manufactured by a manufacturing method heretofore known in public.

<Exterior appearance configuration of lithium ion secondary battery>

FIG. 2 is a perspective view showing an exterior appearance of the flat laminated-type lithium ion secondary battery.

As shown in FIG. 2, the flat laminated-type lithium ion secondary battery 50 has a rectangular flat shape, and from both side portions thereof, the positive electrode current collector plate 58 and the negative electrode current collector plate 59, which are for taking out electric power, are drawn out. The power generation element 57 is wrapped by the battery exterior member 52 of the lithium ion secondary battery 50, and a periphery thereof is thermally fused, and the power generation element 57 is hermetically sealed in a state where the positive electrode current collector plate 58 and the negative electrode current collector plate 59 are drawn to the outside. Here, the power generation element 57 corresponds to the power generation element 21 of the lithium ion secondary battery (laminated battery) 10 shown in FIG. 1. The power generation element 57 is one in which a plurality of the single cell layers (single cells) 19, each of which is composed of a positive electrode (positive electrode active material layer) 13, an electrolyte layer 17 and a negative electrode (negative electrode active material layer) 15, are laminated on one another.

Note that the above-described lithium ion secondary battery is not limited to such a laminated-type one (laminated cell) with a flat shape. The lithium ion secondary battery may be a wound-type lithium ion battery, which is one (coin cell) with a cylindrical shape, one (prism cell) with a prism shape, one formed by deforming such a battery with the cylindrical shape into a flat rectangular shape, and further, one with a cylinder cell. As described above, the shape of the lithium ion secondary battery is not particularly limited. In those with the above-described cylindrical shape and the prism shape, a laminated film may be used as an exterior member thereof, or a conventional cylindrical can (metal can) may be used as the exterior member, and as described above, no particular limitations are imposed thereon. Preferably, the power generation element is wrapped with an aluminum laminated film. Weight reduction of the lithium ion secondary battery can be achieved by this form.

Moreover, such drawing out of the positive electrode current collector plate 58 and the negative electrode current collector plate 59, which are shown in FIG. 2, is not particularly limited, either. The positive electrode current collector plate 58 and the negative electrode current collector plate 59 may be drawn out from the same side, and each of the positive electrode current collector plate 58 and the negative electrode current collector plate 59 may be divided into plural pieces, and may be drawn out from the respective sides. As described above, the drawing out of the current collector plates 58 and 59 is not limited to that shown in FIG. 2. Moreover, in the wound-type lithium ion battery, terminals may be formed, for example, by using cylindrical cans (metal cans) in place of the current collector plates.

As described above, the negative electrode using the negative electrode active material for a lithium ion secondary battery according to this embodiment and the lithium ion secondary battery can be suitably used as the large-capacity power supply of the electric vehicle, the hybrid electric vehicle, the fuel cell electric vehicle, the hybrid fuel cell electric vehicle and the like. That is to say, the negative electrode and the lithium ion secondary battery, which are described above, can be suitably used for the vehicle-driving power supply and the auxiliary power supply, for which a high volume energy density and a high volume output density are required.

Note that, in the above-described embodiment, the lithium ion battery is exemplified as the electrical device; however, the electrical device is not limited to this, and the present invention can also be applied to other types of secondary batteries, and further, to a primary battery. Moreover, the present invention can be applied not only to the batteries but also to capacitors.

EXAMPLES

A description is made of the present invention more in detail by using the following examples.

First, as a reference example, performance evaluation for the Si alloy, which is represented by Chemical formula (1), and composes the negative electrode for an electrical device according to the present invention, was performed.

(Reference example A): Performance evaluation for $Si_xTi_yGe_zA_a$

[1] Fabrication of negative electrode

As a sputtering apparatus, there was used a ternary DC magnetron sputtering apparatus (made by Yamato-Kiki Industrial Co., Ltd.; combinatorial sputter coating apparatus; gun-sample distance: approximately 100 mm) of an independent control system. Then, by using this sputtering apparatus, thin films of negative electrode active material alloys having the respective compositions were individually deposited on a substrate (current collector) made of nickel foil with a thickness of 20 $\mu$m under the following conditions, whereby totally 31 types of negative electrode samples were obtained (Reference examples 1 to 18 and Reference comparative examples 1 to 13).

(1) Targets (manufactured by Kojundo Chemical Laboratory Co., Ltd.; Purity: 4N)

Si: diameter of 50.8 mm; thickness of 3 mm (with backing plate made of oxygen-free copper with thickness of 2 mm)

Ti: diameter of 50.8 mm; thickness of 5 mm

Ge: diameter of 50.8 mm; thickness of 3 mm (with backing plate made of oxygen-free copper with thickness of 2 mm)

(2) Deposition condition

Base pressure: up to $7 \times 10^{-6}$ Pa

Type of sputtering gas: Ar (99.9999% or more)

Sputtering gas introduction amount: 10 sccm

Sputtering pressure: 30 mTorr

DC power supply: Si (185 W), Ti (0 to 150 W), Ge (0 to 120 W)

Pre-sputtering time: 1 min.

Sputtering time: 10 min.

Substrate temperature: room temperature (25°C)

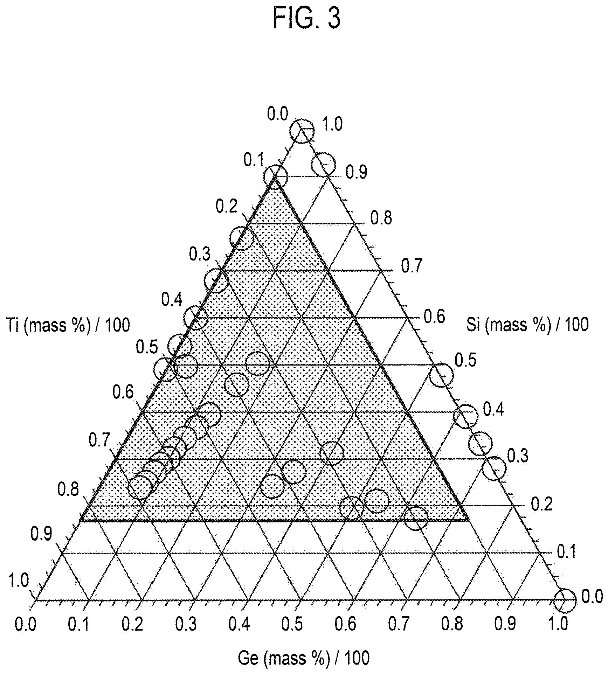

That is to say, the Si target, the Ge target and the Ti target, which are as described above, were used, the sputtering time was fixed to 10 minutes, and power of the DC power supply was changed for each of the targets within the above-described ranges, whereby alloy thin films in an amorphous state were formed on Ni substrates, and negative electrode samples including such alloy thin films having a variety of compositions were obtained.
Here, several examples of fabricating the samples are illustrated. In Reference example 14, a DC power supply 1 (Si target) was set to 185 W, a DC power supply 2 (Ge target) was set to 100 W, and a DC power supply 3 (Ti target) was set to 130 W. Moreover, in Comparative reference example 2, the DC power supply 1 (Si target) was set to 185 W, the DC power supply 2 (Ge target) was set to 100 W, and the DC power supply 3 (Ti target) was set to 0 W. Furthermore, in Comparative example 9, the DC power supply 1 (Si target) was set to 185 W, the DC power supply 2 (Ge target) was set to 0 W, and the DC power supply 3 (Ti target) was set to 40 W.
Component compositions of these alloy thin films are shown in Table 1 and FIGS. 3 to 7. Note that the obtained alloy thin films were analyzed by using the following analysis method and analysis device.

(3) Analysis method

Composition analysis: SEM/EDX analysis (made by JEOL Ltd.), EPMA analysis (made by JEOL Ltd.)

Film thickness measurement (for calculating sputtering rate): film thickness meter (made by Tokyo Instruments, Inc.)

Film state analysis: Raman spectroscopic analysis (made by Bruker Corporation)

[2] Fabrication of battery

Each of the negative electrode samples, which was obtained as described above, and a counter electrode made of lithium foil (made by Honjo Metal Co., Ltd.; diameter of 15 mm; thickness of 200 $\mu$m) were opposed to each other via a separator (made by Celgard, LLC; Celgard 2400), and thereafter, an electrolytic solution was injected thereinto whereby a CR2032-type coin cell was individually fabricated.

Note that, as the electrolytic solution, a solution was used, which was obtained by dissolving $LiPF_6$ (lithium hexafluorophosphate) into a mixed non-aqueous solvent so that a concentration of $LiPF_6$ could be 1 M, the mixed non-aqueous solvent being obtained by mixing ethylene carbonate (EC) and diethyl carbonate (DEC) with each other in a volume ratio of 1: 1.

[3] Charge/discharge test of battery

The following charge/discharge test was implemented for the respective batteries obtained as described above.

That is to say, by using a charge/discharge tester (HJ0501SM8A made by Hokuto Denko Corporation), in a thermostat oven (PFU-3K made be Espec Corporation) set at a temperature of 300 K (27°C), each of the batteries was charged with a voltage from 2V to 10mV at a current of 0.1 mA in a charge process (Li insertion process to the negative electrode as an evaluation target) while setting a constant current/constant voltage mode. Thereafter, in a discharge process (Li elimination process from the above-described negative electrode), each of the batteries was discharged with a voltage from 10mV to 2V at a current of 0.1mA while setting a constant current mode. Such a charge/discharge cycle as described above was taken as one cycle, and this was repeated 100 times.

Then, discharge capacities in a 50th cycle and a 100th cycle were obtained, and retention rates thereof with respect to a discharge capacity in a first cycle were calculated. Results of this are shown in Table 1 in combination. In this event, as the discharge capacities, values calculated per alloy weight are shown. Note that the "discharge capacity (mAh/g)" is a value per weight of the pure Si or the alloy, and represents a capacity when Li reacts with the Si-Ti-M alloy (Si-M alloy, pure Si or Si-Ti alloy). Note that, in this specification, those written as the "initial capacity" correspond to the "discharge capacity (mAh/g)" in the initial cycle (first cycle).

Moreover, the "discharge capacity retention rate (%)" in each of the 50th cycle and the 100th cycle represents an index as to "what capacity is maintained from the initial capacity". A calculation formula of the discharge capacity retention rate (%) is as follows.

[Mathematical 10]

Discharge capacity retention rate (%) = discharge capacity in 50th cycle or 100th cycle / discharge capacity in first cycle × 100

[Table 1-1] In Table 1-1, Reference examples 2 to 5 and 8 are Comparative reference Examples.

| | COMPOSITION | | | 1st cycle | 50th cycle | 100th cycle |
|---|---|---|---|---|---|---|
| | Si (mass%) | Ti (mass%) | Ge (mass%) | Discharge capacity (mAh/g) | Discharge capacity retention rate (%) | Discharge capacity retention rate (%) |
| Reference Example 1 | 50 | 47 | 3 | 1700 | 88 | 50 |
| Reference Example 2 | 31 | 29 | 40 | 1228 | 87 | 40 |
| Reference Example 3 | 21 | 25 | 54 | 932 | 83 | 40 |

(continued)

| | | COMPOSITION | | 1st cycle | 50th cycle | 100th cycle |
|---|---|---|---|---|---|---|
| | Si (mass%) | Ti (mass%) | Ge (mass%) | Discharge capacity (mAh/g) | Discharge capacity retention rate (%) | Discharge capacity retention rate (%) |
| Reference Example 4 | 19 | 31 | 50 | 858 | 93 | 42 |
| Reference Example 5 | 17 | 20 | 63 | 749 | 90 | 44 |
| Reference Example 6 | 27 | 38 | 35 | 1197 | 84 | 45 |
| Reference Example 7 | 24 | 44 | 32 | 1086 | 96 | 50 |
| Reference Example 8 | 50 | 34 | 16 | 2143 | 84 | 42 |
| Reference Example 9 | 46 | 39 | 15 | 2016 | 88 | 47 |
| Reference Example 10 | 39 | 48 | 13 | 1726 | 83 | 48 |
| Reference Example 11 | 37 | 51 | 12 | 1507 | 93 | 54 |
| Reference Example 12 | 34 | 55 | 11 | 1426 | 91 | 51 |
| Reference Example 13 | 33 | 57 | 10 | 1314 | 93 | 53 |
| Reference Example 14 | 30 | 60 | 10 | 1248 | 94 | 53 |
| Reference Example 15 | 29 | 62 | 9 | 1149 | 93 | 55 |
| Reference Example 16 | 27 | 64 | 9 | 1068 | 94 | 53 |
| Reference Example 17 | 25 | 67 | 8 | 982 | 95 | 50 |
| Reference Example 18 | 24 | 68 | 8 | 876 | 93 | 53 |

[Table 1-2]

| | | COMPOSITION | | | 1st cycle | 50th cycle | 100th cycle |
|---|---|---|---|---|---|---|---|
| | | Si (mass%) | Ti (mass%) | Ge (mass%) | Discharge capacity (mAh/g) | Discharge capacity retention rate (%) | Discharge capacity retention rate (%) |
| Comparative Reference Example 1 | | 100 | 0 | 0 | 3232 | 47 | 16 |
| Comparative Reference Example 2 | | 93 | 0 | 7 | 3827 | 60 | 38 |
| Comparative Reference Example 3 | | 48 | 0 | 52 | 2062 | 41 | 26 |
| Comparative Reference Example 4 | | 39 | 0 | 61 | 1732 | 34 | 22 |
| Comparative Reference Example 5 | | 33 | 0 | 67 | 1460 | 26 | 16 |
| Comparative Reference Example 6 | | 28 | 0 | 72 | 1277 | 30 | 18 |
| Comparative Reference Example 7 | | 0 | 0 | 100 | 1348 | 80 | 37 |
| Comparative Reference Example 8 | | 90 | 10 | 0 | 3218 | 82 | 36 |
| Comparative Reference Example 9 | | 77 | 23 | 0 | 2685 | 82 | 39 |
| Comparative Reference Example 10 | | 68 | 32 | 0 | 2398 | 82 | 39 |
| Comparative Reference Example 11 | | 60 | 40 | 0 | 2041 | 83 | 37 |
| Comparative Reference Example 12 | | 54 | 46 | 0 | 1784 | 83 | 32 |
| Comparative Reference Example 13 | | 49 | 51 | 0 | 1703 | 75 | 24 |

From Table 1, it is understood that each of the batteries in Reference examples, which includes the negative electrode active material having the alloy containing 17% or more to less than 90% of Si, more than 10% to less than 83% of Ti and more than 0% to less than 73% of Ge, has an initial capacity of 749 mAh/g or more. Then, from a viewpoint of further improving the capacity and the cycle durability, it is found out that, preferably, the negative electrode active material is composed of an alloy containing 17% or more to less than 90% of Si, more than 10% to less than 83% of Ti

## EP 2 924 771 B1

and more than 0% to less than 73% of Ge. Meanwhile, it is understood that, in each of the batteries in Comparative reference examples, the lowering of the discharge capacity retention rate is remarkable even if the discharge capacity in the first cycle is large in comparison with the batteries of Examples. As described above, it is confirmed that each of the batteries including the negative electrode active material in Reference examples is excellent in the capacity and the cycle durability.

(Reference example B): Performance evaluation for $Si_xTi_ySn_zA_a$

[1] Fabrication of negative electrode

"Ge: diameter of 50.8 mm; thickness of 3 mm (with backing plate made of oxygen-free copper with thickness of 2 mm)" in the targets in (1) of Reference example A was changed to "Sn: diameter of 50.8 mm; thickness of 5 mm", and "Ge (0 to 120 W)" of the DC power supply in (2) thereof was changed to "Sn (0 to 40 W)". In a similar way to Reference example A except the above, totally 40 types of negative electrode samples were obtained (refer to Reference examples 19 to 44 and Reference comparative examples 14 to 27).

Note that, with regard to (2) described above, several examples of conditions of fabricating the samples are illustrated. In Reference example 35, the DC power supply 1 (Si target) was set to 185 W, the DC power supply 2 (Sn target) was set to 30 W, and the DC power supply 3 (Ti target) was set to 150 W. Moreover, in Comparative reference example 15, the DC power supply 1 (Si target) was set to 185 W, the DC power supply 2 (Sn target) was set to 22 W, and the DC power supply 3 (Ti target) was set to 0 W. Furthermore, in Comparative reference example 20, the DC power supply 1 (Si target) was set to 185 W, the DC power supply 2 (Sn target) was set to 0 W, and the DC power supply 3 (Ti target) was set to 30 W.

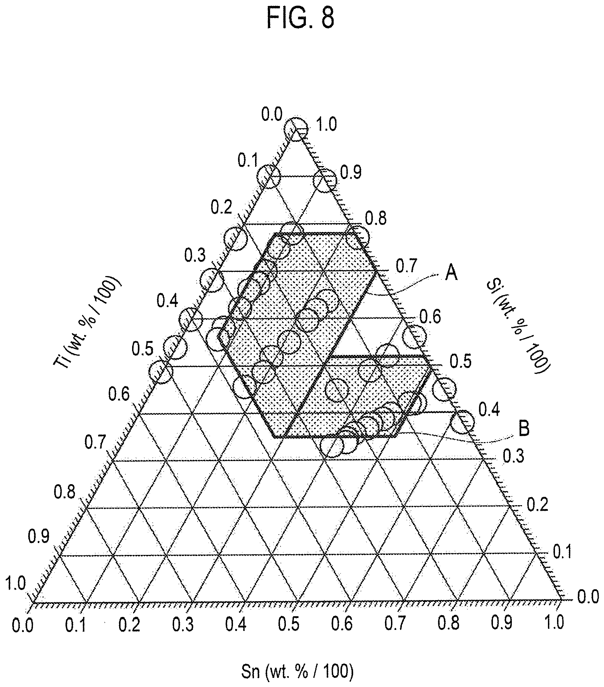

Component compositions of these alloy thin films are shown in Table 2 and FIG. 8. Note that the obtained alloy thin films were analyzed by using an analysis method and an analysis device, which are similar to those in Reference example A.

[2] Fabrication of battery

CR2032-type coin cells were fabricated in a similar way to Reference example A.

[3] Charge/discharge test of battery

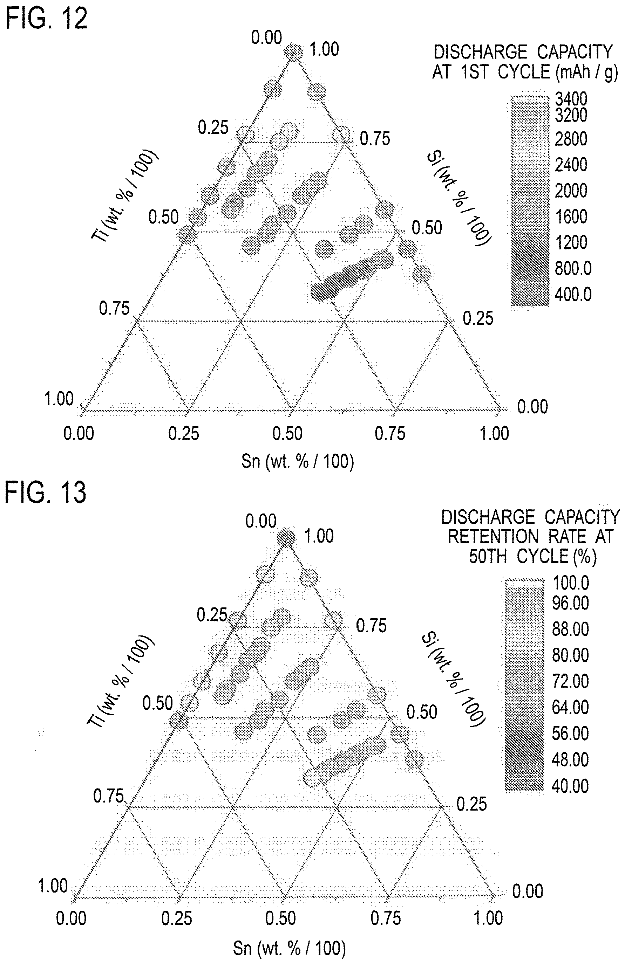

A charge/discharge test was implemented for the batteries in a similar way to Reference example A. Results of this are shown in Table 2 in combination. Moreover, FIG. 12 shows a relation between the discharge capacity in the first cycle and the alloy composition. Moreover, FIG. 13 and FIG. 14 show relationships between the discharge capacity retention rates in the 50th cycle and the 100th cycle and the alloy compositions, respectively. Note that, as each discharge capacity, a value calculated per alloy weight is shown.

[Table 2-1]

|  | COMPOSITION | | | 1st cycle | 50th cycle | 100th cycle |
|---|---|---|---|---|---|---|
|  | Si (mass%) | Ti (mass%) | Sn (mass%) | Discharge capacity (mAh/g) | Discharge capacity retention rate (%) | Discharge capacity retention rate (%) |
| Reference Example 19 | 52 | 7 | 41 | 1764 | 94 | 51 |
| Reference Example 20 | 49 | 12 | 39 | 1635 | 95 | 53 |
| Reference Example 21 | 45 | 20 | 35 | 1375 | 94 | 53 |
| Reference Example 22 | 42 | 7 | 51 | 1319 | 98 | 52 |

(continued)

|  | COMPOSITION | | | 1st cycle | 50th cycle | 100th cycle |
|---|---|---|---|---|---|---|
|  | Si (mass%) | Ti (mass%) | Sn (mass%) | Discharge capacity (mAh/g) | Discharge capacity retention rate (%) | Discharge capacity retention rate (%) |
| Reference Example 23 | 42 | 8 | 50 | 1307 | 94 | 52 |
| Reference Example 24 | 40 | 12 | 48 | 1217 | 94 | 51 |
| Reference Example 25 | 39 | 14 | 47 | 1175 | 94 | 51 |
| Reference Example 26 | 38 | 17 | 45 | 1108 | 94 | 49 |
| Reference Example 27 | 37 | 18 | 45 | 1089 | 94 | 48 |
| Reference Example 28 | 36 | 21 | 43 | 1050 | 93 | 47 |
| Reference Example 29 | 35 | 23 | 42 | 1008 | 93 | 47 |
| Reference Example 30 | 64 | 12 | 24 | 2277 | 93 | 46 |
| Reference Example 31 | 62 | 15 | 23 | 2173 | 94 | 47 |
| Reference Example 32 | 60 | 18 | 22 | 1978 | 94 | 50 |
| Reference Example 33 | 55 | 24 | 21 | 1818 | 97 | 55 |
| Reference Example 34 | 52 | 29 | 19 | 1661 | 98 | 58 |
| Reference Example 35 | 49 | 32 | 19 | 1538 | 98 | 59 |
| Reference Example 36 | 46 | 37 | 17 | 1371 | 96 | 58 |

(continued)

| | COMPOSITION | | | 1st cycle | 50th cycle | 100th cycle |
|---|---|---|---|---|---|---|
| | Si (mass%) | Ti (mass%) | Sn (mass%) | Discharge capacity (mAh/g) | Discharge capacity retention rate (%) | Discharge capacity retention rate (%) |
| Reference Example 37 | 78 | 12 | 10 | 2669 | 91 | 43 |
| Reference Example 38 | 75 | 16 | 9 | 2531 | 91 | 43 |
| Reference Example 39 | 70 | 21 | 9 | 2294 | 94 | 49 |
| Reference Example 40 | 68 | 23 | 9 | 2194 | 94 | 50 |
| Reference Example 41 | 66 | 26 | 8 | 2073 | 95 | 51 |
| Reference Example 42 | 62 | 30 | 8 | 1878 | 95 | 53 |
| Reference Example 43 | 58 | 35 | 7 | 1775 | 95 | 56 |
| Reference Example 44 | 56 | 37 | 7 | 1632 | 96 | 55 |

[Table 2-2]

| | COMPOSITION | | | 1st cycle | 50th cycle | 100th cycle |
|---|---|---|---|---|---|---|
| | Si (mass%) | Ti (mass%) | Sn (mass%) | Discharge capacity (mAh/g) | Discharge capacity retention rate (%) | Discharge capacity retention rate (%) |
| Comparative Reference Example 14 | 100 | 0 | 0 | 3232 | 47 | 22 |
| Comparative Reference Example 15 | 89 | 0 | 11 | 3149 | 78 | 36 |
| Comparative Reference Example 16 | 77 | 0 | 23 | 2622 | 84 | 38 |
| Comparative Reference Example 17 | 56 | 0 | 44 | 1817 | 91 | 42 |

(continued)

| | COMPOSITION | | | 1st cycle | 50th cycle | 100th cycle |
|---|---|---|---|---|---|---|
| | Si (mass%) | Ti (mass%) | Sn (mass%) | Discharge capacity (mAh/g) | Discharge capacity retention rate (%) | Discharge capacity retention rate (%) |
| Comparative Reference Example 18 | 45 | 0 | 55 | 1492 | 91 | 42 |
| Comparative Reference Example 19 | 38 | 0 | 62 | 1325 | 91 | 42 |
| Comparative Reference Example 20 | 90 | 10 | 0 | 3218 | 82 | 36 |
| Comparative Reference Example 21 | 77 | 23 | 0 | 2685 | 82 | 39 |
| Comparative Reference Example 22 | 68 | 32 | 0 | 2398 | 82 | 39 |
| Comparative Reference Example 23 | 60 | 40 | 0 | 2041 | 83 | 37 |
| Comparative Reference Example 24 | 54 | 46 | 0 | 1784 | 83 | 32 |
| Comparative Reference Example 25 | 49 | 51 | 0 | 1703 | 75 | 24 |
| Comparative Reference Example 26 | 34 | 24 | 42 | 977 | 90 | 38 |
| Comparative Reference Example 27 | 33 | 27 | 40 | 870 | 82 | 23 |

As a result of the above, it is confirmed that each of the batteries in Reference examples of Table 2-1 includes an initial capacity at least exceeding 1000 mAh/g, and exhibits a discharge capacity retention rate of 91% or more after the 50 cycles and a discharge capacity retention rate of 43% or more even after the 100 cycles.

(Comparative reference example C): Performance evaluation for $Si_xTi_yZn_zA_a$

[1] Fabrication of negative electrode

In a similar way to Reference example A except that the conditions of the DC power supply of (1) and (2) in Reference example A were changed as follows, totally 40 types of negative electrode samples were obtained (refer to Comparative reference examples 45 to 56 and Comparative reference comparative examples 28 to 40).

(1) Targets (manufactured by Kojundo Chemical Laboratory Co., Ltd.)

Si (purity: 4N): diameter of 2 inches; thickness of 3 mm (with backing plate made of oxygen-free copper with thickness of 2 mm)

Ti (purity: 5N): diameter of 2 inches; thickness of 5 mm

Zn(purity: 4N): diameter of 2 inches; thickness of 5 mm

(2) Deposition condition (regarding DC power supply)

DC power supply: Si (185 W), Ti (50 to 200 W), Zn (30 to 90 W)

Here, an example of fabricating the sample is illustrated. In Comparative reference example 49, the DC power supply 2 (Si target) was set to 185 W, the DC power supply 1 (Ti target) was set to 150 W, and the DC power supply 3 (Zn target) was set to 60 W.

[2] Fabrication of battery

CR2032-type coin cells were fabricated in a similar way to Reference example A.

[3] Charge/discharge test of battery

A charge/discharge test was implemented for the batteries in a similar way to Reference example 1 except that the discharge capacity retention rate in the 50th cycle was calculated by the following mathematical formula. Results of this are shown in Table 3 in combination.

[Mathematical 11]

$$\text{Discharge capacity retention rate (\%)} = \text{discharge capacity in 50th cycle / maximum discharge capacity} \times 100$$

Note that the maximum discharge capacity is exhibited in the initial cycle to 10 cycles, usually 5 to 10 cycles.

[Table 3-1] In Table 3-1 all Examples are Comparative reference examples.

|  | COMPOSITION | | | 1st cycle | 50th cycle | |
|---|---|---|---|---|---|---|
|  | Si (mass%) | Ti (mass%) | Zn (mass%) | Discharge capacity (mAh/g) | Discharge capacity (mAh/g) | Discharge capacity retention rate (%) |
| Reference Example 45 | 72 | 11 | 18 | 1800 | 1564 | 87 |
| Reference Example 46 | 61 | 9 | 30 | 1693 | 1491 | 88 |
| Reference Example 47 | 53 | 8 | 39 | 1428 | 1257 | 88 |
| Reference Example 48 | 61 | 24 | 15 | 1372 | 1284 | 94 |
| Reference Example 49 | 53 | 21 | 26 | 1216 | 1177 | 97 |

(continued)

| | COMPOSITION | | | 1st cycle | 50th cycle | |
| | Si (mass%) | Ti (mass%) | Zn (mass%) | Discharge capacity (mAh/g) | Discharge capacity (mAh/g) | Discharge capacity retention rate (%) |
|---|---|---|---|---|---|---|
| Reference Example 50 | 47 | 19 | 35 | 1129 | 1084 | 96 |
| Reference Example 51 | 53 | 34 | 13 | 1095 | 1025 | 94 |
| Reference Example 52 | 47 | 30 | 23 | 963 | 907 | 94 |
| Reference Example 53 | 42 | 27 | 31 | 934 | 843 | 90 |
| Reference Example 54 | 47 | 42 | 12 | 987 | 919 | 93 |
| Reference Example 55 | 42 | 37 | 21 | 782 | 711 | 91 |
| Reference Example 56 | 38 | 34 | 28 | 690 | 635 | 92 |

[Table 3-2]

| | COMPOSITION | | | 1st cycle | 50th cycle | |
| | Si (mass%) | Ti (mass%) | Zn (mass%) | Discharge capacity (mAh/g) | Discharge capacity (mAh/g) | Discharge capacity retention rate (%) |
|---|---|---|---|---|---|---|
| Comparative Reference Example 28 | 87 | 0 | 13 | 2437 | 2068 | 85 |
| Comparative Reference Example 29 | 80 | 0 | 20 | 2243 | 1871 | 83 |
| Comparative Reference Example 30 | 74 | 0 | 26 | 2078 | 1464 | 70 |
| Comparative Reference Example 31 | 69 | 0 | 31 | 1935 | 1404 | 73 |
| Comparative Reference Example 32 | 65 | 0 | 35 | 1811 | 1304 | 72 |

(continued)

| | COMPOSITION | | | 1st cycle | 50th cycle | |
|---|---|---|---|---|---|---|
| | Si (mass%) | Ti (mass%) | Zn (mass%) | Discharge capacity (mAh/g) | Discharge capacity (mAh/g) | Discharge capacity retention rate (%) |
| Comparative Reference Example 33 | 61 | 0 | 39 | 1701 | 1181 | 69 |
| Comparative Reference Example 34 | 100 | 0 | 0 | 3232 | 1529 | 47 |
| Comparative Reference Example 35 | 90 | 10 | 0 | 3218 | 2628 | 82 |
| Comparative Reference Example 36 | 77 | 23 | 0 | 2685 | 2199 | 82 |
| Comparative Reference Example 37 | 68 | 32 | 0 | 2398 | 1963 | 82 |
| Comparative Reference Example 38 | 60 | 40 | 0 | 2041 | 1694 | 83 |
| Comparative Reference Example 39 | 54 | 46 | 0 | 1784 | 1485 | 83 |
| Comparative Reference Example 40 | 49 | 51 | 0 | 1703 | 1272 | 75 |

From the results of Table 3, it was able to be confirmed that each of the batteries of Comparative reference examples 45 to 56 can realize the remarkably high capacity increase, which is unrealizable by the existing carbon-based negative electrode active material (carbon/graphite-based negative electrode material), as the initial capacity (discharge capacity in the first cycle). In a similar way, it was able to be confirmed that the high capacity (initial capacity of 690 mAh/g or more) similar to or more than those of the existing Sn-based alloy negative electrode active materials can be realized. Furthermore, also with regard to the cycle durability that is in the tradeoff relationship with the capacity increase, it was able to be confirmed that it the remarkably excellent cycle durability in comparison with the existing Sn-based negative electrode active materials which achieve the high capacity but are inferior in cycle durability and with the multinary alloy negative electrode active materials disclosed in Patent Literature 1.

Specifically, it was able to be confirmed that the remarkably excellent cycle durability, which is indicated by the high discharge capacity retention rate in the 50th cycle of 87% or more, preferably 90% or more, more preferably 96% or more, can be realized. In view of the above, it was revealed that, in each of the batteries of Comparative reference examples 45 to 56, the discharge capacity retention rate in the 50th cycle is higher in comparison with the batteries of Comparative reference examples 28 to 40, the high initial capacity is suppressed from being lowered, and the high capacity can be maintained efficiently maintained.

[4] Initial cycle of battery

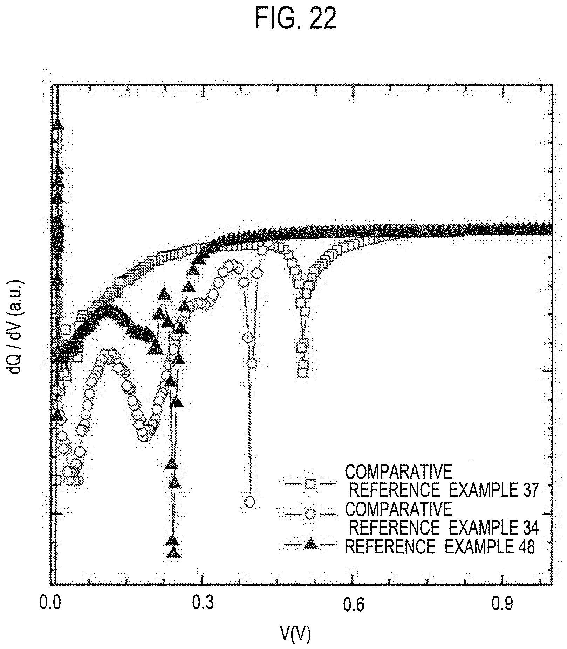

The initial cycle of each of the batteries for evaluation (CR2032-type coin cells), which use the electrodes for evaluation of Comparative reference example 48 and Comparative reference comparative examples 34 and 37 was conducted under the same charge/discharge conditions as those of [3]. A dQ/dV curve relative to a voltage (V) during the discharge process of the initial cycle is shown in FIG. 22.

As an interpretation of dQ/dV based on FIG. 22, it was able to be confirmed that crystallization of the Li-Si alloy is suppressed by adding the elements (Ti and Zn) in addition to Si since the curve is gentle due to a reduction in number of downwardly projecting peaks in a region of a low potential (0.4V or less). Here, Q represents a battery capacity (discharge capacity).

Specifically, the downwardly projecting sharp peak indicates a change caused by decomposition of the electrolytic solution in the vicinity of 0.4V of Comparative reference example 34 (metal thin film of pure Si). Then, each of the downwardly projecting gentle peaks in the vicinities of 0.35V, 0.2V, and 0.05V indicates a change from the amorphous state to the crystal state.

Meanwhile, in Comparative reference example 48 (ternary Si-Ti-Zn alloy thin film) to which the elements (Ti and Zn) were added in addition to Si and Comparative reference example 37 (binary Si-Ti alloy thin film), the downwardly projecting sharp peaks, each of which indicates the change caused by the decomposition of the electrolytic solution, were able to be confirmed individually in the vicinities of 2.5V and 5V. However, it was able to be confirmed that the crystallization of the Li-Si alloy can be suppressed since the downwardly projecting gentle peak which indicates the change from the amorphous state to the crystallized state was not found. Particularly, it was able to be confirmed from the above-described Sample 20 that the crystallization of the Li-Si alloy can be suppressed when Ti is solely used as the additional element other than Si. However, from Table 3 described above, it was also able to be confirmed from Table 3 described above that the binary Si-Ti-based alloy thin film in Comparative reference example 37 described above cannot suppress the lowering (deterioration) of the discharge capacity retention rate (%) after the 50 cycles.

From the above-described test results, the mechanism (functional mechanism), which enables the ternary alloys of the present example to exhibit the high cycle characteristics, particularly, the well-balanced characteristics having the high first-cycle discharge capacity while maintaining the high discharge capacity retention rate in the 50th cycle, can be assumed (estimated) as follows.

1. As described in [4], in view of the dQ/dV curve of the ternary alloys, the peaks in the low potential region (up to 0.6 V) are smaller in number and gentler than those of pure-Si which is not an alloy. This seems to stand for that the decomposition of electrolytic solution is suppressed, and that the phase transition of the Li-Si alloy to the crystal phase is suppressed (refer to FIG. 22).

2. It is revealed that the decomposition of the electrolytic solution causes the discharge capacity to be reduced along with the increase in number of cycles in each of all Comparative reference examples 45 to 56 (refer to Table 3). However, in the case of comparison among the discharge capacity retention rates, it is revealed that the remarkably higher discharge capacity retention rate than pure-Si of Comparative reference example 34 that is not an alloy can be realized in each of the ternary alloys. Furthermore, it is revealed that the high discharge capacity retention rate can be realized in comparison with the exiting high capacity Sn-based negative electrode active materials, the multinary alloy negative electrode active materials disclosed in Patent Literature 1, and the binary alloy negative electrode active materials for reference. As a result, it is revealed that the cycle characteristics tend to be enhanced by the realizing a state where the discharge capacity retention rate is high (refer to the discharge capacity retention rates in the 50th cycle of Table 3).

3. When the phase transition of the Li-Si alloy to the crystal phase occurs, the volume change of the active material is increased. By the phase transition and the volume change, a progression to destruction of the active material itself and then to destruction of the electrode is started. In view of the dQ/dV curve of FIG. 22 of [4], it can be determined that the phase transition can be suppressed in Sample 4 since the curve is gentle with the few phase transition-associated peaks.

As described above, from the result of Comparative reference examples, it was revealed that it is extremely useful and effective to select the first additional element Ti and the type M of the second additional element in the event of the Li alloying. The first and second additional elements are selected as described above, whereby the amorphous-crystal phase transition is suppressed in the event of the Li alloying, and the Si alloy-based negative electrode active material having high capacity/high cycle durability can be thereby provided. As a result, it was revealed that the lithium-ion secondary battery having a high capacity and good cycle durability can be provided.

Note that, for example, in Comparative reference example 3, it was revealed that the reference batteries of Comparative reference examples 28 to 40 can realize the capacity increase; however, with regard to the cycle durability thereof in the tradeoff relationship with the capacity increase, the discharge capacity retention rate is as insufficient as 47 to 85%. In view of the above, it was revealed that the reference batteries cannot suppress the lowering (deterioration) of the cycle durability sufficiently. That is to say, it was able to be confirmed that, by the Si metal or the binary alloys, those capable of developing the capacity increase and the cycle durability, which are in the tradeoff relationship, with a good balance are not obtained.

Next, in Example 1 to be described below, performance evaluation was performed for each negative electrode for an electrical device, in which $Si_{42}Ti_7Sn_{51}$ (corresponding to Reference example 22) in the above-described Si alloy is used as a negative electrode active material, and the elongation of the negative electrode active material layer is changed (specifically, a negative electrode active material layer in which the type of the electrically-conductive auxiliary agent or the like is changed is provided).

Note that, also with regard to other alloys than $Si_{42}Ti_7Sn_{51}$, which are used in the present invention (that is, those other than $Si_{42}Ti_7Sn_{51}$ among $Si_xTi_yGe_zA_a$, $Si_xTi_yZn_zA_a$ and $Si_xTi_ySn_zA_a$), the same or similar results as or to those in Examples 1 to 4 using $Si_{42}Ti_7Sn_{51}$ are obtained. A reason for this is that, as shown in Reference examples A and B and Comparative reference example C, the above-described other alloys for use in the present invention have characteristics similar to those of $Si_{42}Ti_7Sn_{51}$. That is to say, in a case of using alloys having similar characteristics, similar effects can be obtained even if the type of the alloy is changed.

(Example 1-1)

[Manufacturing of Si alloy]

The Si alloy was manufactured by the mechanical alloy method (or the arc plasm fusion method). Specifically, a planetary ball mill apparatus P-6 made by Fritsch GmbH in Germany was used, zirconia-made milling balls and powders of the respective raw materials of the alloy were poured into a zirconia-made milling pot, and an alloy was made at 600 rpm for 48 hours.

[Fabrication of negative electrode]

90 mass parts of the negative electrode active material, 5 mass parts of the electrically-conductive auxiliary agent and 5 mass parts of the binder were mixed with one another, and were dispersed into N-methyl-2-pyrrolidone (NMP), whereby negative electrode slurry was obtained. Here, for the negative electrode active material, the Si alloy ($Si_{42}Ti_7Sn_{51}$; mean particle diameter of 0.3 $\mu$m) fabricated as described above was used. Moreover, for the electrically-conductive auxiliary agent, short chain-like acetylene black was used as the short chain-like carbon black, and for the binder, polyimide (E elastic modulus of 2.1 GPa) was used. Subsequently, the obtained negative electrode slurry was uniformly coated on both surfaces of a negative electrode current collector, which was made of copper foil (elastic elongation of 1.4%) with a thickness of 10 $\mu$m, so that a thickness of the negative electrode active material layers could be 30 $\mu$m, followed by drying in vacuum for 24 hours, whereby a negative electrode was obtained.

[Fabrication of positive electrode]

90 mass parts of the positive electrode active material, 5 mass parts of the electrically-conductive auxiliary agent and 5 mass parts of the binder were mixed with one another, and were dispersed into NMP, whereby positive electrode slurry was obtained. Here, for the positive electrode active material, $Li_{1.85}Ni_{0.18}Co_{0.10}Mn_{0.87}O_3$ was prepared by the method described in Example 1 (paragraph 0046) of Japanese Patent Unexamined Publication No. 2012-185913. Moreover, acetylene black was used for the electrically-conductive auxiliary agent, and polyvinylidene fluoride (PVdF) was used for the binder. Subsequently, the obtained positive electrode slurry was uniformly coated on both surfaces of a positive electrode current collector, which was made of aluminum foil with a thickness of 20 $\mu$m, so that a thickness of the positive electrode active material layers could be 30 $\mu$m, followed by drying, whereby a positive electrode was obtained.

[Fabrication of battery]

The positive electrode and the negative electrode, which were fabricated as described above, were opposed to each other, and a separator (polypropylene-made microporous membrane; membrane thickness of 20 $\mu$m) was arranged therebetween. Subsequently, a laminated body of the negative electrode, the separator and the positive electrode was arranged on a bottom side of a coin cell (CR2032; material: stainless steel (SUS316). Moreover, a gasket was attached in order to keep insulating properties between the positive electrode and the negative electrode, the following electrolytic solution was injected thereinto by a syringe. Then, springs and spacers were stacked, upper sides of such coin cells were superimposed on one another, and were hermetically sealed by crimping the same, whereby a lithium ion secondary battery was obtained.

Note that, as the above-described electrolytic solution, a solution was used, which was obtained by dissolving lithium phosphate hexafluoride ($LiPF_6$) as the supporting salt into an organic solvent so that a concentration thereof could be 1 mol/L. Here, the organic solvent was obtained by mixing ethylene carbonate (EC) and diethyl carbonate (DEC) in a ratio of EC: DC = 1: 2 (volume ratio).

(Example 1-2)

A negative electrode and a battery were fabricated in a similar way to Example 1-1 except that the electrically-conductive auxiliary agent of the negative electrode was changed to carbon nanotube as liquid phase carbon fiber.

(Example 1-3)

A negative electrode and a battery were fabricated in a similar way to Example 1-1 except that the electrically-conductive auxiliary agent of the negative electrode was changed to graphite fiber as vapor phase carbon fiber.

(Comparative example 1-1)

A negative electrode and a battery were fabricated in a similar way to Example 1-1 except that the electrically-conductive auxiliary agent of the negative electrode was changed to long chain-like acetylene black as long chain-like carbon black.

(Comparative example 1-2)

A negative electrode and a battery were fabricated in a similar way to Example 1-1 except that the electrically-conductive auxiliary agent of the negative electrode was changed to artificial graphite.

(Comparative example 1-3)

A negative electrode and a battery were fabricated in a similar way to Example 1-1 except that the electrically-conductive auxiliary agent of the negative electrode was changed to Ketjen Black.

(Comparative example 1-4)

A negative electrode and a battery were fabricated in a similar way to Example 1-1 except that the electrically-conductive auxiliary agent of the negative electrode was changed to graphite fiber as liquid phase carbon fiber, and that the negative electrode active material was changed to pure Si (purity of 99.999%).

(Comparative example 1-5)

A negative electrode and a battery were fabricated in a similar way to Example 1-1 except that the negative electrode active material was changed to pure Si (purity of 99.999%), and that the binder of the negative electrode was changed to PVdF.

[Measurement of elongation (%) of negative electrode active material layer]

For each of the lithium ion secondary batteries fabricated as described above, the elongation (%) of the negative electrode active material layer was measured. Specifically, the elongation (%) of the negative electrode active material layer was measured by a value measured in accordance with the tensile test method of JIS K 7163 (1994). Note that, also for each of the lithium ion secondary batteries fabricated in the following Examples and Comparative examples, the elongation (%) of the negative electrode active material layer was measured in a similar way to the above.

<Performance evaluation>

[Evaluation of cycle characteristics]

For each of the lithium ion secondary batteries fabricated as described above, the cycle characteristics were evaluated in the following way. Under an atmosphere of 30°C, each battery was charged with up to 2.0V in a constant current mode (CC; current of 0.1 C), was left standing for 10 minutes, thereafter, was discharged to 0.01V by a constant current (CC; current of 0.1 C), and was left standing for 10 minutes after the discharge. This charge/discharge process was taken as one cycle, a charge/discharge test of 100 cycles was performed, and a ratio of a discharge capacity in a 100th cycle with respect to a discharge capacity in a first cycle (discharge capacity retention rate [%]) was obtained. A discharge capacity retention rate in Comparative example 1-1 was taken as 100, and a ratio of a discharge capacity retention rate of each of other Examples and Comparative examples with respect thereto was defined as an improvement rate of a discharge capacity (%). Results thus obtained are shown in the following Table 4 and FIG. 23.

[Table 4]

| | Type of negative electrode active material | Type of negative electrode binder | Type of negative electrode electrically-conductive auxiliary agent | Elongation of negative electrode active material layer (%) | Improvement rate of discharge capacity (%) (Comparative example 1-1 is taken as 100) |
|---|---|---|---|---|---|
| Example 1-1 | Si alloy | polyimide | short chain-like carbon black | 1.53 | 123 |
| Example 1-2 | Si alloy | polyimide | liquid phase carbon fiber | 1.57 | 120 |
| Example 1-3 | Si alloy | polyimide | vapor phase carbon fiber | 1.40 | 106 |
| Comparative Example 1-1 | Si alloy | polyimide | long chain-like carbon black | 1.70 | 100 |
| Comparative Example 1-2 | Si alloy | polyimide | artificial graphite | 1.29 | 95 |
| Comparative Example 1-3 | Si alloy | polyimide | Ketjen Black | 1.23 | 95 |
| Comparative Example 1-4 | Pure Si | polyimide | vapor phase carbon fiber | 1.70 | 75 |
| Comparative Example 1-5 | Pure Si | PVdF | short chain-like carbon black | 1.50 | 53 |

From the results of the above-described Table 4 and FIG. 23, the ternary Si-Ti-M-based alloy is applied to the negative electrode active material, and further, the appropriate type of the binder and the appropriate type of the electrically-conductive auxiliary agent are combined therewith, whereby the elongation of the negative electrode active material layer can be set within the predetermined range. It is understood that the improvement of improvement rate of the discharge capacity can be achieved by setting the elongation ($\delta$) of the negative electrode active material layer within the range of $1.29 < \delta < 1.70\%$. The elongation ($\delta$) is set within a range of $1.40 \leq \delta < 1.70\%$, preferably $1.40 \leq \delta \leq 1.66\%$, more preferably $1.40 \leq \delta \leq 1.57\%$, still more preferably $1.47 \leq \delta \leq 1.57\%$, particularly preferably $1.53 \leq \delta \leq 1.57\%$, whereby the improvement rate of the discharge capacity can be further improved (refer to Examples 1-1 to 1-3 and Comparative examples 1-1 to 1-3 in comparison with each other).

In particular, it was also able to be confirmed that, as the negative electrode active material, the ternary Si-Ti-M-based alloy was used in place of the pure Si, whereby the improvement of the improvement rate of the discharge capacity could be remarkably achieved (refer to FIG. 23 where a graph of Examples 1-1 to 1-3 and Comparative examples 1-1 to 1-3 and data of Comparative examples 1-4 and 1-5 are spaced apart from each other).

Next, in Example 2 to be described below, performance evaluation was performed for negative electrodes for an electrical device, which use $Si_{42}Ti_7Sn_{51}$ (corresponding to Reference example 22) among the above-described Si alloys as the negative electrode active material, and include negative electrode active material layers containing this $Si_{42}Ti_7Sn_{51}$ together with a variety of binders.

(Example 2-1)

[Manufacturing of Si alloy]

The Si alloy was manufactured by the mechanical alloy method (or the arc plasm fusion method). Specifically, a planetary ball mill apparatus P-6 made by Fritsch GmbH in Germany was used, zirconia-made milling balls and powders of the respective raw materials of the alloy were poured into a zirconia-made milling pot, and an alloy was made at 600 rpm for 48 hours.

[Fabrication of negative electrode]

80 mass parts of the negative electrode active material, 5 mass parts of the electrically-conductive auxiliary agent and 15 mass parts of the binder were mixed with one another, and were dispersed into N-methyl-2-pyrrolidone (NMP), whereby negative electrode slurry was obtained. Here, for the negative electrode active material, the Si alloy ($Si_{42}Ti_7Sn_{51}$; mean particle diameter of 0.3 $\mu$m) fabricated as described above was used. Moreover, for the electrically-conductive auxiliary agent, short chain-like acetylene black was used as the short chain-like carbon black, and for the binder, polyamide imide (E elastic modulus of 2.00 GPa) was used. Subsequently, the obtained negative electrode slurry was uniformly coated on both surfaces of a negative electrode current collector, which was made of copper foil (elastic elongation of 1.4%) with a thickness of 10 $\mu$m, so that a thickness of the negative electrode active material layers could be 30 $\mu$m, followed by drying in vacuum for 24 hours, whereby a negative electrode was obtained.

[Fabrication of positive electrode]

90 mass parts of the positive electrode active material, 5 mass parts of the electrically-conductive auxiliary agent and 5 mass parts of the binder were mixed with one another, and were dispersed into NMP, whereby positive electrode slurry was obtained. Here, for the positive electrode active material, $Li_{1.85}Ni_{0.18}Co_{0.10}Mn_{0.87}O_3$ was prepared by the method described in Example 1 (paragraph 0046) of Japanese Patent Unexamined Publication No. 2012-185913. Moreover, acetylene black was used for the electrically-conductive auxiliary agent, and polyvinylidene fluoride (PVdF) was used for the binder. Subsequently, the obtained positive electrode slurry was uniformly coated on both surfaces of a positive electrode current collector, which was made of aluminum foil with a thickness of 20 $\mu$m, so that a thickness of the positive electrode active material layers could be 30 $\mu$m, followed by drying, whereby a positive electrode was obtained.

[Fabrication of battery]

The positive electrode and the negative electrode, which were fabricated as described above, were opposed to each other, and a separator (polypropylene-made microporous membrane; membrane thickness of 20 $\mu$m) was arranged therebetween. Subsequently, a laminated body of the negative electrode, the separator and the positive electrode was arranged on a bottom side of a coin cell (CR2032; material: stainless steel (SUS316). Moreover, a gasket was attached in order to keep insulating properties between the positive electrode and the negative electrode, the following electrolytic solution was injected thereinto by a syringe. Then, springs and spacers were stacked, upper sides of such coin cells were superimposed on one another, and were hermetically sealed by crimping the same, whereby a lithium ion secondary battery was obtained.

Note that, as the above-described electrolytic solution, a solution was used, which was obtained by dissolving lithium phosphate hexafluoride ($LiPF_6$) as the supporting salt into an organic solvent so that a concentration thereof could be 1 mol/L. Here, the organic solvent was obtained by mixing ethylene carbonate (EC) and diethyl carbonate (DEC) in a ratio of EC: DC = 1: 2 (volume ratio).

(Example 2-2)

A negative electrode and a battery were fabricated in a similar way to Example 2-1 except that, as the binder, polyimide (E elastic modulus of 2.10 GPa) was used in place of the polyamide imide (E elastic modulus of 2.00 GPa).

(Example 2-3)

A negative electrode and a battery were fabricated in a similar way to Example 2-1 except that, as the binder, polyimide (E elastic modulus of 3.30 GPa) was used in place of the polyamide imide (E elastic modulus of 2.00 GPa).

(Example 2-4)

A negative electrode and a battery were fabricated in a similar way to Example 2-1 except that, as the binder, polyimide (E elastic modulus of 3.73 GPa) was used in place of the polyamide imide (E elastic modulus of 2.00 GPa).

(Example 2-5)

A negative electrode and a battery were fabricated in a similar way to Example 2-1 except that, as the binder, polyimide (E elastic modulus of 7.00 GPa) was used in place of the polyamide imide (E elastic modulus of 2.00 GPa).

(Comparative example 2-1)

A negative electrode and a battery were fabricated in a similar way to Example 2-1 except that, as the binder, polyvinylidene fluoride (PVdF) (E elastic modulus of 1.00 GPa) was used in place of the polyamide imide (E elastic modulus of 2.00 GPa).

(Comparative example 2-2)

A negative electrode and a battery were fabricated in a similar way to Example 2-1 except that, as the binder, polyimide (E elastic modulus of 7.40 GPa) was used in place of the polyamide imide (E elastic modulus of 2.00 GPa).

(Comparative example 2-3)

A negative electrode and a battery were fabricated in a similar way to Example 2-4 except that, as the negative electrode active material, pure Si was used in place of the Si alloy.

(Comparative example 2-4)

A negative electrode and a battery were fabricated in a similar way to Comparative example 2-1 except that, as the negative electrode active material, pure Si was used in place of the Si alloy.

<Performance evaluation>

[Evaluation of discharge capacity]

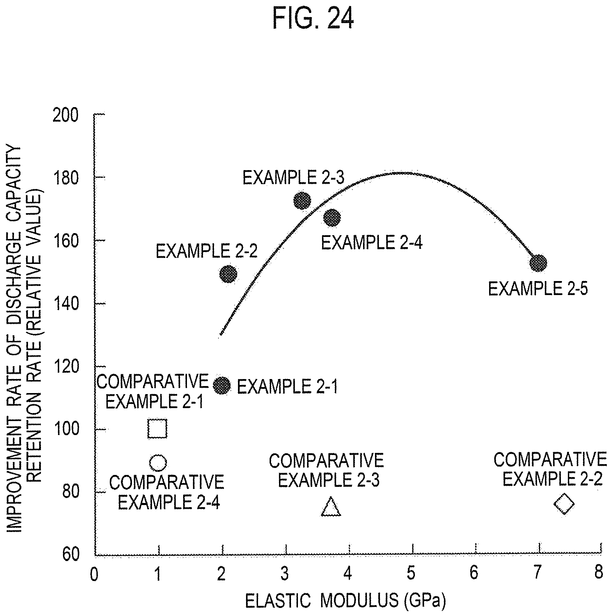

For each of the lithium ion secondary batteries fabricated as described above, the cycle characteristics were evaluated in the following way. Under an atmosphere of 30°C, each battery was charged with up to 2.0V in a constant current mode (CC; current of 0.1 C), was left standing for 10 minutes, thereafter, was discharged to 0.01V by a constant current (CC; current of 0.1 C), and was left standing for 10 minutes after the discharge. This charge/discharge process was taken as one cycle, a charge/discharge test of 50 cycles was performed, and a ratio (discharge capacity retention rate [%] of a discharge capacity in a 50th cycle with respect to a discharge capacity in a first cycle was obtained. In the following Table 5 and FIG. 24, the obtained results of the discharge capacity retention rates are shown as relative values when the discharge capacity retention rate of Comparative example 2-1 was taken as 100.

[Table 5]

| | Active material | Binder | E elastic modulus of binder (Gpa) | Improvement rate of discharge capacity retention rate |
|---|---|---|---|---|
| Example 2-1 | Si alloy | Polyamideimide | 2.00 | 114 |
| Example 2-2 | Si alloy | Polyimide | 2.10 | 149 |
| Example 2-3 | Si alloy | Polyimide | 3.30 | 172 |
| Example 2-4 | Si alloy | Polyimide | 3.73 | 167 |
| Example 2-5 | Si alloy | Polyimide | 7.00 | 152 |
| Comparative Example 2-1 | Si alloy | PVdF | 1.00 | 100 |
| Comparative Example 2-2 | Si alloy | Polyimide | 7.40 | 75 |
| Comparative Example 2-3 | Pure Si | Polyimide | 3.73 | 75 |
| Comparative Example 2-4 | Pure Si | PVdF | 1.00 | 89 |

From the results of the above-described Table 5 and FIG. 24, it is understood that the batteries according to Examples 2-1 to 2-5, each of which contains the binder having the E elastic modulus within the predetermined range, exhibits high cycle characteristics.

Next, in Example 3 to be described below, performance evaluation was performed for negative electrodes for an electrical device, which use $Si_{42}Ti_7Sn_{51}$ (corresponding to Reference example 22) among the above-described Si alloys as the negative electrode active material, and change the type (elastic elongation) the current collector.

(Example 3-1)

[Manufacturing of Si alloy]

The above-described Si alloy was manufactured by the mechanical alloy method (or the arc plasm fusion method). Specifically, a planetary ball mill apparatus P-6 made by Fritsch GmbH in Germany was used, zirconia-made milling balls and powders of the respective raw materials of the alloy were poured into a zirconia-made milling pot, and an alloy was made at 600 rpm for 48 hours.

[Fabrication of negative electrode]

80 mass parts of the negative electrode active material, 5 mass parts of the electrically-conductive auxiliary agent and 15 mass parts of the binder were mixed with one another in N-methyl-2-pyrrolidone (NMP) as a solvent, whereby negative electrode slurry was prepared. Here, for the negative electrode active material, the Si alloy powder ($Si_{42}Ti_7Sn_{51}$; mean particle diameter of primary particles: 0.3 $\mu$m) fabricated as described above was used. Moreover, for the electrically-conductive auxiliary agent, short chain-like acetylene black was used as the short chain-like carbon black, and for the binder, polyimide (E elastic modulus of 2.1 GPa) was used.

There was prepared copper alloy foil (Copper alloy 1: Cu added with Cr, Sn and Zn individually by approximately 0.3 mass%) with a thickness of 10 $\mu$m, in which elastic elongation is 1.43%, and tensile strength is 580 N/mm$^2$.

In this example, the elastic elongation (%) and tensile strength (N/mm$^2$) of the current collector was measured at a test speed of 10 mm/min and with a chuck interval of 50 mm by using a digital material tester (type 5565) made by Instron Corporation. As each of samples, there was used current collector foil formed into a wedge shape with an overall length of 70 mm and a parallel portion width of 5 mm.

The obtained negative electrode active material slurry was coated on both surfaces of the above-described copper alloy foil (Copper alloy 1) so that a thickness thereof could be individually 50 $\mu$m, followed by drying in vacuum for 24 hours, whereby a negative electrode was obtained.

(Example 3-2)

A negative electrode was fabricated in a similar way to Example 3-1 except that, as the negative electrode current collector, there was used copper alloy foil (Copper alloy 2: Cu added with Zr by approximately 0.3 mass%) with a thickness of 10 $\mu$m, in which elastic elongation is 1.53%, and tensile strength is 450 N/mm$^2$.

(Example 3-3)

A negative electrode was fabricated in a similar way to Example 3-1 except that, as the negative electrode current collector, there was used copper alloy foil (Copper alloy 3: Cu added with Zr by approximately 0.1 mass%) with a thickness of 10 $\mu$m, in which elastic elongation is 1.39%, and tensile strength is 420 N/mm$^2$.

(Comparative example 3-1)

A negative electrode was fabricated in a similar way to Example 3-1 except that, as the negative electrode current collector, there was used copper foil (tough pitch copper: purity of Cu is 99.9 mass% or more) with a thickness of 10 $\mu$m, in which elastic elongation is 1.28%, and tensile strength is 139 N/mm$^2$.

(Comparative example 3-2)

A negative electrode was fabricated in a similar way to Comparative example 3-1 except that, as the negative electrode current collector, there were used 80 mass parts of silicon (pure Si) powder (purity: 99.999 mass%; mean particle diameter of primary particles: 45 $\mu$m).

(Comparative example 3-3)

A negative electrode was fabricated in a similar way to Comparative example 3-2 except that poly vinylidene fluoride (PVdF) was used as a binder material.

[Fabrication of positive electrode]

$Li_{1.85}Ni_{0.18}Co_{0.10}Mn_{0.87}O_3$ as a positive electrode active material was prepared by the method described in Example 1 (paragraph 0046) of Japanese Patent Unexamined Publication No. 2012-185913. Then, 90 mass parts of this positive electrode active material, 5 mass parts of acetylene black as the electrically-conductive auxiliary agent and 5 mass parts of polyvinylidene fluoride (PVdF) as the binder were mixed with one another, and were dispersed into N-methyl-2-pyrrolidone (NMP), whereby positive electrode slurry was obtained. Subsequently, the obtained positive electrode slurry was uniformly coated on both surfaces of a positive electrode current collector, which was made of aluminum foil with a thickness of 20 μm, so that a thickness of the positive electrode active material layers could be 30 μm, followed by drying, whereby a positive electrode was obtained.

[Fabrication of battery]

The positive electrode and the negative electrode, which were fabricated as described above, were opposed to each other, and a separator (polypropylene-made microporous membrane; membrane thickness of 20 μm) was arranged therebetween. Subsequently, a laminated body of the negative electrode, the separator and the positive electrode was arranged on a bottom side of a coin cell (CR2032; material: stainless steel (SUS316). Moreover, a gasket was attached in order to keep insulating properties between the positive electrode and the negative electrode, the following electrolytic solution was injected thereinto by a syringe. Then, springs and spacers were stacked, upper sides of such coin cells were superimposed on one another, and were hermetically sealed by crimping the same, whereby a lithium ion secondary battery was obtained.

Note that, as the above-described electrolytic solution, a solution was used, which was obtained by dissolving lithium phosphate hexafluoride ($LiPF_6$) as the supporting salt into an organic solvent so that a concentration thereof could be 1 mol/L. Here, the organic solvent was obtained by mixing ethylene carbonate (EC) and diethyl carbonate (DEC) in a ratio of EC: DC = 1: 2 (volume ratio).

[Charge/discharge test of battery]

A charge/discharge test was performed in a similar way to Reference example A.

That is to say, by using a charge/discharge tester (HJ0501SM8A made by Hokuto Denko Corporation), in a thermostat oven (PFU-3K made be Espec Corporation) set at a temperature of 300 K (27°C), each of the batteries was charged with a voltage from 2V to 10mV at a current of 0.1 mA in a charge process (Li insertion process to the negative electrode as an evaluation target) while setting a constant current/constant voltage mode. Thereafter, in a discharge process (Li elimination process from the above-described negative electrode), each of the batteries was discharged with a voltage from 10mV to 2V at a current of 0.1mA while setting a constant current mode. Such a charge/discharge cycle as described above was taken as one cycle, and this was repeated 50 times.

Then, discharge capacities in a 50th cycle were obtained, and discharge capacity retention rates thereof with respect to a discharge capacity in a first cycle were calculated. The "discharge capacity retention rate (%)" in the 50th cycle represents an index as to "what capacity is maintained from the initial capacity". A calculation formula of the discharge capacity retention rate (%) is as follows.

[Mathematical 12]

$$\text{Discharge capacity retention rate (\%)} = \text{discharge capacity in 50th cycle} / \text{discharge capacity in first cycle} \times 100$$

Moreover, results of the obtained discharge capacity retention rates (%) are converted into ratios when the discharge capacity retention rate of Comparative example 3-1 was taken as 100 (improvement rates (%) of the discharge capacity retention rates), and are shown in the following Table 6 and FIG. 25.

[Table 6]

| | Active material | Electrically-conductive auxiliary agent | Binder | Current collector | Elastic elongation of current collector (%) | Tensile strength of current collector (N/mm$^2$) | Improvement rate of discharge capacity retention rate (%) |
|---|---|---|---|---|---|---|---|
| Example 3-1 | Si alloy | short chain-like carbon black | polyimide | copper alloy (1) | 1.43 | 580 | 124 |
| Example 3-2 | Si alloy | short chain-like carbon black | polyimide | copper alloy (2) | 1.53 | 450 | 122 |
| Example 3-3 | Si alloy | short chain-like carbon black | polyimide | copper alloy (3) | 1.39 | 420 | 108 |
| Comparative Example 3-1 | Si alloy | short chain-like carbon black | polyimide | tough pitch copper | 1.28 | 139 | 100 |
| Comparative Example 3-2 | Pure Si | short chain-like carbon black | polyimide | tough pitch copper | 1.28 | 139 | 84 |
| Comparative Example 3-3 | Pure Si | short chain-like carbon black | PVdF | tough pitch copper | 1.28 | 139 | 63 |

From the results of Table 6 and FIG. 25, it was able to be confirmed that the batteries of Examples 3-1 to 3-3, each of which uses the current collector with elastic elongation of 1.30% or more, can realize high discharge capacity retention rates in comparison with the batteries of Comparative examples 3-1 to 3-3. It is considered that this is because each of the current collectors for use in Examples 3-1 to 3-3 elastically follows the volume change of the negative electrode active material layer containing the Si alloy, the volume change following the charge/discharge of the battery, whereby the deformation of the electrode layer is suppressed. In particular, in Examples 3-1 and 3-2 in which the elastic elongation of the current collectors is 1.40 or more and 1.50 or more, higher discharge capacity retention rates were obtained.

Meanwhile, in the battery of Comparative example 3-1, which uses the current collector with elastic elongation of a predetermined value or less, the following is considered. The current collector became prone to be plastically deformed following the volume change of the negative electrode active material layer, which follows the charge/discharge of the battery, and as a result, the negative electrode active material layer was warped, it became difficult for the current collector to maintain the uniform inter-electrode distance with the positive electrode in the planar direction, and such a high discharge capacity retention rate was not obtained.

Moreover, in the battery of Comparative example 3-2, which used pure Si as the negative electrode active material, the volume change caused by the negative electrode active material, the volume change following the charge/discharge of the battery, is larger in the case of the Si alloy. Therefore, it is considered that, since the volume change of the negative electrode active material layer is larger, the lowering of the capacity, which is caused by the fact that the current collector cannot follow the volume change of the negative electrode active material layer, becomes larger.

Furthermore, in the battery of Comparative example 3-3, which used PVdF as the binder of the negative electrode active material layer, the discharge capacity retention rate is lower. It is considered that this is because, since the elastic modulus (1.0 GPa) of PVdF as the binder for use in Comparative example 3-3 is smaller than the elastic modulus (3.73 GPa) of polyimide for use in Examples 3-1 to 3-3 and Comparative examples 3-1 and 3-2, the binder cannot follow the expansion/contraction of the active material, which follow the charge/discharge, and the volume change of the negative electrode active material layer becomes large. It is considered that, as a result, the lowering of the capacity, which is caused by the fact that the current collector cannot follow the volume change of the negative electrode active material layer, becomes much larger.

Next, in Example 4 to be described below, performance evaluation was performed for negative electrodes for an electrical device, which use $Si_{42}Ti_7Sn_{51}$ (corresponding to Reference example 22) among the above-described Si alloys, and contain negative electrode active materials composed by mixing this $Si_{42}Ti_7Sn_{51}$ with graphite.

(Example 4-1)

[Manufacturing of Si alloy]

The Si alloy was manufactured by the mechanical alloy method (or the arc plasm fusion method). Specifically, a planetary ball mill apparatus PP-6 made by Fritsch GmbH in Germany was used, zirconia-made milling balls and powders of the respective raw materials of the alloy were poured into a zirconia-made milling pot, and an alloy was made at 600 rpm for 48 hours.

[Fabrication of negative electrode]

2.76 mass parts of the above-manufactured Si alloy ($Si_{42}Ti_7Sn_{51}$; mean particle diameter of 0.3 $\mu$m) as the negative electrode active material and 89.24 mass parts of graphite (natural graphite; mean particle diameter of 22 $\mu$m), 4 mass parts of short chain-like acetylene black as the electrically-conductive auxiliary agent, and 4 mass parts of polyimide (E elastic modulus of 2.1 GPa) as the binder were mixed with one another, and were dispersed into N-methyl pyrrolidone, whereby negative electrode slurry was obtained. Subsequently, the obtained negative electrode slurry was uniformly coated on both surfaces of a negative electrode current collector, which was made of copper foil (elastic elongation of 1.4%) with a thickness of 10 $\mu$m, so that a thickness of the negative electrode active material layers could be 30 $\mu$m, followed by drying in vacuum for 24 hours, whereby a negative electrode was obtained. Note that a content of the Si alloy in the negative electrode active material was 3%.

[Fabrication of positive electrode]

$Li_{1.85}Ni_{0.18}Co_{0.10}Mn_{0.87}O_3$ as the positive electrode active material was prepared by the method described in Example 1 (paragraph 0046) of Japanese Patent Unexamined Publication No. 2012-185913. Then, 90 mass parts of this positive electrode active material, 5 mass parts of acetylene black as the electrically-conductive auxiliary agent and 5 mass parts of polyvinylidene fluoride as the binder were mixed with one another, were dispersed into N-methyl pyrrolidone, whereby positive electrode slurry was obtained. Subsequently, the obtained positive electrode slurry was uniformly coated on both surfaces of a negative electrode current collector, which was made of aluminum foil with a thickness of 20 $\mu$m, so that a thickness of the positive electrode active material layers could be 30 $\mu$m, followed by drying, whereby a positive electrode was obtained.

[Fabrication of battery]

The positive electrode and the negative electrode, which were fabricated as described above, were opposed to each other, and a separator (polypropylene-made microporous membrane; membrane thickness of 20 $\mu$m) was arranged therebetween. Subsequently, a laminated body of the negative electrode, the separator and the positive electrode was arranged on a bottom side of a coin cell (CR2032; material: stainless steel (SUS316). Moreover, a gasket was attached in order to keep insulating properties between the positive electrode and the negative electrode, the following electrolytic solution was injected thereinto by a syringe. Then, springs and spacers were stacked, upper sides of such coin cells were superimposed on one another, and were hermetically sealed by crimping the same, whereby a lithium ion secondary battery was obtained.

Note that, as the above-described electrolytic solution, a solution was used, which was obtained by dissolving lithium phosphate hexafluoride ($LiPF_6$) as the supporting salt into an organic solvent so that a concentration thereof could be 1 mol/L. Here, the organic solvent was obtained by mixing ethylene carbonate (EC) and diethyl carbonate (DEC) in a ratio of EC: DC = 1: 2 (volume ratio).

(Example 4-2)

A negative electrode and a battery were fabricated in a similar way to Example 4-1 except that the mass part of the Si alloy was changed to 4.6 mass parts and that the mass part of the graphite was changed to 87.4 mass parts. Note that the content of the Si alloy in the negative electrode active material is 5%.

(Example 4-3)

A negative electrode and a battery were fabricated in a similar way to Example 4-1 except that the mass part of the Si alloy was changed to 6.4 mass parts and that the mass part of the graphite was changed to 85.5 mass parts. Note that the content of the Si alloy in the negative electrode active material is 7%.

(Example 4-4)

A negative electrode and a battery were fabricated in a similar way to Example 4-1 except that the mass part of the Si alloy was changed to 9.2 mass parts and that the mass part of the graphite was changed to 82.8 mass parts. Note that the content of the Si alloy in the negative electrode active material is 10%.

(Example 4-5)

A negative electrode and a battery were fabricated in a similar way to Example 4-1 except that the mass part of the Si alloy was changed to 11.0 mass parts and that the mass part of the graphite was changed to 80.96 mass parts. Note that the content of the Si alloy in the negative electrode active material is 12%.

(Example 4-6)

A negative electrode and a battery were fabricated in a similar way to Example 4-1 except that the mass part of the Si alloy was changed to 13.8 mass parts and that the mass part of the graphite was changed to 78.2 mass parts. Note that the content of the Si alloy in the negative electrode active material is 15%.

(Example 4-7)

A negative electrode and a battery were fabricated in a similar way to Example 4-1 except that the mass part of the Si alloy was changed to 18.4 mass parts and that the mass part of the graphite was changed to 73.6 mass parts. Note that the content of the Si alloy in the negative electrode active material is 20%.

(Example 4-8)

A negative electrode and a battery were fabricated in a similar way to Example 4-1 except that the mass part of the Si alloy was changed to 23.0 mass parts and that the mass part of the graphite was changed to 69.0 mass parts. Note that the content of the Si alloy in the negative electrode active material is 25%.

(Example 4-9)

A negative electrode and a battery were fabricated in a similar way to Example 4-1 except that the mass part of the Si alloy was changed to 27.6 mass parts and that the mass part of the graphite was changed to 64.4 mass parts. Note that the content of the Si alloy in the negative electrode active material is 30%.

(Example 4-10)

A negative electrode and a battery were fabricated in a similar way to Example 4-1 except that the mass part of the Si alloy was changed to 36.8 mass parts and that the mass part of the graphite was changed to 55.2 mass parts. Note that the content of the Si alloy in the negative electrode active material is 40%.

(Example 4-11)

A negative electrode and a battery were fabricated in a similar way to Example 4-1 except that the mass part of the Si alloy was changed to 46.0 mass parts and that the mass part of the graphite was changed to 46.0 mass parts. Note that the content of the Si alloy in the negative electrode active material is 50%.

(Example 4-12)

A negative electrode and a battery were fabricated in a similar way to Example 4-1 except that the mass part of the Si alloy was changed to 55.2 mass parts and that the mass part of the graphite was changed to 36.8 mass parts.

Note that the content of the Si alloy in the negative electrode active material is 60%.

(Example 4-13)

A negative electrode and a battery were fabricated in a similar way to Example 4-1 except that the mass part of the Si alloy was changed to 64.4 mass parts and that the mass part of the graphite was changed to 27.6 mass parts. Note that the content of the Si alloy in the negative electrode active material is 70%.

<Performance evaluation>

[Evaluation of cycle characteristics]

For each of the lithium ion secondary batteries fabricated as described above, the cycle characteristics were evaluated in the following way. Under an atmosphere of 30°C, each battery was charged with up to 2.0V in a constant current mode (CC; current of 0.1 C), was left standing for 10 minutes, thereafter, was discharged to 0.01V by a constant current (CC; current of 0.1 C), and was left standing for 10 minutes after the discharge. This charge/discharge process was taken as one cycle, a charge/discharge test of 100 cycles was performed, and a ratio of a discharge capacity in a 100th cycle with respect to a discharge capacity in a first cycle (discharge capacity retention rate [%]) was obtained. Results thus obtained are shown in the following Table 7 and FIG. 26.

[Evaluation of energy density]

For each of the lithium ion secondary batteries fabricated as described above, the cycle characteristics were evaluated in the following way. First, as initial charge/discharge, each of the batteries was subjected to constant-current charge by a current corresponding to 0.2 C with respect to a theoretical capacity of the positive electrode, and was thereafter subjected to constant-voltage charge by 4.2V, these two types of charges having been performed for 10 hours in total, and thereafter, was subjected to constant-current discharge to 2.7V by a discharge current of 0.2 C. Energy of the battery was calculated from a charge/discharge curve at this time, and was divided by a battery mass, whereby an energy density of the battery was calculated. Results thus obtained are shown in the following Table 7 and FIG. 26.

[Table 7]

|  | Content of Si alloy (%) | Discharge capacity retention rate (%) | Energy density (mAh/g) |
|---|---|---|---|
| Example 4-1 | 3 | 98 | 397 |
| Example 4-2 | 5 | 98 | 420 |
| Example 4-3 | 7 | 97 | 443 |
| Example 4-4 | 10 | 97 | 477 |
| Example 4-5 | 12 | 96 | 499 |
| Example 4-6 | 15 | 95 | 534 |
| Example 4-7 | 20 | 93 | 590 |
| Example 4-8 | 25 | 91 | 647 |
| Example 4-9 | 30 | 89 | 704 |
| Example 4-10 | 40 | 85 | 818 |
| Example 4-11 | 50 | 80 | 932 |
| Example 4-12 | 60 | 70 | 1045 |
| Example 4-13 | 70 | 45 | 1159 |

From the results of the above-described Table 7 and FIG. 26, it is understood that the batteries, which use the negative electrode active materials composed by mixing the Si alloys and graphite with each other in Examples 4-1 to 4-13, has a high initial capacity and exhibits good balance characteristics while maintaining high cycle characteristics.

REFERENCE SIGNS LIST

| | |
|---|---|
| 10, 50 | LITHIUM ION SECONDARY BATTERY (LAMINATED BATTERY) |
| 11 | POSITIVE ELECTRODE CURRENT COLLECTOR |
| 12 | NEGATIVE ELECTRODE CURRENT COLLECTOR |
| 13 | POSITIVE ELECTRODE ACTIVE MATERIAL LAYER |
| 15 | NEGATIVE ELECTRODE ACTIVE MATERIAL LAYER |
| 17 | ELECTROLYTE LAYER |
| 19 | SINGLE CELL LAYER |
| 21, 57 | POWER GENERATION ELEMENT |
| 25, 58 | POSITIVE ELECTRODE CURRENT COLLECTOR PLATE |
| 27, 59 | NEGATIVE ELECTRODE CURRENT COLLECTOR PLATE |
| 29, 52 | BATTERY EXTERIOR MEMBER (LAMINATED FILM) |

**Claims**

1. A negative electrode for a lithium secondary battery, comprising:

   a current collector (12); and
   an electrode layer (15) containing a negative electrode active material, an electrically-conductive auxiliary agent and a binder and formed on a surface of the current collector (12),
   wherein the negative electrode active material contains an alloy represented by a following formula (1):

   $$Si_xTi_yM_z \qquad (1)$$

   in the formula (1), M is Ge,
   and
   x, y and z represent mass percent values and satisfy x is 17 or more to 77 or less, y is 38 or more to less than 83, and z is 3 or more to 63 or less, and x+y+z = 100, and the electrode layer includes a chain-like or a fibrous electrically-conductive auxiliary agent, **characterized in that**
   an elongation ($\delta$) of the electrode layer (15) measured in accordance with a tensile test method of JIS K 7163 (1994) is $1.29 < \delta < 1.70\%$,
   wherein elastic elongation of the current collector (12), measured in accordance with a tensile test method of JIS K 6251 (2010), is 1.30% or more,
   wherein a content of the electrically-conductive auxiliary agent mixed into the electrode layer is in a range of 1 to 10 mass% with respect to a total amount of the electrode layer, and
   wherein an amount of the binder contained in the electrode layer is 0.5 to 15 mass% with respect to the electrode layer.

2. A negative electrode for a lithium secondary battery, comprising:

   a current collector (12); and
   an electrode layer (15) containing a negative electrode active material, an electrically-conductive auxiliary agent and a binder and formed on a surface of the current collector (12),
   wherein the negative electrode active material contains an alloy represented by a following formula (1):

   $$Si_xTi_yM_z \qquad (1)$$

   in the formula (1), M is Sn,
   and
   x, y and z represent mass percent values and x, y and z satisfy a following mathematical formula (1) or (2):

   $$35 \leq x \leq 78 \text{ and } 7 \leq y \leq 37 \text{ and } 7 \leq z \leq 24 \quad (1)$$

$$35 \le x \le 52 \text{ and } 7 \le y \le 35 \text{ and } 35 \le z \le 51 \quad (2)$$

and x+y+z = 100, and the electrode layer includes a chain-like or a fibrous electrically-conductive auxiliary agent, **characterized in that**
an elongation ($\delta$) of the electrode layer (15) measured in accordance with a tensile test method of JIS K 7163 (1994) is 1.29 < $\delta$ < 1.70%,
wherein elastic elongation of the current collector (12), measured in accordance with a tensile test method of JIS K 6251 (2010), is 1.30% or more,
wherein a content of the electrically-conductive auxiliary agent mixed into the electrode layer is in a range of 1 to 10 mass% with respect to a total amount of the electrode layer, and
wherein an amount of the binder contained in the electrode layer is 0.5 to 15 mass% with respect to the electrode layer.

3. The negative electrode for a lithium secondary battery according to claim 1 or 2, wherein $\delta$ is $1.40 \le \delta < 1.70\%$.

4. The negative electrode for a lithium secondary battery according to any one of claims 1 to 3, wherein $\delta$ is $1.40 \le \delta \le 1.66\%$.

5. The negative electrode for a lithium secondary battery according to any one of claims 1 to 4, wherein $\delta$ is $1.40 \le \delta \le 1.57\%$.

6. The negative electrode for a lithium secondary battery according to any one of claims 1 to 5, wherein $\delta$ is $1.47 \le \delta < 1.57\%$.

7. The negative electrode for a lithium secondary battery according to any one of claims 1 to 6, wherein $\delta$ is $1.53 \le \delta \le 1.57\%$.

8. The negative electrode for a lithium secondary battery according to any one of claims 1 to 7, wherein the binder contains resin with an E elastic modulus measured in accordance with a tensile test method of JIS K 7163 (1994) from more than 1.00 GPa to less than 7.40 GPa.

9. The negative electrode for a lithium secondary battery according to any one of claims 1 to 8, wherein the negative electrode active material is a mixture of the alloy represented by the formula (1) and a carbon-based material with each other.

10. The negative electrode for a lithium secondary battery according to claim 1, wherein y is 68 or less.

11. The negative electrode for a lithium secondary battery according to claim 10, wherein x is 50 or less.

12. The negative electrode for a lithium secondary battery according to claim 11,
wherein x is 46 or less, y is 51 or more, and z is 32 or less.

13. The negative electrode for a lithium secondary battery according to claim 2,
wherein M is Sn, and
x, y and z satisfy a following mathematical formula (5) or (6):

$$35 \le x \le 68 \text{ and } 18 \le y \le 37 \text{ and } 7 \le z \le 24 \quad (5)$$

$$39 \le x \le 52 \text{ and } 7 \le y \le 20 \text{ and } 35 \le z \le 51 \quad (6)$$

14. The negative electrode for a lithium secondary battery according to claim 13, wherein M is Sn, and
x, y and z satisfy a following mathematical formula (7):

$$46 \leq x \leq 58 \text{ and } 24 \leq y \leq 37 \text{ and } 7 \leq z \leq 21 \quad (7)$$

**15.** A lithium secondary battery comprising the negative electrode for a lithium secondary battery according to any one of claims 1 to 14.

**Patentansprüche**

**1.** Negativelektrode für eine Lithiumsekundärbatterie, umfassend:

einen Stromkollektor (12); und
eine Elektrodenschicht (15), die ein Negativelektroden-Aktivmaterial, einen elektrisch leitfähigen Hilfsstoff und ein Bindemittel enthält und auf einer Oberfläche des Stromkollektors (12) ausgebildet ist,
wobei das Negativelektroden-Aktivmaterial eine Legierung enthält, die durch folgende Formel (1) dargestellt ist:

$$Si_xTi_yM_z \quad (1)$$

in der Formel (1) M Ge ist,
und
x, y und z Massenprozentwerte darstellen und x größer als 17 bis kleiner als 77, y größer als 38 bis kleiner als 83, und z größer als 3 bis kleiner als 63 erfüllen, und x + y + z = 100 ist, und die Elektrodenschicht einen kettenförmigen oder faserförmigen elektrisch leitfähigen Hilfsstoff enthält, **dadurch gekennzeichnet, dass** eine Dehnung ($\delta$) der Elektrodenschicht (15), gemessen gemäß einem Zugtestverfahren nach JIS K 7163 (1994), $1,29 < \delta < 1,70\%$ beträgt, wobei die elastische Dehnung des Stromkollektors (12), gemessen gemäß einem Zugtestverfahren nach JIS K 6251 (2010), 1,30% oder mehr beträgt,
wobei ein Gehalt des in die Elektrodenschicht eingemischten elektrisch leitenden Hilfsstoffs in einem Bereich von 1 bis 10 Masse-% bezogen auf die Gesamtmenge der Elektrodenschicht liegt, und
wobei eine Menge des in der Elektrodenschicht enthaltenen Bindemittels 0,5 bis 15 Massen-% bezogen auf die Elektrodenschicht beträgt.

**2.** Negativelektrode für eine Lithiumsekundärbatterie, umfassend:

einen Stromkollektor (12); und
eine Elektrodenschicht (15), die ein Negativelektroden-Aktivmaterial, einen elektrisch leitfähigen Hilfsstoff und ein Bindemittel enthält und auf einer Oberfläche des Stromkollektors (12) ausgebildet ist,
wobei das Negativelektroden-Aktivmaterial eine Legierung enthält, die durch folgende Formel (1) dargestellt ist:

$$si_xTi_yM_z \quad (1)$$

in der Formel (1) M Sn ist,
und
x, y und z Massenprozentwerte darstellen und x, y und z folgende mathematische Formel (1) oder (2) erfüllen:

$$35 \leq x \leq 78 \text{ und } 7 \leq y \leq 37 \text{ und } 7 \leq z \leq 24 \quad (1)$$

$$35 \leq x \leq 52 \text{ und } 7 \leq y \leq 35 \text{ und } 35 \leq z \leq 51 \quad (2)$$

und x + y + z = 100 ist, und die Elektrodenschicht einen kettenförmigen oder faserförmigen elektrisch leitfähigen Hilfsstoff enthält, **dadurch gekennzeichnet, dass**
eine Dehnung ($\delta$) der Elektrodenschicht (15), gemessen gemäß einem Zugtestverfahren nach JIS K 7163 (1994), $1,29 < \delta < 1,70\%$ beträgt,
wobei die elastische Dehnung des Stromkollektors (12), gemessen gemäß einem Zugtestverfahren nach JIS K 6251 (2010), 1,30% oder mehr beträgt,
wobei ein Gehalt des in die Elektrodenschicht eingemischten elektrisch leitfähigen Hilfsstoffs in einem Bereich von 1 bis 10 Masse-% bezogen auf die Gesamtmenge der Elektrodenschicht liegt
wobei eine Menge des in der Elektrodenschicht enthaltenen Bindemittels 0,5 bis 15 Massen-% bezogen auf die Elektrodenschicht beträgt.

3. Negativelektrode für eine Lithiumsekundärbatterie nach Anspruch 1 oder 2, wobei $\delta$ 1,40 $\leq \delta$ < 1,70% ist.

4. Negativelektrode für eine Lithiumsekundärbatterie nach einem der Ansprüche 1 bis 3, wobei $\delta$ 1,40 $\leq \delta \leq$ 1,66% ist.

5. Negativelektrode für eine Lithiumsekundärbatterie nach einem der Ansprüche 1 bis 4, wobei $\delta$ 1,40 $\leq \delta \leq$ 1,57% ist.

6. Negativelektrode für eine Lithiumsekundärbatterie nach einem der Ansprüche 1 bis 5, wobei $\delta$ 1,47 $\leq \delta$ < 1,57% ist.

7. Negativelektrode für eine Lithiumsekundärbatterie nach einem der Ansprüche 1 bis 6, wobei $\delta$ 1,53 $\leq \delta \leq$ 1,57% ist.

8. Negativelektrode für eine Lithiumsekundärbatterie nach einem der Ansprüche 1 bis 7, wobei das Bindemittel Harz mit einem E-Elastizitätsmodul, gemessen gemäß einem Zugtestverfahren nach JIS K 7163 (1994), von größer als 1,00 GPa bis kleiner als 7,40 GPa enthält.

9. Negativelektrode für eine Lithiumsekundärbatterie nach einem der Ansprüche 1 bis 8, wobei das Negativelektroden-Aktivmaterial eine Mischung der durch die Formel (1) dargestellten Legierung und eines Materials auf Kohlenstoffbasis miteinander ist.

10. Negativelektrode für eine Lithiumsekundärbatterie nach Anspruch 1, wobei y 68 oder kleiner ist.

11. Negativelektrode für eine Lithiumsekundärbatterie nach Anspruch 10, wobei x 50 oder kleiner ist.

12. Negative Elektrode für eine Lithiumsekundärbatterie nach Anspruch 11,
wobei x 46 oder keiner ist, y 51 oder größer ist und z 32 oder kleiner ist.

13. Negativelektrode für eine Lithiumsekundärbatterie nach Anspruch 2,
wobei M Sn ist und
x, y und z folgende mathematische Formel (5) oder (6) erfüllen:

$$35 \leq x \leq 68 \text{ und } 18 \leq y \leq 37 \text{ and } 7 \leq z \leq 24 \qquad (5)$$

$$39 \leq x \leq 52 \text{ und } 7 \leq y \leq 20 \text{ and } 35 \leq z \leq 51 \qquad (6)$$

14. Negativelektrode für eine Lithiumsekundärbatterie nach Anspruch 13,
wobei M Sn ist, und
x, y und z folgende mathematische Formel (7) erfüllen:

$$46 \leq x \leq 58 \text{ und } 24 \leq y \leq 37 \text{ und } 7 \leq z \leq 21 \qquad (7)$$

15. Lithiumsekundärbatterie, welche die Negativelektrode für eine Lithiumsekundärbatterie nach einem der Ansprüche 1 bis 14 umfasst.

**Revendications**

1. Électrode négative pour une batterie secondaire au lithium, comprenant :

un collecteur de courant (12) ; et
une couche d'électrode (15) contenant un matériau actif d'électrode négative, un agent auxiliaire électroconducteur et un liant et formée sur une surface du collecteur de courant (12),

dans laquelle le matériau actif d'électrode négative contient un alliage représenté par la formule (1) suivante :

$$Si_xTi_yM_z \qquad (1)$$

dans la formule (1), M représente Ge, et

x, y et z représentent des valeurs de pourcentage massique et satisfont x est supérieur ou égal à 17 et inférieur ou égal à 77, y est supérieur ou égal à 38 et inférieur ou égal à 83, et z est supérieur ou égal 3 et inférieur ou égal à 63, et x + y + z = 100, et la couche d'électrode comporte un agent auxiliaire électroconducteur fibreux ou en forme de chaîne,

**caractérisée en ce que**

un allongement ($\delta$) de la couche d'électrode (15) mesuré selon une méthode d'essai de traction de la norme JIS K 7163 (1994) est 1,29 < $\delta$ < 1,70%,

où un allongement élastique du collecteur de courant (12), mesuré selon une méthode d'essai de traction de la norme JIS K 6251 (2010), est supérieur ou égal à 1,30%,

où une teneur de l'agent auxiliaire électroconducteur mélangé dans la couche d'électrode se trouve dans la plage allant de 1 à 10% en masse par rapport à la quantité totale de la couche d'électrode, et

où une quantité du liant contenu dans la couche d'électrode est comprise entre 0,5 et 15% en masse par rapport à la couche d'électrode.

2. Électrode négative pour une batterie secondaire au lithium, comprenant :

un collecteur de courant (12) ; et

une couche d'électrode (15) contenant un matériau actif d'électrode négative, un agent auxiliaire électroconducteur et un liant et formée sur une surface du collecteur de courant (12),

où le matériau actif d'électrode négative contient un alliage représenté par la formule (1) suivante :

$$Si_xTi_yM_z \qquad (1)$$

dans la formule (1), M représente Sn,

et

x, y et z représentent des valeurs de pourcentage massique et x, y et z satisfont la formule mathématique suivante (1) ou (2):

$$35 \leq x \leq 78 \text{ et } 7 \leq y \leq 37 \text{ et } 7 \leq z \leq 24 \ (1)$$

$$35 \leq x \leq 52 \text{ et } 7 \leq y \leq 35 \text{ et } 35 \leq z \leq 51 \ (2)$$

et x + y + z = 100, et la couche d'électrode comporte un agent auxiliaire électroconducteur fibreux ou en forme de chaîne,

**caractérisée en ce que**

un allongement ($\delta$) de la couche d'électrode (15) mesuré selon une méthode d'essai de traction de la norme JIS K 7163 (1994) est 1,29 < $\delta$ < 1,70%,

où un allongement élastique du collecteur de courant (12), mesuré selon une méthode d'essai de traction de la norme JIS K 6251 (2010), est supérieur ou égal à 1,30%,

où une teneur de l'agent auxiliaire électroconducteur mélangé dans la couche d'électrode se trouve dans la plage allant de 1 à 10% en masse par rapport à la quantité totale de la couche d'électrode, et

où une quantité du liant contenu dans la couche d'électrode est comprise entre 0,5 et 15% en masse par rapport à la couche d'électrode.

3. Électrode négative pour une batterie secondaire au lithium selon la revendication 1 ou 2, dans laquelle l'allongement $\delta$ est 1,40 $\leq$ $\delta$ < 1,70%.

4. Électrode négative pour batterie secondaire au lithium selon l'une quelconque des revendications 1 à 3, dans laquelle l'allongement $\delta$ est 1,40 $\leq$ $\delta$ $\leq$ 1,66%.

**5.** Électrode négative pour batterie secondaire au lithium selon l'une quelconque des revendications 1 à 4, dans laquelle l'allongement δ est 1,40 ≤ δ ≤ 1,57%.

**6.** Électrode négative pour batterie secondaire au lithium selon l'une quelconque des revendications 1 à 5, dans laquelle l'allongement δ est 1,47 ≤ δ < 1,57%.

**7.** Électrode négative pour batterie secondaire au lithium selon l'une quelconque des revendications 1 à 6, dans laquelle l'allongement δ est 1,53 ≤ δ ≤ 1,57%.

**8.** Électrode négative pour batterie secondaire au lithium selon l'une quelconque des revendications 1 à 7, dans laquelle le liant contient une résine ayant un module élastique E mesuré selon une méthode d'essai de traction de la norme JIS K 7163 (1994) allant d'une valeur supérieure à 1,00 GPa à une valeur inférieure à 7,40 GPa.

**9.** Électrode négative pour batterie secondaire au lithium selon l'une quelconque des revendications 1 à 8, dans laquelle le matériau actif d'électrode négative est un mélange de l'alliage représenté par la formule (1) et d'un matériau à base de carbone l'un avec l'autre.

**10.** Électrode négative pour batterie secondaire au lithium selon la revendication 1, dans laquelle y est inférieur ou égal à 68.

**11.** Électrode négative pour batterie secondaire au lithium selon la revendication 10, dans laquelle x est inférieur ou égal à 50.

**12.** Électrode négative pour batterie secondaire au lithium selon la revendication 11, dans laquelle x est inférieur ou égal à 46, y est supérieur ou égal à 51, et z est inférieur ou égal à 32.

**13.** Électrode négative pour batterie secondaire au lithium selon la revendication 2,
dans laquelle M représente Sn, et
x, y et z satisfont la formule mathématique suivante (5) ou (6) :

$$35 \leq x \leq 68 \text{ et } 18 \leq y \leq 37 \text{ et } 7 \leq z \leq 24 \ (5)$$

$$39 \leq x \leq 52 \text{ et } 7 \leq y \leq 20 \text{ et } 35 \leq z \leq 51 \ (6)$$

**14.** Électrode négative pour batterie secondaire au lithium selon la revendication 13,
dans laquelle M représente Sn, et
x, y et z satisfont la formule mathématique suivante (7) :

$$46 \leq x \leq 58 \text{ et } 24 \leq y \leq 37 \text{ et } 7 \leq z \leq 21 \ \ (7)$$

**15.** Batterie secondaire au lithium comprenant l'électrode négative pour batterie secondaire au lithium selon l'une quelconque des revendications 1 à 14.

EP 2 924 771 B1

# FIG. 1

# FIG. 2

50

57

58

59

52

# FIG. 3

# FIG. 4

# FIG. 5

# FIG. 6

## FIG. 7

## FIG. 8

# FIG. 9

FIG. 10

# FIG. 11

FIG. 12

DISCHARGE CAPACITY
AT 1ST CYCLE (mAh / g)

3400
3200
2800
2400
2000
1600
1200
800.0
400.0

Ti (wt. % / 100)

Si (wt. % / 100)

Sn (wt. % / 100)

FIG. 13

DISCHARGE CAPACITY
RETENTION RATE AT
50TH CYCLE (%)

100.0
96.00
88.00
80.00
72.00
64.00
56.00
48.00
40.00

Ti (wt. % / 100)

Si (wt. % / 100)

Sn (wt. % / 100)

FIG. 14

FIG. 15

## FIG. 16

## FIG. 17

FIG. 18

FIG. 19

## FIG. 20

## FIG. 21

FIG. 22

# FIG. 23

FIG. 24

## FIG. 25

IMPROVEMENT RATE OF DISCHARGE CAPACITY RETENTION RATE (%)

ELASTIC ELONGATION OF CURRENT COLLECTOR (%)

EXAMPLE 3-1
EXAMPLE 3-2
EXAMPLE 3-3
ALLOY
COMPARATIVE EXAMPLE 3-1
PURE Si
COMPARATIVE EXAMPLE 3-2
PURE Si
COMPARATIVE EXAMPLE 3-3

## FIG. 26

ENERGY DENSITY (mAh / g)

DISCHARGE CAPACITY RETENTION RATE (%)

Si ALLOY CONTENT (%)

DISCHARGE CAPACITY RETENTION RATE

ENERGY DENSITY

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009517850 A
- EP 2717357 A1
- JP 2007305424 A
- US 2011052985 A1
- JP 2010205609 A
- EP 2800176 A1
- JP 2007149604 A
- WO 2004086539 A1
- US 2012153220 A1
- JP 2012185913 A